(19) Europäisches Patentamt
European Patent Office
Office européen des brevets

(11) **EP 4 414 681 A1**

(12) **EUROPEAN PATENT APPLICATION**
published in accordance with Art. 153(4) EPC

(43) Date of publication:
**14.08.2024   Bulletin 2024/33**

(21) Application number: **22878644.8**

(22) Date of filing: **07.10.2022**

(51) International Patent Classification (IPC):
**G01M 17/02** *(2006.01)*      **B60C 19/00** *(2006.01)*

(52) Cooperative Patent Classification (CPC):
**B60C 19/00; G01M 17/02**

(86) International application number:
**PCT/JP2022/037743**

(87) International publication number:
**WO 2023/058777 (13.04.2023 Gazette 2023/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:   **08.10.2021   JP 2021166397**

(71) Applicant: **Kokusai Keisokuki Kabushiki Kaisha**
**Tama-shi, Tokyo 206-0025 (JP)**

(72) Inventors:
• **MATSUMOTO Sigeru**
**Tama-shi, Tokyo 206-0025 (JP)**

• **MATSUMOTO Shinichi**
**Tama-shi, Tokyo 206-0025 (JP)**
• **MIYASHITA Hiroshi**
**Tama-shi, Tokyo 206-0025 (JP)**
• **MURAUCHI Kazuhiro**
**Tama-shi, Tokyo 206-0025 (JP)**
• **TOKITA Shuichi**
**Tama-shi, Tokyo 206-0025 (JP)**

(74) Representative: **Lewis Silkin LLP**
**Arbor**
**255 Blackfriars Road**
**London SE1 9AX (GB)**

(54)    **TIRE TESTING METHOD, TIRE TESTING SYSTEM, AND PROGRAM**

(57)    A tire testing method according to an embodiment of the present invention includes a first measurement step of measuring a $\mu$-S characteristic of a test tire using a first tire testing device that causes the test tire to travel along a road surface in a state where the test tire is made to contact the road surface, a second measurement step of measuring the $\mu$-S characteristic of the test tire using a second tire testing device that causes the test tire to rotate in a state where the test tire is made to contact a road surface provided on an outer periphery of a rotating drum, a comparing step of comparing the $\mu$-S characteristic measured by the first tire testing device with the $\mu$-S characteristic measured by the second tire testing device and obtaining a relationship between the two $\mu$-S characteristics, a characteristic converting step of converting the $\mu$-S characteristic measured by the second tire testing device to the $\mu$-S characteristic by the first tire testing device based on the relationship between the two $\mu$-S characteristics, and a characteristic synthesizing step of synthesizing the $\mu$-S characteristic measured in the first measurement step and the $\mu$-S characteristic obtained in the characteristic converting step to obtain the $\mu$-S characteristic of the test tire.

FIG. 1

**Description**

**TECHNICAL FIELD**

The present invention relates to a tire testing method, a tire testing system, and a program.

**BACKGROUND ART**

Since performance of a tire is affected by a traveling speed and a condition of a road surface, it is desirable to conduct tests at various traveling speeds under conditions close to the actual traveling conditions.

The present inventor has developed a drum-type tire testing device for performing a test, using a rotating drum having a road surface formed on an outer peripheral surface, by rotating a test tire and the drum while applying torque to the test tire in a state where the test tire is brought into contact with the road surface (e.g., Patent Document 1).

The present inventor has also developed a flat-type tire testing device including a road surface part having a flat road surface and a carriage capable of traveling along the road surface in a state where a test wheel to which a test tire is mounted is brought into contact with the road surface (e.g., Patent Document 2).

**PRIOR ART DOCUMENT**

**PATENT DOCUMENT**

  [Patent Document 1] International Publication No. 2019/026733
  [Patent Document 2] International Publication No. 2019/203359

**SUMMARY OF THE INVENTION**

**PROBLEM TO BE SOLVED BY THE INVENTION**

Since the flat-type tire testing device having a flat road surface part can perform a test in a state where the test tire is brought into contact with a flat road surface similar to an actual road surface, the flat-type tire testing device can perform a test in a condition closer to a case where a vehicle travels on an actual road surface than the drum-type tire testing device which performs a test in a state where a test tire is brought into contact with a cylindrical road surface, but a test speed is limited due to restriction of a length of the road surface part which is required for acceleration and deceleration of the test wheel.

The present invention has been made in view of the above circumstances, and it is an object of the present invention to provide a tire testing system capable of evaluating performance of a tire when the tire travels on an actual road surface more faithfully over a wide speed range.

**MEANS FOR SOLVING THE PROBLEM**

According to an embodiment of the present invention, there is provided a tire testing method including a first measurement step of measuring a $\mu$-S characteristic of a test tire using a first tire testing device that rotatably holds a test wheel on which the test tire is mounted and causes the test tire to travel along a road surface in a state where the test tire is made to contact the road surface, a second measurement step of measuring the $\mu$-S characteristic of the test tire using a second tire testing device that causes the test tire to rotate in a state where the test tire is made to contact a simulated road surface provided on an outer periphery of a rotating drum, a comparing step of comparing the $\mu$-S characteristic of the test tire measured by the first tire testing device and the $\mu$-S characteristic of the test tire measured by second tire testing device and obtaining a relationship between the two $\mu$-S characteristics, a characteristic converting step of converting the $\mu$-S characteristic of the test tire measured by the second tire testing device into the $\mu$-S characteristic by the first tire testing device based on the relationship between the two $\mu$-S characteristics obtained in the comparing step, and a characteristic obtaining step of combining the $\mu$-S characteristic of the test tire measured in the first measurement step by the first tire testing device and the $\mu$-S characteristic of the test tire by the first tire testing device obtained in the characteristic converting step to obtain the $\mu$-S characteristic of the test tire.

According to another embodiment of the present invention, there is provided a tire testing device including a first tire testing device including road surface part having a road surface, a carriage that rotatably holds a test wheel to which a test tire is mounted and is capable of traveling along the road surface in a state where the test tire is made to contact the road surface, a second tire testing device including a rotating drum having a simulated road surface provided on an outer periphery thereof, a tire holding part that rotatably holds the test tire in a state where the test tire is made to contact the road surface, and a drive part that rotates the rotating drum and the tire holding part, and a controller that compares a $\mu$-S characteristic of the test tire measured by the first tire testing device with the $\mu$-S characteristic of the test tire measured by the second tire testing device to obtain a relationship between the two $\mu$-S characteristics, converts the $\mu$-S characteristic of the test tire measure by the second tire testing device to the $\mu$-S characteristic of the test tire by the first tire testing device based on the obtained relationship between the two $\mu$-S characteristics, and combines the $\mu$-S characteristic of the test tire measured by the first tire testing device and the $\mu$-S characteristic of the test tire by the first tire testing device obtained by the conversion to obtain the $\mu$-S characteristic of the test tire.

According to still another embodiment of the present invention, there is provided a tire testing device including a first input part to which a measurement result of a $\mu$-S characteristic by a first tire testing device is to be input, the first tire testing device including a road surface part having a road surface, and a carriage that rotatably holds a test wheel to which a test tire is mounted and travelable along the road surface in a state where the test tire is made to contact the road surface, a second input part to which a measurement result of a $\mu$-S characteristic by a second tire testing device is to be input, the second tire testing device including a rotating drum provided with a simulated road surface on an outer periphery thereof, a tire holding part that rotatably holds a test tire in contact with the road surface, and a drive part that rotates the rotating drum and the tire holding part, and a controller configured to compare the $\mu$-S characteristic of the test tire measured by the first tire testing device input through the first input part with the $\mu$-S characteristic of the test tire measured by the second tire testing device input through the second input part to obtain a relationship between the two $\mu$-S characteristics, convert the $\mu$-S characteristic of the test tire measured by the second tire testing device input through the second input part into the $\mu$-S characteristic of the test tire by the first tire testing device based on the obtained relationship between the two $\mu$-S characteristics, and combine the $\mu$-S characteristic of the test tire measured by the first tire testing device input through the first input part and the $\mu$-S characteristic of the test tire by the first tire testing device obtained by the conversion to obtain the $\mu$-S characteristic of the test tire.

According to still another embodiment of the present invention, there is provided a tire testing method including a first reading step of reading a $\mu$-S characteristic of a test tire measured by a first tire testing device that rotatably holds the test wheel to which the test tire is mounted and causes the test tire to travel along a road surface in a state where the test tire is made to contact the road surface, a second reading step of reading the $\mu$-S characteristic of the test tire measured by a second tire testing device that rotates the test tire in a state where the test tire is made to contact a simulated road surface provided to an outer periphery of a rotating drum, a comparing step of comparing the $\mu$-S characteristic of the test tire measured by the first tire testing device read in the first reading step with the $\mu$-S characteristic of the test tire measured by the second tire testing device read in the second reading step and obtaining a relationship between the two $\mu$-S characteristics, a characteristic converting step of converting the $\mu$-S characteristic of the test tire measured by the second tire testing device read in the second reading step to the $\mu$-S characteristic of the test tire by the first tire testing device based on the relationship between the two $\mu$-S characteristics obtained in the comparing step, and a characteristic obtaining step of combining the $\mu$-S characteristic of the test tire measured by the first tire testing device read in the first reading step and the $\mu$-S characteristic of the test tire by the first tire testing device obtained by the conversion in the characteristic converting step to obtain the $\mu$-S characteristic of the test tire.

According to still another embodiment of the present invention, there is provided a program for causing a computer to execute a first reading step of reading a $\mu$-S characteristic of a test tire measured by a first tire testing device that rotatably holds the test wheel to which the test tire is mounted and causes the test tire to travel along a road surface in a state where the test tire is made to contact the road surface, a second reading step of reading the $\mu$-S characteristic of the test tire measured by a second tire testing device that rotates the test tire in a state where the test tire is made to contact a simulated road surface provided to an outer periphery of a rotating drum, a comparing step of comparing the $\mu$-S characteristic of the test tire measured by the first tire testing device read in the first reading step with the $\mu$-S characteristic of the test tire measured by the second tire testing device read in the second reading step and obtaining a relationship between the two $\mu$-S characteristics, a characteristic converting step of converting the $\mu$-S characteristic of the test tire measured by the second tire testing device read in the second reading step to the $\mu$-S characteristic of the test tire by the first tire testing device based on the relationship between the two $\mu$-S characteristics obtained in the comparing step, and a characteristic obtaining step of combining the $\mu$-S characteristic of the test tire measured by the first tire testing device read in the first reading step and the $\mu$-S characteristic of the test tire by the first tire testing device obtained by the conversion in the characteristic converting step to obtain the $\mu$-S characteristic of the test tire.

**EFFECT OF THE INVENTION**

According to an embodiment of the present invention, it is possible to evaluate performance of a tire when the tire travels on an actual road surface more faithfully over a wide speed range.

**BRIEF DESCRIPTION OF THE DRAWINGS**

[FIG. 1] FIG. 1 is a left side view of a flat-type tire testing device according to an embodiment of the present invention.
[FIG. 2] FIG. 2 is a plan view of the flat-type tire testing device according to an embodiment of the present invention.
[FIG. 3] FIG. 3 is a rear view of the flat-type tire testing device according to an embodiment of the present invention.
[FIG. 4] FIG. 4 is an enlarged view (left side view) of the flat-type tire testing device according to an embodiment of the present invention.
[FIG. 5] FIG. 5 is an enlarged view (plan view) of the flat-type tire testing device according to an embodiment of the present invention.
[FIG. 6] FIG. 6 is a diagram showing an arrangement of guide mechanisms.
[FIG. 7] FIG. 7 is a cross-sectional view of the guide mechanism (type A).
[FIG. 8] FIG. 8 is a cross-sectional view of the guide mechanism (type B).
[FIG. 9] FIG. 9 is a diagram showing a connecting portion of a rail member.
[FIG. 10] FIG. 10 is a block diagram showing a schematic logical configuration of a drive system.
[FIG. 11] FIG. 11 is a diagram showing a schematic mechanical configuration of a main portion of the drive system.
[FIG. 12] FIG. 12 is a diagram showing a schematic structure of a drive part and a drive pulley part.
[FIG. 13] FIG. 13 is a diagram showing a schematic structure of the drive part and the drive pulley part.
[FIG. 14] FIG. 14 is a diagram showing a schematic structure of the drive part and the drive pulley part.
[FIG. 15] FIG. 15 is a plan view of a first driven part.
[FIG. 16] FIG. 16 is a left side view showing a schematic configuration of the first driven part.
[FIG. 17] FIG. 17 is a cross-sectional view taken along line A-A of FIG. 15.
[FIG. 18] FIG. 18 is a cross-sectional view of a second driven part.
[FIG. 19] FIG. 19 is a cross-sectional view of a torque applying part.
[FIG. 20] FIG. 20 is a diagram showing a schematic structure of an alignment part 40.
[FIG. 21] FIG. 21 is an arrow view B-B of FIG. 20.
[FIG. 22] FIG. 22 is an arrow view C-C of FIG. 20.
[FIG. 23] FIG. 23 is an arrow view D-D of FIG. 20.
[FIG. 24] FIG. 24 is an arrow view E-E of FIG. 20.
[FIG. 25] FIG. 25 is a diagram showing a schematic structure of a spindle part.
[FIG. 26] FIG. 26 is a transverse cross-sectional view of a road surface part.
[FIG. 27] FIG. 27 is a transverse cross-sectional view of a variation of a road surface part.
[FIG. 28] FIG. 28 is a plan view of a portion of the road surface part in the vicinity of a load detecting part.
[FIG. 29] FIG. 29 is a side view of the portion of the road surface part in the vicinity of the load detecting part.
[FIG. 30] FIG. 30 is a front view of the load detecting part.
[FIG. 31] FIG. 31 is a side view of the load detecting part.
[FIG. 32] FIG. 32 is a plan view of the load detecting part.
[FIG. 33] FIG. 33 is a plan view showing a state where a movable part of the load detecting part is removed.
[FIG. 34] FIG. 34 is an enlarged view of an area E in FIG. 19.
[FIG. 35] FIG. 35 is a block diagram showing a schematic configuration of a control system of a tire testing system.
[FIG. 36] FIG. 36 is a block diagram showing a schematic configuration of a control system of a flat-type tire testing device.
[FIG. 37] FIG. 37 is a plan view of a drum-type tire testing device according to an embodiment of the present invention.
[FIG. 38] FIG. 38 is a front view of the drum-type tire testing device according to an embodiment of the present invention.
[FIG. 39] FIG. 39 is a right side view of the drum-type tire testing device according to an embodiment of the present invention.
[FIG. 40] FIG. 40 is a left side view of the drum-type tire testing device according to an embodiment of the present invention.
[FIG. 41] FIG. 41 is a block diagram showing a schematic configuration of a control system of the drum-type tire testing device.
[FIG. 42] FIG. 42 is an external view of a simulated road surface unit of the drum-type tire testing device.
[FIG. 43] FIG. 43 is a transverse cross-sectional view of the simulated road surface unit of the drum-type tire testing device.
[FIG. 44] FIG. 44 is a longitudinal cross-sectional view of a torque generating part.
[FIG. 45] FIG. 45 is a side view of a camber adjustment mechanism.
[FIG. 46] FIG. 46 is a flow chart showing a procedure for determining a $\mu$-S characteristic.

[FIG. 47] FIG. 47 is a flow chart showing a procedure for determining the μ-S characteristic.

**EMBODIMENTS FOR CARRYING OUT THE INVENTION**

Hereinafter, an embodiment of the present invention will be described with reference to the drawings. In the following description, the same or corresponding reference numerals are given to the same or corresponding items, and redundant description are omitted. In each of the drawings, when a plurality of items whose reference numerals are the same are shown, the reference numerals are not necessarily shown for all of the plurality of shown items, and the reference numerals are appropriately omitted for a part of the plurality of shown items. In each of the drawings, for convenience of description, some of the components are omitted or shown in cross sections.

A tire testing system 1 according to one embodiment of the present invention described below includes a flat-type tire testing device 1000 that performs a test in a state where a test tire T is brought into contact with a flat road surface 63a, and a drum-type tire testing device 2000 that performs a test in a state where the test tire T is brought into contact with a cylindrical road surface 2023b formed on an outer peripheral surface of a rotating drum 2022. The tire testing system 1 is a testing system capable of evaluating performance of the test tire T which is close to the performance when the test tire T actually travels on the road surface in a wide speed range based on the test results of the flat-type tire testing device 1000 and the drum-type tire testing device 2000.

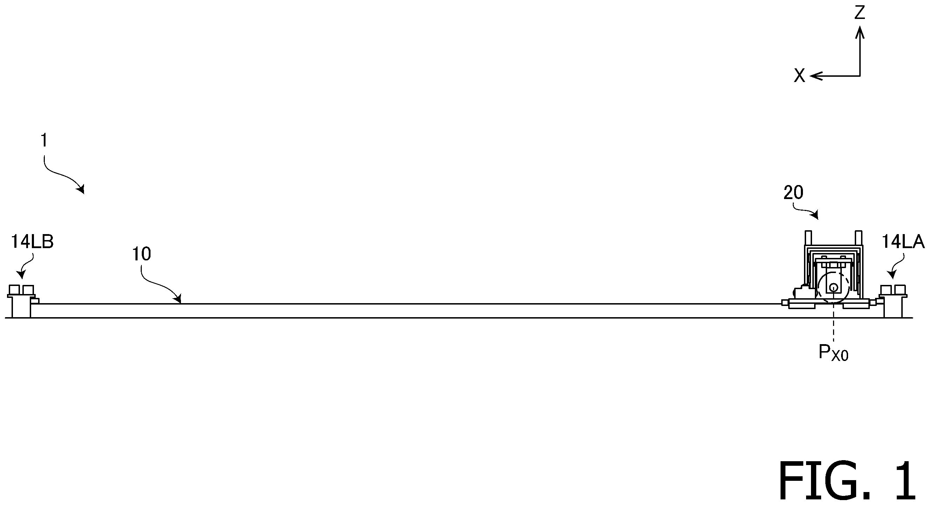

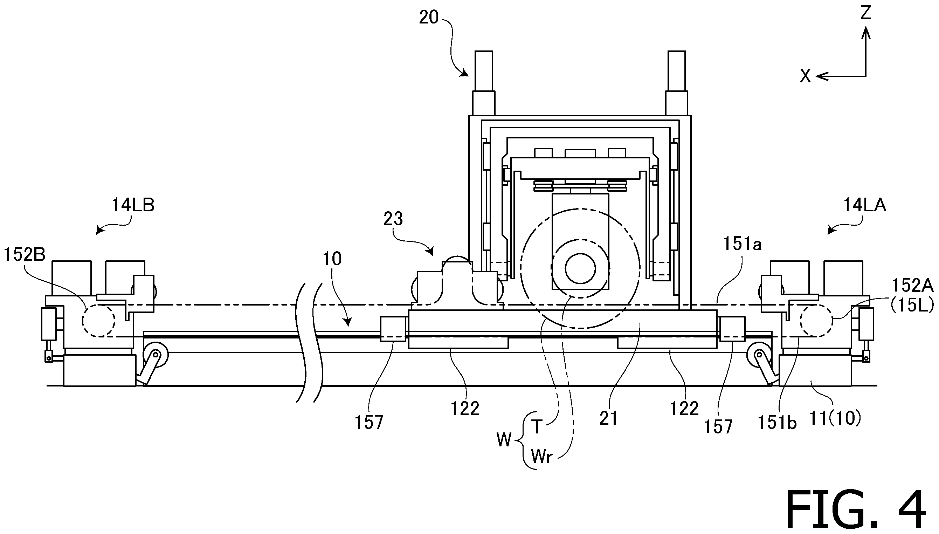

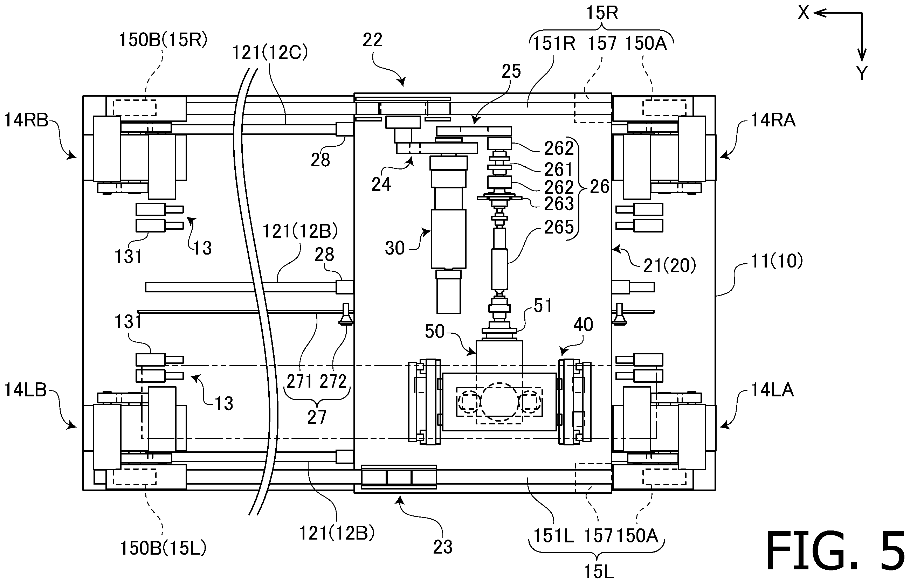

FIGS. 1 to 3 are a left side view, a plan view, and a rear view, respectively, of the flat-type tire testing device 1000. FIGS. 4 and 5 are a left side view and a plan view, respectively, of the flat-type tire testing device 1000 with an intermediate portion in a longitudinal direction (X-axis direction) being omitted.

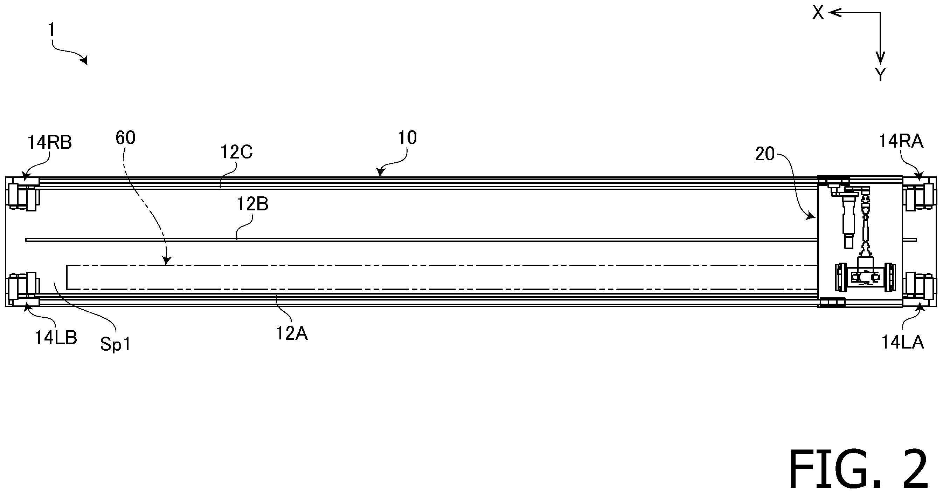

In the plan views (FIGS. 2 and 5), a direction from right to left is defined as an X-axis direction, a direction from top to bottom is defined as a Y-axis direction, and a direction perpendicular to the paper from back to front is defined as a Z-axis direction. The X-axis direction and the Y-axis direction are horizontal directions orthogonal to each other, and the Z-axis direction is a vertical direction. In the description of the flat-type tire testing device 1000, unless otherwise specified, the front-rear, left-right, and top-bottom directions are defined as directions when looking in a traveling direction of a carriage 20 (X-axis positive direction). That is, the X-axis positive direction is referred to as front, the X-axis negative direction is referred to as back, the Y-axis positive direction is referred to as left, the Y-axis negative direction is referred to as right, the Z-axis positive direction is referred to as top, and the Z-axis negative direction is referred to as bottom.

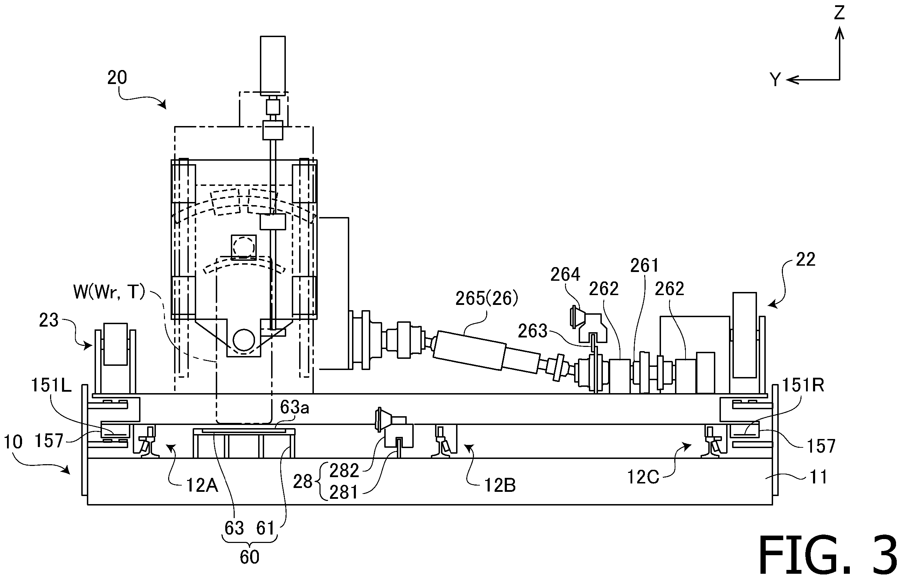

The flat-type tire testing device 1000 includes a track part 10 and a road surface part 60 which are elongated in the X-axis direction, and a carriage 20 which can travel on the track part 10 in the X-axis direction. As shown in FIG. 3, the road surface part 60 is mounted on a left side portion of a base frame 11 (hereinafter, abbreviated as "base 11") of the track part 10. On an upper surface of the road surface part 60, a road surface 63a on which the test tire T mounted on the carriage 20 contacts is provided. In the present embodiment, the road surface part 60 is removably attached to the base 11 of the track part 10 so that the road surface part 60 can be replaced according to test conditions. The base 11 of the track part 10 and a frame 61 of the road surface part 60 may be integrated by, for example, welding. Alternatively, the road surface part 60 may be installed directly on a foundation F (FIG. 3) to completely separate the road surface part 60 from the track part 10.

As shown in FIG. 5, at a front end portion of the track part 10, a pair of wheel stoppers 13 are provided adjacent to drive parts 14LB and 14RB which will be described later. The wheel stoppers 13 are devices for forcibly stopping the carriage 20 by colliding with the carriage 20 when the carriage 20 overruns. Each wheel stopper 13 includes a pair of hydraulic shock absorbers 131 that mitigates shock generated at the time of collision with the carriage 20.

As shown in FIG. 4, a test wheel W (i.e., a wheel rim Wr to which the test tire T is mounted) is attached to the carriage 20. During the test, the carriage 20 travels with the test wheel W in contact with the road surface 63a, and the test wheel W rolls on the road surface 63a.

As shown in FIGS. 3 and 5, the track part 10 includes a plurality of (in the illustrated embodiment, three) guide mechanisms 12A, 12B, and 12C that guide the movement of the carriage 20 in the X-axis direction. The guide mechanisms 12A, 12B, and 12C are provided at a left end portion, a central portion in the width direction (i.e., in the Y-axis direction), and a right end portion of the track part 10, respectively.

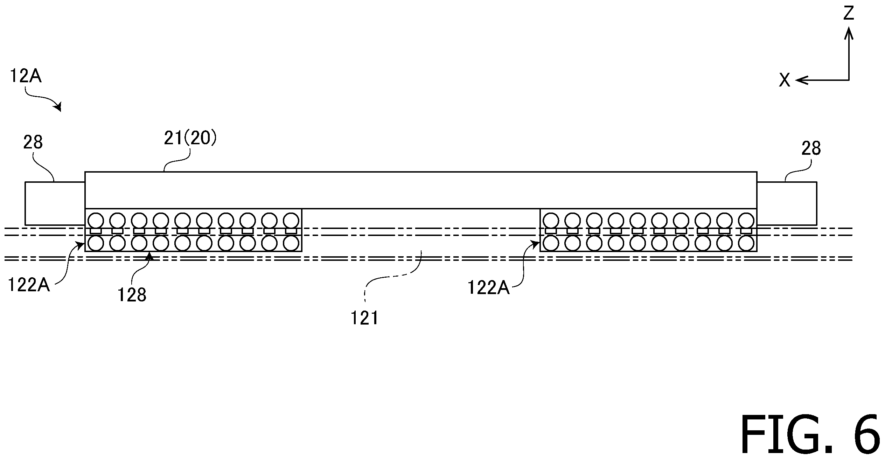

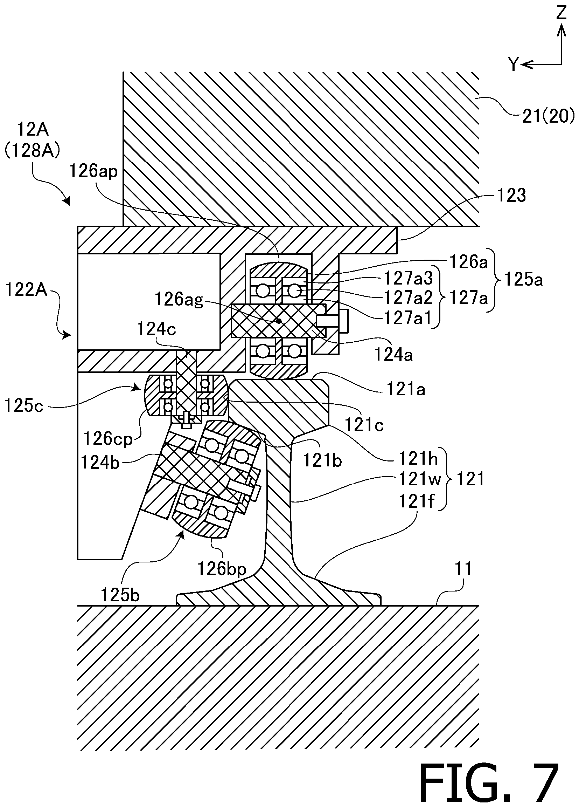

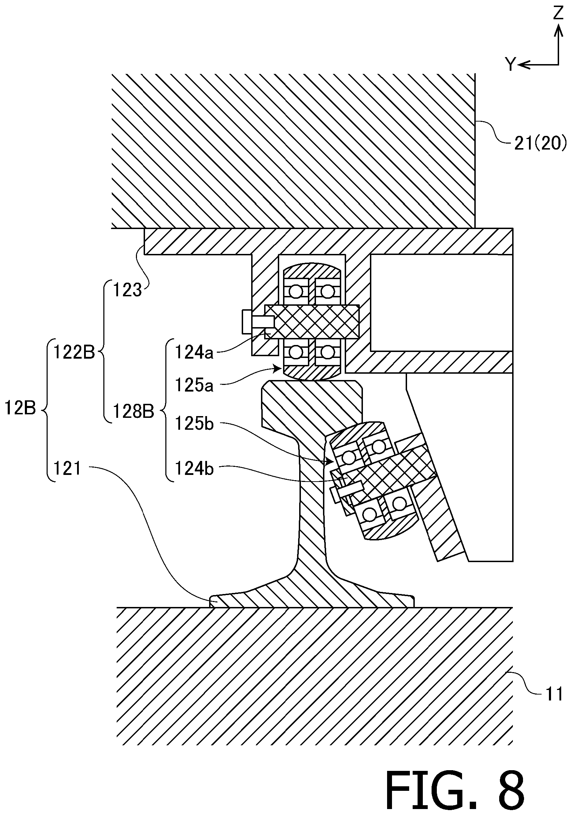

FIG. 6 is a left side view of the guide mechanism 12A. FIGS. 7 and 8 are cross-sectional views of the guide mechanisms 12A and 12B, respectively. Since the guide mechanism 12C is configured to be bilaterally symmetric with the guide mechanism 12A, a detailed description of the guide mechanism 12C is omitted.

Each of the guide mechanisms 12A, 12B, and 12C includes one rail 121 forming a track extending in the X-axis direction, and one or more (in the illustrated embodiment, two) traveling parts 122A (FIG. 7), 122B (FIG. 8), or 122C (not shown; configured to be bilaterally symmetric with the traveling part 122A of the guide mechanism 12A) capable of traveling on the rail 121. As shown in FIG. 6 for the traveling part 122A, one of the two traveling parts 122A, 122B, or 122C is attached to a front end portion (a left end portion in FIG. 6) of a bottom surface of the carriage 20, and the other is attached to a rear end portion (a right end portion in FIG. 6) of the bottom surface of the carriage 20.

As shown in FIGS. 7 and 8, the rail 121 is laid on the base 11 of the track part 10. Each of the traveling parts 122A, 122B, and 122C is attached to a lower surface of a main frame 21 of the carriage 20.

The rail 121 is, for example, a flat-bottomed rail having a head 121h, a bottom 121f wider than the head 121h, and a narrow body 121w that connects the head 121h and the bottom 121f. The rail 121 of the present embodiment is, for example, a heat-treated rail conforming to Japanese Industrial Standard JIS E 1120:2007 (e.g., heat-treated rail 50N-HH340) to which additional processing is applied. The heat-treated rail is a railroad rail of which wear resistance is improved by applying heat treatment to the head.

As shown in FIG. 7, the traveling part 122A of the guide mechanism 12A includes a frame 123 long in the X-axis direction and attached to the lower surface of the main frame 21 of the carriage 20, and a plurality of roller units 128A attached to the frame 123. The roller unit 128A includes three rods 124a, 124b, and 124c attached to the frame 123, and three roller assemblies 125a, 125b, and 125c attached to the rods 124a, 124b, and 124c, respectively. In the present embodiment, although the invention is not limited to this configuration, the three roller assemblies 125a, 125b, and 125c of each roller unit 128A are disposed at the same position in the X-axis direction. As shown in FIG. 6, the plurality of roller units 128A are arranged at predetermined intervals in the X-axis direction.

Since the roller assemblies 125b and 125c have the same configuration as the roller assembly 125a (in the present embodiment, although the invention is not limited to this configuration, the roller assembly 125c is different in size from the roller assembly 125a), the roller assembly 125a will be described on behalf of them, and a redundant description of the roller assemblies 125b and 125c are omitted.

As shown in FIG. 7, the roller assembly 125a includes a roller 126a that rolls on a rail 121, and a pair of bearings 127a that rotatably support the roller 126a. The bearings 127a are rolling bearings, and ball bearings are used in the illustrated embodiment.

In the present embodiment, an outer peripheral surface 126ap of the roller 126a is formed in a cylindrical shape, but may be a curved surface (e.g., a spherical surface having a center point 126ag of the roller 126a as the center) having a curvature in a rotation axis direction (i.e., in a longitudinal section including the rotation axis shown in FIG. 7).

The bearing 127a of the roller assembly 125a is, for example, a single-row radial bearing. The bearing 127a includes an inner ring 127a1 fitted to the rod 124a, an outer ring 127a3 fitted to an inner peripheral surface of the roller 126a, and balls 127a2 being a plurality of rolling bodies interposed between the inner ring 127a1 and the outer ring 127a3. The balls 127a2 roll on a circular track defined by a pair of annular grooves formed on an outer peripheral surface of the inner ring 127a1 and an inner peripheral surface of the outer ring 127a3, respectively.

The roller assembly 125a is disposed such that the outer peripheral surface 126ap contacts a head upper surface (top surface) 121a of the rail 121 and rolls on the head upper surface 121a as the carriage 20 travels. The roller assembly 125b is disposed such that an outer peripheral surface 126bp contacts one of head lower surfaces 121b of the rail 121 and rolls on the head lower surface 121b. The roller assembly 125c is disposed such that an outer peripheral surface 126cp contacts one of head side surfaces 121c of the rail 121 and rolls on the head side surface 121c.

In the rail 121, shapes of the head upper surface 121a, the head lower surface 121b, and the head side surface 121c which are in contact with the roller assemblies 125a, 125b, and 125c, respectively, are changed to flat surfaces, and additional processes (e.g., grinding, polishing, or the like) for improving surface accuracy such as flatness and parallelism are performed.

As described above, the guide mechanism 12A and the guide mechanism 12C, which are attached to the left and right end portions of the carriage 20, respectively, are configured to be bilaterally symmetric. That is, the guide mechanism 12C is obtained by disposing a guide mechanism identical to the guide mechanism 12A with the right and left sides reversed (i.e., by rotating 180 degrees about the Z-axis).

As shown in FIG. 8, the traveling part 122B of the guide mechanism 12B includes a frame 123 attached to the lower surface of the main frame 21 of the carriage 20, and a plurality of roller units 128B attached to the frame 123. The roller unit 128B includes the two rods 124a and 124b, and the two roller assemblies 125a and 125b. The rod 124b and the roller assembly 125b are disposed on the left side of the rail 121 in the traveling part 122A of the guide mechanism 12A described above, whereas the rod 124b and the roller assembly 125b are disposed on the right side of the rail 121 in the traveling part 122B of the guide mechanism 12B. That is, the traveling part 122B of the guide mechanism 12B is obtained by removing the roller assembly 125c and the rod 124c from the traveling part 122A of the guide mechanism 12A described above and disposing the traveling part 122A with the right and left sides reversed. It should be noted that the traveling part 122B of the guide mechanism 12B may include the roller assembly 125c and the rod 124c. In this case, the rod 124c and the roller assembly 125c are disposed, for example, on the right side of the rail 121 (i.e., on the same side as the rod 124b and the roller assembly 125b with respect to the rail 121).

In the present embodiment, the roller assemblies 125b and 125c of the guide mechanism 12A disposed on the left side of the rail 121 prevent the carriage 20 from moving to the right (in the Y-axis negative direction) with respect to the rail 121. The roller assembly 125b of the guide mechanism 12B and the roller assemblies 125b and 125c of the guide mechanism 12C disposed on the right side of the rail 121 prevent the carriage 20 from moving to the left (in the Y-axis positive direction) with respect to the rail 121. Therefore, the carriage 20 is prevented from moving in both sides in the Y-axis direction with respect to the rail 121. The roller assemblies 125b of the guide mechanisms 12A, 12B, and 12C prevent the carriage 20 from moving up (in the Z-axis positive direction) with respect to the rail 121. By preventing the carriage 20 from moving in the Y-axis direction and the Z-axis positive direction with respect to the rail 121 in this manner, the carriage 20 is prevented from derailing from the rail 121.

In the present embodiment, the traveling part 122B (FIG. 8) is disposed with the right and left sides reversed with respect to the traveling part 122A (FIG. 7), but the traveling part 122B may be disposed in the same orientation in the left-right direction as the traveling part 122A. Similarly, the traveling part 122C and the traveling part 122A may be disposed in the same orientation in the left-right direction. However, any two of the traveling part 122A, the traveling part 122B, and the traveling part 122C are disposed with the right and left sides reversed with respect to each other (i.e., the roller assemblies 125b and 125c are disposed with the right and left sides reversed with respect to the rail 121).

In order to effectively prevent the movement of the carriage 20 in the left-right direction (Y-axis direction), it is sufficient that two of the traveling parts 122A, 122B, and 122C, that are disposed with the right and left sides reversed with respect to each other are provided with the rod 124 and the roller assembly 125c.

In order to effectively prevent upward movement of the carriage 20 (in the Z-axis direction positive), it is sufficient that at least one of the traveling parts 122A, 122B, and 122C is provided with the roller assembly 125b and the rod 124b.

If an angle between the head lower surface 121b of the rail 121 and the horizontal plane is greater than a certain angle (e.g., 5 degrees), then the roller assembly 125b can be used in place of the roller assembly 125c.

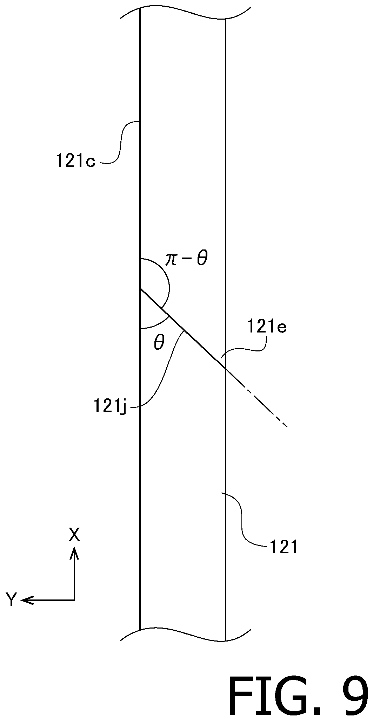

The rail 121 of the guide mechanism 12 may be formed by connecting a plurality of short rail members. In this case, as shown in FIG. 9, a joint 121j of the rail 121 needs not be perpendicular to a longitudinal direction of the rail 121 (i.e., X-axis direction), but may be formed to be oblique in plan view (i.e., such that the joint 121j is inclined at a certain angle $\theta$ [0 $<\theta<\pi$ / 2] with respect to the ZX plane). A typical value of the angle $\theta$ is, for example, $\pi/4$. By forming the joint 121j obliquely, even if the rail 121 is expanded or contracted due to a temperature change, strain of the rail 121 is released by the sliding of the rail members at the joint 121j and the rail 121 is prevented from bending.

In the case of forming the oblique joint 121j, the roller assemblies 125b and 121c (FIG. 9) are disposed on a side of the rail 121 where the head side surface 121c forms an obtuse angle ($\pi$ - $\theta$) with the joint 121j in front of the joint 121j (i.e., the left side in the guide mechanism 12A and the right side in the guide mechanisms 12B and 12C). By disposing the roller assemblies 125b and 125c in this manner, even if displacement (i.e., sliding along the joint 121j between the rail members) occurs at the joint 121j of the rail 121, a large impact or damage by the roller assemblies 125b and 125c colliding with an acute end 121e of the joint 121j can be prevented.

At the joint 121j, end surfaces of the two rail members to be connected may be brought into contact with each other, or a predetermined gap may be provided between the end surfaces to make the rail members face against each other in a non-contact manner. In the present embodiment, the end surfaces of the two rail members to be connected are merely abutted and not joined at the joint 121j of the rail 121, but the rail members may be joined at the joint 121j by welding, brazing, or the like.

Instead of the guide mechanisms 12A, 12B, and 12C of the present embodiment, a guideway-type circulating linear bearing (so-called linear guide) may be used. A ball circulating linear bearing has an oval track in which adjacent ends of two parallel straight tracks are connected to each other by semi-circular tracks. When a linear bearing having such straight tracks is driven at a high speed (e.g., at a speed of 10km/h or more), since centrifugal force suddenly occurs on each rolling body (i.e., an impact load acts on each rolling body and a rolling surface of each curved track) when each rolling body moves from the straight track to each curved track, the rolling bodies and the rolling surfaces are rapidly worn or damaged. Therefore, there is a problem that, when the carriage 20 is made to travel at a high speed, life of the linear bearing shortens or the linear bearing is damaged.

In the bearings 127a to 127c used in the guide mechanisms 12A, 12B, and 12C of the present embodiment, since the rolling bodies always travel on a circular track having a constant curvature, a rapid fluctuation of the centrifugal force acting on each rolling body (i.e., an impact load) does not occur. Therefore, even if the rollers 126a to 126c are rotated at a high peripheral speed exceeding, for example, 60km/h, life of the bearings 127a to 127c is not significantly reduced or the bearings 127a to 127c are not damaged. Therefore, by configuring the guide mechanisms 12A to 12C using a rolling bearing having a circular track whose curvature of the track for the rolling bodies is constant, the carriage 20 can travel at a high speed (e.g., at a speed of 10km/h or more). In the flat-type tire testing device 1000 of the present embodiment, by adopting the guide mechanisms 12A, 12B, and 12C described above, the carriage 20 can travel at a speed exceeding 85km/h.

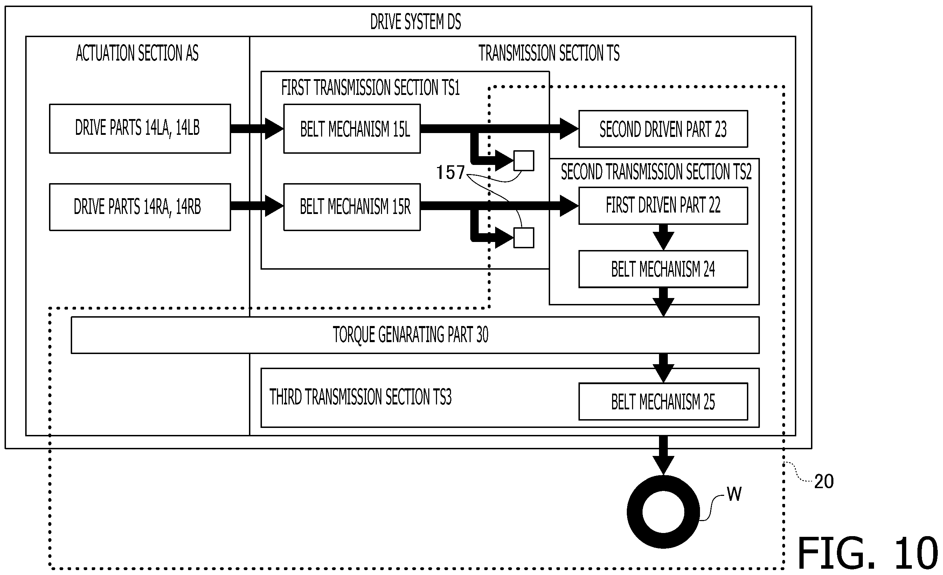

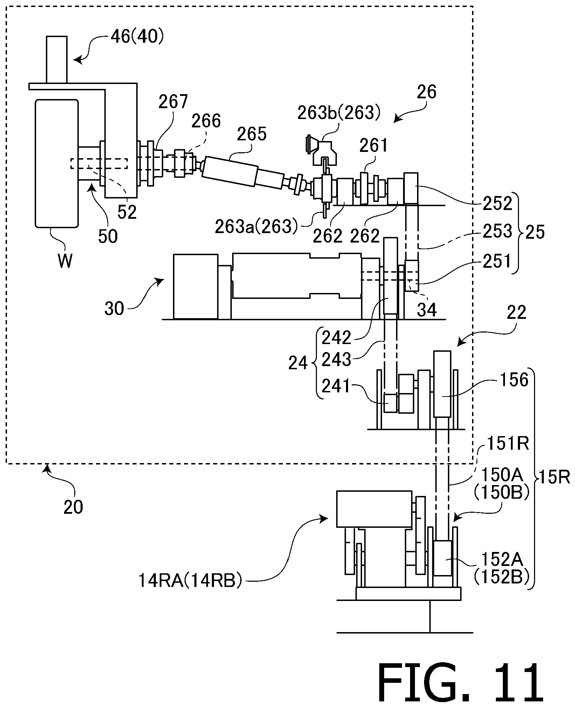

The flat-type tire testing device 1000 includes a drive system DS that drives the carriage 20 and the test wheel W. FIG. 10 is a block diagram showing a schematic logical configuration of the drive system DS. FIG. 11 is a diagram showing a schematic mechanical configuration of a main section of the drive system DS. In FIG. 10, arrows indicate transmission paths of mechanical power (hereinafter, simply referred to as "power").

As shown in FIG. 10, the drive system DS includes an actuation section AS that generates power, and a transmission section TS that transmits the power generated by the actuation section AS to the carriage 20 and the test wheel W to be driven. The drive system DS constitutes a power circulation system together with the carriage 20, the test wheel W, and the road surface part 60.

The actuation section AS includes two pairs of drive parts 14 (first driving means) on the left and the right and attached to the track part 10, and a torque generator 30 (second driving means; hereinafter referred to as "torque generating part") being a torque applying part and attached to the carriage 20. The drive parts 14 are mainly used to control the traveling speed of the carriage 20 and the number of rotations of the test wheel W, and the torque generating part 30 is mainly used to control torque to be applied to the test wheel W.

The transmission section TS includes a first transmission section TS1 that transmits the power generated by the drive part 14 to the carriage 20, a second transmission section TS2 that extracts a portion of the power transmitted by the first transmission section TS1 and transmits the extracted power to the torque generating part 30, and a third transmission section TS3 that transmits the power output by the torque generating part 30 to the test wheel W. The torque generating part 30 also constitutes a portion of the transmission section TS.

As shown in FIGS. 4 and 5, the two pairs of drive parts 14 (a pair of drive parts 14LA and 14LB on the left side and a pair of drive parts 14RA and 14RB on the right side) are installed in the vicinity of four corners on the base 11 of the track part 10. The drive parts 14LA and 14RA are disposed at a rear end portion of the track part 10, and the drive parts 14LB and 14RB are disposed at a front end portion of the track part 10.

As will be described later, the drive parts 14RA and 14RB on the right side function both as a carriage driving means that drives the carriage 20 to travel and as a test wheel driving means (rotation speed applying means) that rotationally drives the test wheel W at a rotation speed corresponding to the traveling speed of the carriage 20. The drive parts 14LA and 14LB on the left side have a function as the carriage driving means.

The first transmission section TS1 includes a pair of belt mechanisms 15 (15L, 15R) and a pair of driven parts (a first driven part 22 and a second driven part 23). The belt mechanism 15L on the left side is driven by the pair of drive parts 14LA and 14LB on the left side, and the belt mechanism 15R on the right side is driven by the pair of drive parts 14RA and 14RB on the right side. The first driven part 22 and the second driven part 23 are attached to the main frame 21 of the carriage 20. The first driven part 22 is connected to the belt mechanism 15R on the right side, and the second driven part 23 is connected to the belt mechanism 15L on the left side.

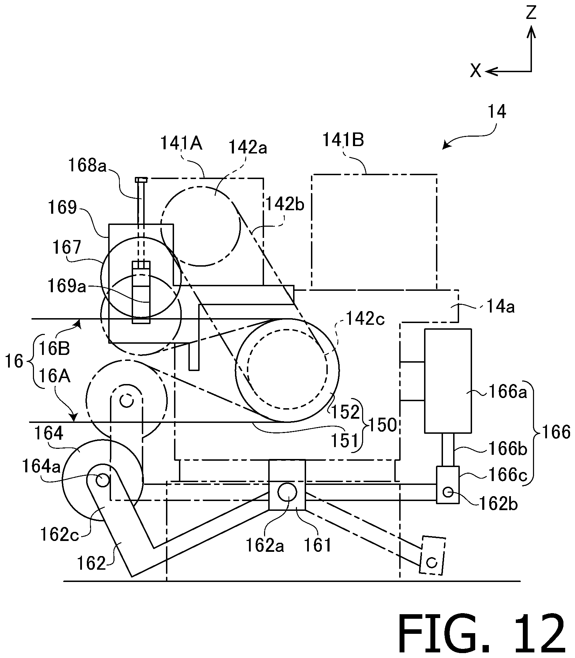

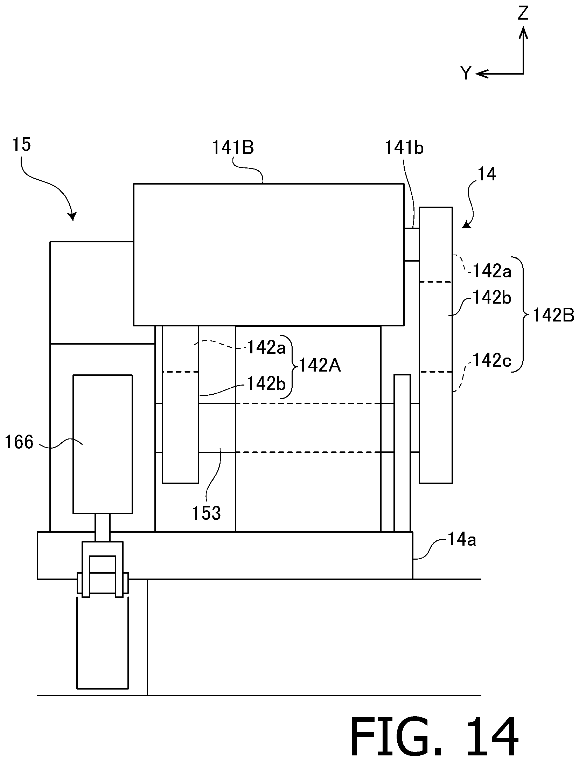

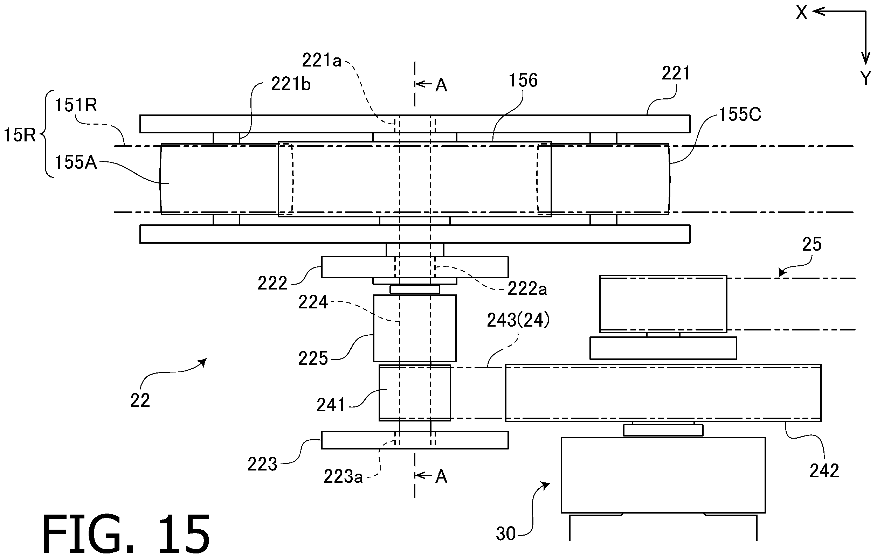

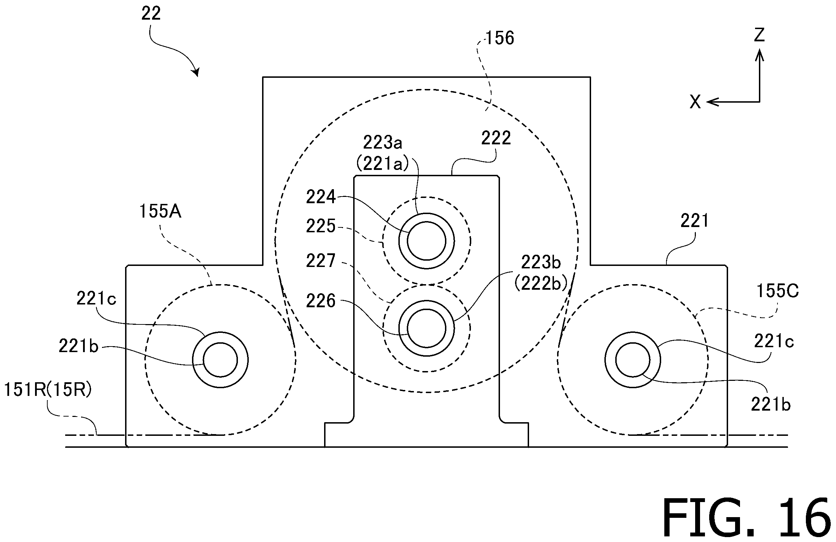

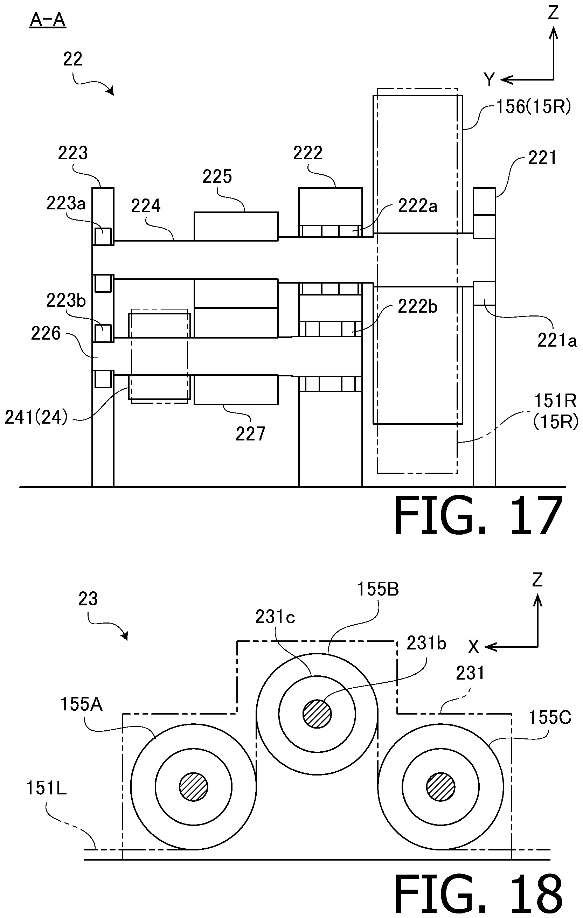

FIGS. 12 to 14 are diagrams showing schematic structures of the drive part 14 and the drive pulley part 150 of the belt mechanism 15. FIGS. 15 and 16 are a plan view and a left side view of the first driven part 22. FIG. 17 is a cross-sectional view taken along line A-A of FIG. 15. FIG. 18 is a cross-sectional view showing a schematic structure of the second driven part 23.

Each of the belt mechanisms 15 (15L, 15R) includes a pair of drive pulley parts 150, belts 151 (151L, 151R), three driven pulleys 155A, 155C, and 156 held by the first driven part 22 (FIG. 16) or three driven pulleys 155A, 155B, and 155C held by the second driven part 23 (FIG. 18), and a pair of belt clamps 157 (FIGS. 3 and 5) that fix opposite ends of the belt 151 to the main frame 21 of the carriage 20. The drive pulley part 150 is installed on a frame 14a of the corresponding drive part 14 and connected to the corresponding drive part 14 (FIG. 12). The drive pulley part 150 includes a tension adjusting part 16 that automatically adjusts tension of the belt 151.

The belt 151R is wound around the drive pulleys 152 (152A, 152B) of the pair of drive pulley parts 150 (150A, 150B) and the three driven pulleys 155A, 156, and 155C of the first driven part 22. The belt 151L is wound around the drive pulleys 152 (152A, 152B) of the pair of drive pulley parts 150 (150A, 150B) and the three driven pulleys 155A, 155B, and 155C of the second driven part 23.

As shown in FIGS. 12-14, The drive part 14 includes a pair of motors 141 (141A, 141B) (first motor) and a pair of belt mechanisms 142 (142A, 142B). The motor 141 is, for example, an ultra-low inertia, high output type AC servo motor whose inertia moment of a rotating part is 0.01 kg·m$^2$ or less (more preferably, 0.008 kg·m$^2$ or less) and a rated output of 3kW to 60kW (more practically, 7kW to 37kW). By using such ultra-low inertia, high output motor 141, the carriage 20 can be accelerated to a maximum speed of the test tire T (e.g., 240km) in a short travel distance (e.g., 20 to 50m).

The motor 141 may be a motor in which a rotating part has a normal inertia moment. The motor 141 may also be another type of electric motor of which speed can be controlled, such as a so-called inverter motor in which an inverter is used for drive control.

The pair of motors 141A and 141B are arranged in the front-rear direction (X-axis direction) with the shaft 141b oriented in left-right direction (Y-axis direction). The pair of motors 141A and 141B are disposed with the shaft 141b oriented in the opposite directions with respect to each other in the left-right direction. That is, the shaft 141b of one motor 141A projects to the left (Y-axis positive direction), and the shaft 141b of the other motor 141B projects to the right (Y-axis negative direction). The belt mechanism 142A that transmits the power of the motor 141A is disposed on the left side of the drive part 14, and the belt mechanism 142B that transmits the power of the motor 141B is disposed on the left side of the drive part 14.

The belt mechanism 142 includes a drive pulley 142a attached to a shaft 141b of the motor 141, a driven pulley 142c, and a belt 142b wound around the drive pulley 142a and the driven pulley 142c. The belt 142b is, for example, a toothed belt having the same configuration as that of the belt 151 which will be described later. The type of the belt 142b may be different from that of the belt 151.

In the belt mechanism 142, since a pitch circle diameter of the driven pulley 142c is larger (i.e., the number of teeth is larger) than that of the drive pulley 142a, the speed reduction ratio is larger than 1. Therefore, rotation output from the motor 141 is decelerated by the belt mechanism 142. The speed reduction ratio of the belt mechanism 142 may be 1 or less. A speed reducer may be provided in the drive part 14 in place of (or in addition to) the belt mechanism 142. A shaft 153 of the belt mechanism 15, which will be described later, may be directly connected to the shaft 141b of the motor 141 without providing the belt mechanism 142 or the speed reducer (e.g., the shaft 141b of the motor 141A may be connected to one end of the shaft 153, and the shaft 141b of the motor 141B may be connected to the other end of the shaft 153).

The drive pulley part 150 of the belt mechanism 15 is disposed adjacent to and on the left side of the drive part 14. The drive pulley part 150 includes two or more (e.g., three) bearing parts 154, the shaft 153 rotatably supported by a plurality of bearing parts 154, and a drive pulley 152 attached to the shaft 153. The driven pulleys 142c of the pair of belt mechanisms 142A and 142B are attached to the shaft 153, and the output of the drive part 14 is transmitted via the shaft 153 and the drive pulley 152 to the belt 151 wound around the drive pulley 152. That is, the powers output from the pair of motors 141A and 141B are transmitted to the shaft 153 by the pair of belt mechanisms 142A and 142B, respectively, and combined at the shaft 153.

In the present embodiment, the drive part 14 includes a pair of motors 141A and 141B and a pair of belt mechanisms 142A and 142B, but may include a single motor 141 and a single belt mechanism 142, or may include three or more motors 141 and three or more belt mechanisms 142.

The tension adjusting part 16 of the present embodiment includes a first adjusting part 16A and a second adjusting part 16B. The first adjusting part 16A is a mechanism that adjusts tension of the belt 151 by pushing a lower portion of a loop of the belt 151 toward an inner side of the loop. The second adjusting part 16B is a mechanism that adjusts the tension of the belt 151 by pushing an upper portion of the loop of the belt 151 toward the inner side of the loop.

The first adjusting part 16A includes a bearing part 161 attached to the frame 14a of the drive part 14, an arm 162 supported by the bearing part 161 so as to be swingable about a Y-axis, a dancer roll 164 rotatably supported by one end portion of the arm 162, and a linear actuator 166 (e.g., an air cylinder) that drives the other end portion of the arm 162 vertically.

The arm 162 is bent at two positions in the longitudinal direction in opposite directions to form a zigzag shape. At a bent portion on one end side, the arm 162 is bent at an angle of about 90 degrees to prevent interference with the belt 151, and at a bent portion on the other end side, the arm 162 is bent at an obtuse angle in accordance with movable ranges of the linear actuator 166 and the dancer roll 164.

A rear end portion and a center portion (i.e., the bent portion on the other end side) of the arm 162 are provided with pivots 162a and 162b extending on both sides in the Y-axis direction, respectively. The pivot 162a is rotatably supported by the bearing part 161. A tip portion of the arm 162 is provided with a bearing part 162c that rotatably supports a shaft 164a of the dancer roll 164.

The linear actuator 166 includes a main body 166a attached to the frame 14a of the drive part 14, a rod 166b protruding downward from the main body 166a, and a bearing 166c provided at a tip portion of the rod. the bearing part 166c forms a joint with a pivot 162b, and the joint couples the rod 166b and the arm 162 rotatably about the pivot 162b.

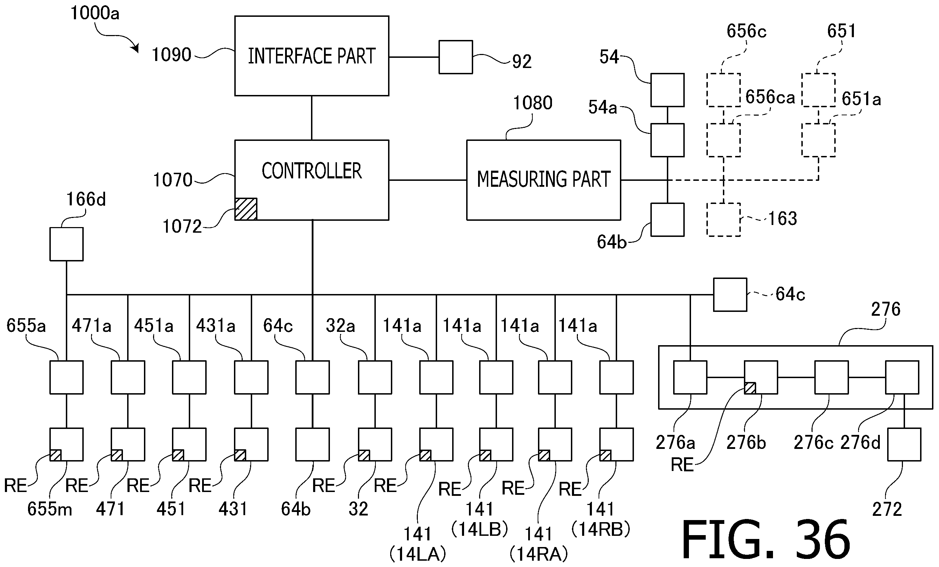

The operation of the linear actuator 166 is controlled by controlling air pressure supplied to the linear actuator 166 with an electromagnetic valve 166d (FIG. 36). The electromagnetic valve 166d is communicably connected to the controller 1070, and the operation of the electromagnetic valve 166d is controlled by the controller 1070. A proportional control valve such as an electropneumatic regulator capable of controlling pressure of a pressurized fluid such as compressed air supplied to the linear actuator 166 can be used as the electromagnetic valve 166d.

As the linear actuator 166 operates and the rod 166b moves forward and backward, the arm 162 connected to the rod 166b at the other end portion swings about the pivot 162a, and as a result, the dancer roll 164 held at one end portion of the arm 162 moves forward and backward toward the belt 151. When the rod 166b is made to protrude, the dancer roll 164 pushes the lower portion of the loop of the belt 151 inward, and the tension of the belt 151 increases. That is, the tension of the belt 151 can be adjusted in accordance with the operation amount of the linear actuator 166. Furthermore, by supplying the pressurized fluid of a constant pressure to the linear actuator 166 with the electro-pneumatic regulator, the tension of the belt 151 can be kept constant.

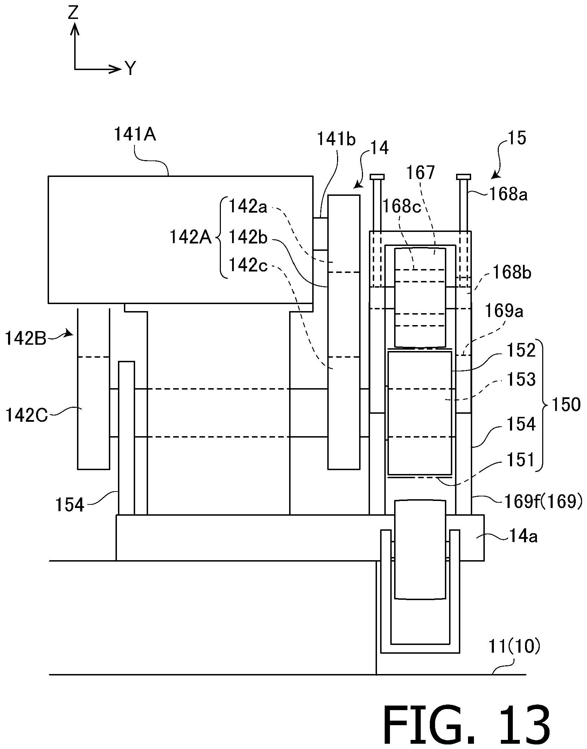

The second adjusting part 16B includes a frame 169 fixed to the frame 14a of the drive part 14, and a dancer roll 167 rotatably supported by the frame 169. As shown in FIG. 13, the frame 169 has a pair of flat plate parts 169f perpendicular to a rotation axis of the dancer roll 167 (i.e., Y-axis direction), and is formed in an inverse U-shape when viewed in the X-axis direction. Each flat plate part 169f is formed with a vertically extending groove hole 169a. The frame 169 has a support shaft 168b that supports the dancer roll 167, and both end portions of the support shaft 168b are fitted into respective groove holes 169a of the flat plate parts 169f, and the frame 169 is supported and guided by the groove holes 169a so as to be movable vertically.

The dancer roll 167 is mounted at the center of the support shaft 168b via a bearing 168c. The dancer roll 167 is placed on the upper portion of the loop of the belt 151.

Each flat plate part 169f of the frame 169 is formed with a screw hole 169b extending from an upper end surface to the groove hole 169a, and a long bolt 168a is fitted into the screw hole 169b. A tip of the long bolt 168a is in contact with an end portion of the support shaft 168b. When the long bolt 168a is screwed in, the dancer roll 167 is pushed downward together with the support shaft 168b, and the upper portion of the loop of the belt 151 is pushed inward by the dancer roll 167, thereby increasing the tension of the belt 151. That is, the tension of the belt 151 can be adjusted in accordance with the amount by which the long bolt 168a is screwed in.

In place of (or in addition to) the second adjusting part 16B, a tension gauge 163 (FIG. 36) that detects the tension of the belt 151 may be provided for example in the tension adjusting part 16, and the driving of the linear actuator 166 may be controlled based on the detection result of the tension gauge 163 so that a predetermined tension is maintained.

The linear actuator 166 is not limited to the air cylinder. A hydraulic cylinder, or a mechanism in which a rotary motor such as a linear motor or a servo motor is combined with a motion converter such as a ball screw can be used.

The belt 151 is a toothed belt having core wires of steel wires. The belt 151 may be a belt having core wires formed of so-called super fibers such as carbon fibers, aramid fibers, and ultra-high molecular weight polyethylene fibers. By using lightweight and high-strength core wires such as carbon core wires, it becomes possible to drive the carriage 20 at a high acceleration using a motor having a relatively low output (or to apply a high driving/braking force to the test wheel W), and it becomes possible to reduce a size of the flat-type tire testing device 1000. When a motor having the same output is used, it is possible to improve performance (specifically, improve acceleration performance) of the flat-type tire testing device 1000 by using the lightweight belt 151 having core wires formed of so-called super fibers.

As shown in FIGS. 3 to 5, both ends of each belt 151 are fixed to the main frame 21 of the carriage 20 by belt clamps 157, respectively. Thus, each belt 151 forms a loop via the carriage 20. When each belt mechanism 15 is operated, the carriage 20 is pulled by each belt 151 and travels in the X-axis direction.

In the present embodiment, the belt 151 is fixed to the carriage 20 with the belt clamps 157 at a lower side of the loop of the belt 151, and the belt 151 and the first driven part 22 or the second driven part 23 are connected to each other at an upper side of the loop. By disposing the belt clamp 157 having a relatively low height below the first driven part 22 or the second driven part 23, a height of the belt mechanism 15 can be reduced. It should be noted that the belt 151 may be fixed to the carriage 20 at the upper side of the loop.

As shown in FIG. 4, the pair of drive pulleys 152 (152A, 152B) of the belt mechanism 15 are fixed pulleys that are disposed with an area in which the carriage 20 can travel interposed therebetween and are held on the base 11 i.e., a position of the center of gravity is fixed with respect to the base 11). The driven pulleys 155 (155A, 155B, 155C) and 156 held by the first driven part 22 or the second driven part 23 are movable pulleys that are movable in the X-axis direction together with the carriage 20.

In the following description, for configurations in which a pair is provided both on the left and right sides, the configuration on the left side will be generally described, and for the configuration on the right side, reference numerals are enclosed in square brackets, and redundant descriptions are omitted.

In the present embodiment, the pair of drive parts 14LA and 14LB [14RA and 14RB] are driven in the same phase. The drive parts 14LA and 14LB on the left side and the drive parts 14RA and 14RB on the right side are disposed with the right and left sides reversed and are driven in opposite phases.

Effective diameters (i.e., pitch circle diameters) or the numbers of teeth of the drive pulley 152 (FIG. 13) and the driven pulley 155 (FIGS. 16 and 18) are the same. A pitch circle diameter or the number of teeth of a driven pulley 156 (FIG. 16) held by the first driven part 22 is larger than (e.g., two times) those of the drive pulley 152 and the driven pulley 155.

As shown in FIG. 5, the carriage 20 includes the main frame 21, the first driven part 22, the second driven part 23, a belt mechanism 24, a belt mechanism 25, a transmission shaft part 26, a brake device 27, a brake device 28, the torque generating part 30, an alignment part 40, and a spindle part 50 (axle part). As shown in FIG. 10, the first driven part 22 and the belt mechanism 24 constitute the second transmission section TS2. The belt mechanism 25, the transmission shaft part 26, and the spindle part 50 constitute the third transmission section TS3.

As shown in FIG. 11, the spindle part 50 includes a rotatably supported spindle 52. The spindle 52 is a shaft (i.e., a member corresponding to an axle) to which the test wheel W is coaxially mounted (i.e., so as to share a center line) at one end thereof, and the test wheel W is rotationally driven together with the spindle 52 by the power output from the torque generating part 30. The alignment part 40 is a mechanical section capable of adjusting wheel alignment of the test wheel W (alignment adjustment) by changing an orientation of the spindle part 50.

As shown in FIGS. 15 to 17, the first driven part 22 includes a main body 221, a bearing part 222, a bearing part 223, a shaft 224, a drive gear 225, a shaft 226, and a driven gear 227.

As shown in FIG. 16, the main body 221 includes two rods 221b extending in the Y-axis direction, and a pair of bearings 221c whose inner rings are fitted to the rods 221b. The driven pulleys 155A and 155C of the belt mechanism 15R are fitted to outer rings of the bearings 221c, respectively. With this configuration, the driven pulleys 155A and 155C of the belt mechanism 15R are rotatably supported by the main body 221.

As shown in FIG. 17, the main body 221 includes a bearing 221a. The bearing part 222 includes a pair of bearings 222a and 222b arranged vertically. The bearing part 223 includes a pair of bearings 223a and 223b arranged vertically.

The shaft 224 is rotatably supported at one end in the longitudinal direction by the bearing 221a, at the other end by the bearing 223a, and at an intermediate portion by the bearing 222a. The driven pulley 156 and the drive gear 225 of the belt mechanism 15R are attached to the shaft 224.

The shaft 226 is shorter than the shaft 224, and is rotatably supported at one end in the longitudinal direction by the bearing 222b and at the other end by the bearing 223b. The driven gear 227 that meshes with the drive gear 225 and a drive pulley 241 of the belt mechanism 24 are attached to the shaft 226.

That is, the driven pulley 156 (belt mechanism 15R) and the drive pulley 241 (belt mechanism 24) are connected via the first driven part 22. A portion of the power transmitted by the belt mechanism 15R is transmitted to the shaft 224 via the driven pulley 156, then to the shaft 226 via the drive gear 225 and the driven gear 227, and further to the belt mechanism 24 via the drive pulley 241. The power transmitted to the belt mechanism 24 is used to drive the test wheel W.

That is, the first driven part 22 on the right side and the driven pulley 156 (and the driven pulleys 155A and 155C) rotatably supported by the first driven part 22 have a function of extracting a portion of the power from the belt mechanism 15R and supplying the extracted power to the belt mechanism 24.

The remaining portion of the power transmitted by the belt mechanism 15R is transmitted to the main frame 21 of the carriage 20 to which the belt 151 is fixed by the belt clamps 157, and is used to drive the carriage 20.

That is, the belt mechanism 15R on the right side constitutes a portion of the means for driving the carriage 20 (carriage driving means), and also constitutes a portion of the means for driving the test wheel W (test wheel driving means). The belt mechanism 15R on the right side, together with the first driven part 22 on the right side, functions as means for distributing the power generated by the drive parts 14RA and 14RB to the power to be used to drive the carriage 20 and the power to be used to drive the test wheel W (power distribution means).

In the belt mechanism 15R of the present embodiment, since the pitch circle diameter of the driven pulley 156 on the output side is larger than that of the drive pulley 152 on the input side, the speed reduction ratio is larger than 1. It should be noted that the present invention is not limited to this configuration. The pitch circle diameter of the driven pulley 156 may be set to be equal to or larger than the pitch circle diameter of the drive pulley 152 to set the speed reduction ratio of the belt mechanism 15R to equal to or smaller than 1.

The first driven part includes the drive gear 225 and the driven gear 227, thereby reversing a rotational direction of the power.

As shown in FIG. 18, the second driven part 23 (main body 231) includes three rods 231b extending in the Y-axis direction, and three bearings 231c whose inner rings are fitted to the rods 231b, respectively. The three rods 231b are arranged at equal intervals in the X-axis direction. In the present embodiment, the rod 231b at the center is arranged at a position higher than the remaining two rods 231b, but all the rods 231b may be arranged at the same height.

The three driven pulleys 155 (the driven pulleys 155A, 155B, and 155C in order from the front) of the belt mechanism 15L are fitted to outer rings of the bearings 231c, respectively. With this configuration, the driven pulleys 155A, 155B, and 155C of the belt mechanism 15L are rotatably supported by the second driven part 23.

As shown in FIG. 4, the belt 151 of the belt mechanism 15 is folded back by the drive pulleys 152A and 152B to be divided into an upper portion 151a and a lower portion 151b. The upper portion 151a and the lower portion 151b are stretched in the traveling direction of the carriage 20 and are driven in directions opposite to each other. Specifically, the lower portion 151b of the belt 151 fixed to the carriage 20 is driven in the traveling direction of the carriage together with the carriage 20, and the upper portion 151a is driven in a direction opposite to the carriage 20 and the lower portion 151b. The driven pulleys 155 and 156 (FIGS. 16 and 18) attached to the carriage 20 are wound around the upper portion 151a of the belt 151 traveling in the direction opposite to the carriage 20 and are driven by the upper portion 151a.

As shown in FIGS. 10 and 11, a portion of the power transmitted by the belt mechanism 15R on the right side is transmitted to the torque generating part 30 by the second transmission section TS2, and is further transmitted to the test wheel W by the third transmission section TS3, and is used to drive the test wheel W. The second transmission section TS2 includes the first driven part 22 and the belt mechanism 24, and the third transmission section TS3 includes the belt mechanism 25, the transmission shaft part 26, and the spindle part 50. As described above, the remaining portion of the power transmitted by the belt mechanism 15R on the right side is transmitted to the main frame 21 of the carriage 20 to which end portions of the belt 151 is fixed by the belt clamp 157, and is used to drive the carriage 20. The belt mechanism 15R and the first driven part 22 configured as described above enable the belt 151 to drive both the carriage 20 and the test wheel W.

The second driven part 23 on the left side is different from the first driven part 22 on the right side in that the second driven part 23 on the left side is not provided with a configuration for extracting a portion of the power transmitted by the belt mechanism 15L and transmitting the extracted power to the second transmission section TS2 provided to the carriage 20 (specifically, the bearing parts 222 and 223, the shafts 224 and 226, the drive gear 225, and the driven gear 227). The second driven part 23 on the left side is not an essential component, but by providing the second driven part 23 on the left side, forces the carriage 20 receives from the right and left belt mechanisms 15L and 15R balance, and the traveling of the carriage 20 stabilizes.

As described above, in the present embodiment, a configuration in which the carriage 20 and the test wheel W are driven using the power transmitted by a common power transmission device (i.e., the belt mechanism 15R). With this configuration, it is possible to rotationally drive the test wheel W at a peripheral speed (or rotation speed) corresponding to the traveling speed of the carriage 20 at all times regardless of the traveling speed of the carriage 20. Furthermore, in order to reduce operation amount (i.e., power consumption) of the torque generating part 30, the present embodiment is configured such that the test wheel W is rotationally driven at a peripheral speed substantially equal to the traveling speed of the carriage 20 when the torque generating part 30 is not in operation.

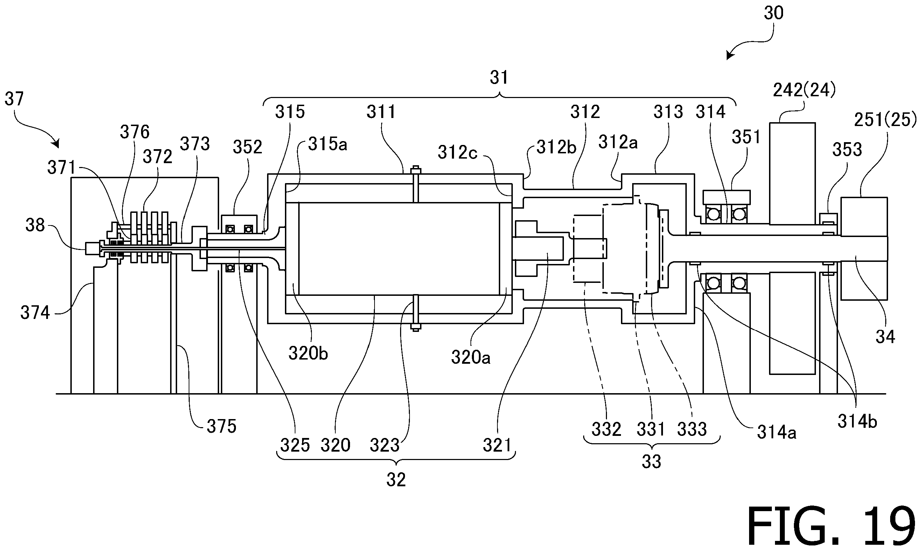

The belt mechanism 24 includes the drive pulley 241 attached to the shaft 226 (FIG. 17) of the first driven part 22 described above, a driven pulley 242 attached to a later-described shaft part 314 (FIG. 19) of the torque generating part 30, and a belt 243 wound around the drive pulley 241 and the driven pulley 242. The belt 243 is, for example, a toothed belt having the same configuration as that of the belt 151 described above. The type of the belt 243 may be different from that of the belt 243.

FIG. 19 is a diagram showing a schematic structure of the torque generating part 30. The torque generating part 30 generates torque to be applied to the test wheel W, and outputs the torque by adding the torque to the rotational motion transmitted by the belt mechanism 24. In other words, the torque generating part 30 can apply torque to the test wheel W (i.e., apply a driving force or a braking force between the road surface 63a and the test wheel W) by changing a phase of the rotational motion transmitted by the belt mechanism 24.

The torque generating part 30 functions as a second actuating means that generates power for driving the test wheel W, and also functions as a power coupling means that couples the power generated by the motor 141 (first motor) of the drive parts 14 (first actuating means) and a power generated by a built-in motor 32 (second motor) of the torque generating part 30.

By incorporating the torque generating part 30 into the drive system DS, it is possible to share the roles between the power sources (drive parts 14RA and 14RB) for controlling the rotation speed of the test wheel W and the power source (motor 32 which will be described later) for controlling the torque. Thus, it is possible to use a power source having a smaller capacity, and it is possible to control the rotation speed and torque to be applied to the test wheel W with higher accuracy. Furthermore, by incorporating the torque generating part 30 into the carriage 20, since load applied to the belt mechanism 15R is reduced, it is possible to downsize the belt mechanism 15R (e.g., to reduce the number of toothed belts used) and to use a member having a lower load capacity.

The torque generating part 30 includes a rotating frame 31, the motor 32 (second motor), a speed reducer 33, and a shaft 34 which are mounted inside the rotating frame 31, three bearing parts 351, 352, and 353 that rotatably support the rotating frame 31, a slip ring part 37, and a rotary encoder 38 that detects the rotation speed of the rotating frame 31.

In the present embodiment, the motor 32 is an ultra-low inertia high output type AC servo motor of which inertia moment of a rotating part is $0.01 kg·m^2$ or less (more preferably, $0.008 kg·m^2$ or less) and the rated output is 3kW to 60kW (more practically, 7kW to 37kW).

The rotating frame 31 has a first cylindrical part 311 (motor accommodating part), a second cylindrical part 312 (connecting tube), and a third cylindrical part 313 which are substantially cylindrical and have large diameters, and shaft parts 314 and 315, which are substantially cylindrical and have diameters smaller than the first cylindrical part 311. The shaft part 314 is coaxially coupled to one end portion (right end portion in FIG. 19) of the first cylindrical part 311 via the second cylindrical part 312 and a third cylindrical part 313. The shaft part 315 is coaxially coupled to the other end portion (left end portion in FIG. 19) of the first cylindrical part 311. The shaft part 314 is rotatably supported by the bearing parts 351 and 353, and the shaft part 315 is rotatably supported by bearing part 352.

The motor 32 is accommodated in a hollow portion of the first cylindrical part 311. In the motor 32, a shaft 321 is disposed coaxially with the rotating frame 31, and a motor case 320 (i.e., stator) is fixed to the first cylindrical part 311 with a plurality of stud bolts 323.

The speed reducer 33 is disposed inside hollow portions of the second cylindrical part 312 and the third cylindrical part 313. The shaft 321 of the motor 32 is connected to an input shaft 332 of the speed reducer 33, and the shaft 34 is connected to an output shaft 333 of the speed reducer 33.

A flange 312a projecting outward from an outer periphery is formed at one end portion (right end portion in FIG. 19) of the second cylindrical part 312. A flange 312b projecting outward from an outer periphery and an inner flange 312c projecting inward from an inner periphery are formed at the other end portion (left end portion in FIG. 19) of the second cylindrical part 312.

A flange 320a of the motor 32 is fixed to the inner flange 312c of the second cylindrical part 312. A gear case 331 of the speed reducer 33 is fixed to one end portion of the second cylindrical part 312 (i.e., at a root of the flange 312a). That is, the motor case 320 of the motor 32 and the gear case 331 of the speed reducer 33 are coupled with high rigidity via the second cylindrical part 312 which is a single short cylindrical member. As a result, almost no bending moment acts on the shaft 321 of the motor 32 and the input shaft 332 of the speed reducer 33, and smooth (i.e., low-friction) rotation of the shaft 321 and the input shaft 332 is ensured, and thus control accuracy of the torque to be applied to the test wheel W is improved.

A flange 315a having the same diameter as the first cylindrical part 311 is formed at a root of the shaft part 315, and one end of the first cylindrical part 311 is fixed to an outer peripheral portion of the flange 315a. A flange 320b of the motor 32 is fixed to the flange 315a of the first cylindrical part 311. Since the motor 32 is fixed to the rotating frame 31 at both end portions and a central portion in a longitudinal direction of the motor case 320, the motor 32 is supported with high rigidity.

A flange 314a having the same diameter as the third cylindrical part 313 is formed at a root of the shaft part 314, and one end of the third cylindrical part 313 is fixed to an outer peripheral portion of the flange 314a. The other end of the third cylindrical part 313 is fixed to an outer peripheral portion of the flange 312a of the second cylindrical part 312.

The shaft part 314 is rotatably supported by the bearing part 351 at a root side near the flange 314a and by the bearing part 353 at a distal end portion. The driven pulley 242 of the belt mechanism 24 is disposed between the bearing part 351 and the bearing part 353, and is coaxially attached to an outer periphery of the shaft part 314. The rotating part of the torque generating part 30 is rotationally driven by the power transmitted by the belt mechanism 24. That is, the shaft part 314 (rotating frame 31) serves as an input shaft of the torque generating part 30.

A pair of bearings 314b are provided on inner peripheries of both end portions of the shaft part 314 (i.e., portions supported by the bearing part 351 or the bearing part 353). The shaft 34 passes through a hollow portion of the shaft part 314, and is rotatably supported by the pair of bearings 314b. A distal end portion of the shaft 34 protrudes outward from a distal end of the shaft part 314. A drive pulley 251 of the belt mechanism 25 is coaxially attached to the distal end portion of the shaft 34 protruding from the shaft part 314, and the belt mechanism 25 is driven by power output from the shaft 34. That is, the shaft 34 serves as an output shaft of the torque generating part 30.

Torque output from the motor 32 is amplified by the speed reducer 33 and transmitted to the shaft 34. Rotation output from the shaft 34 to the belt mechanism 25 is obtained by superimposing the torque generated by the motor 32 and the speed reducer 33 on the rotation of the rotating frame 31 driven by the belt mechanism 24. The torque generating part 30 adds the torque generated by the torque generating part 30 to rotational motion transmitted to the shaft part 314 of the rotating frame 31 which is the input shaft, and outputs the torque from the shaft 34 which is the output shaft.

The slip ring part 37 includes a plurality of pairs of slip rings 371 and brushes 372, a support tube 373, a bearing part 374, a support column 375, and a support arm 376. The support tube 373 is coaxially coupled to the shaft part 315 of the rotating frame 31. A distal end portion of the support tube 373 is rotatably supported by the bearing part 374. The support arm 376 is disposed parallel to the support tube 373. One end of the support arm is fixed to the support column 375 disposed on the rotating frame 31 side, and the other end of the support arm is fixed to a frame of the bearing part 374.

The plurality of slip rings 371 are arranged at constant intervals in an axial direction, and are attached to an outer periphery of the support tube 373. The plurality of brushes 372 are disposed so as to face and contact outer peripheral surfaces of the corresponding slip rings 371, and are attached to the support arm 376.

Lead wires (not shown) are connected to the slip rings 371, respectively. The lead wires pass through a hollow portion of the support tube 373 and are drawn out to a hollow portion of the shaft part 315 of the rotating frame 31. A cable 325 of the motor 32 passes through the hollow portion of the shaft part 315, and a plurality of wires included in the cable 325 are connected to the lead wires of the corresponding slip rings 371. The brushes 372 are connected to a driver 32a (FIG. 36). That is, the motor 32 and the driver 32a are connected via the slip ring part 37.

The rotary encoder 38 is attached to a frame of a bearing part 374 of the slip ring part 37. The support tube 373 that rotates integrally with the rotating frame 31 is connected to an input shaft of the rotary encoder 38.

As shown in FIG. 11, the belt mechanism 25 includes the drive pulley 251 attached to an output shaft (shaft 34) of the torque generating part 30, a driven pulley 252 attached to an input shaft (transmission shaft 261) of the transmission shaft part 26, and a belt 253 wound around the drive pulley 251 and the driven pulley 252, and transmits the power output from the torque generating part 30 to the transmission shaft part 26. The belt 253 is, for example, a toothed belt having the same configuration as the belt 151 described above. The type of the belt 253 may be different from that of the belt 151.

The transmission shaft part 26 includes a transmission shaft 261, a pair of bearings 262 that rotatably support the transmission shaft 261, a disk brake 263, a slide type constant velocity joint 265, a transmission shaft 266, and a bearing 267 that rotatably support the transmission shaft 266 The disk brake 263 includes a disk rotor 263a attached to the transmission shaft 261, and a caliper 263b that applies friction to the disk rotor 263a to perform braking.

The driven pulley 252 of the belt mechanism 25 is attached to one end portion of the transmission shaft 261, and one end of the slide type constant velocity joint 265 is connected to the other end portion of the transmission shaft 261 via the disk rotor 263a. The other end of the slide type constant velocity joint 265 is connected to a spindle 52 via the transmission shaft 266. The slide type constant velocity joint 265 is configured to be capable of smoothly transmitting rotation without rotational fluctuation regardless of an operating angle (i.e., an angle formed by an input shaft and an output shaft). A length (transmission distance) of the slide type constant velocity joint 265 in an axial direction is also variable.

The spindle 52 to which the test wheel W is to be attached is supported by the alignment part 40 such that an angle and a position of the spindle 52 can be changed. By connecting the transmission shaft 261 and the spindle 52 via the slide type constant velocity joint 265, even if the angle and the position of the spindle 52 change, the slide type constant velocity joint 265 can flexibly follow the change. Therefore, large strain is not applied to the spindle 52 and the transmission shaft 261, and a state for smoothly transmitting power can be maintained.

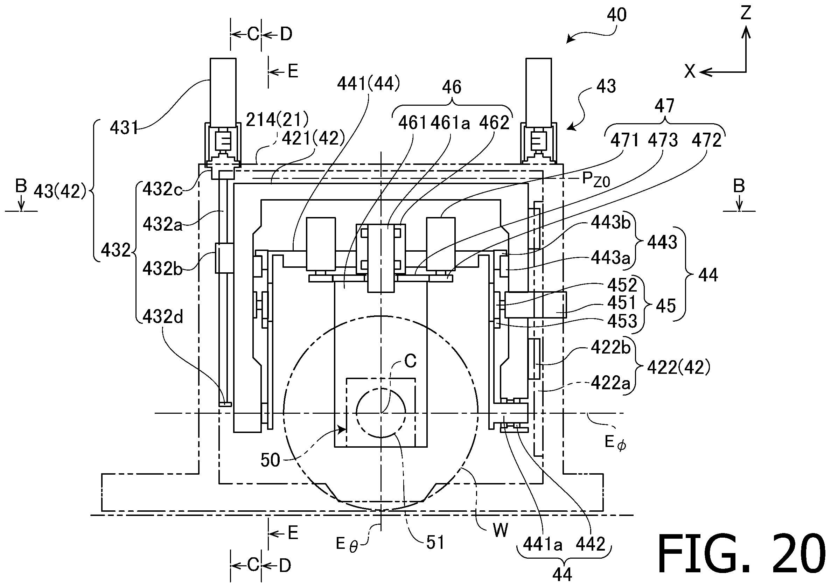

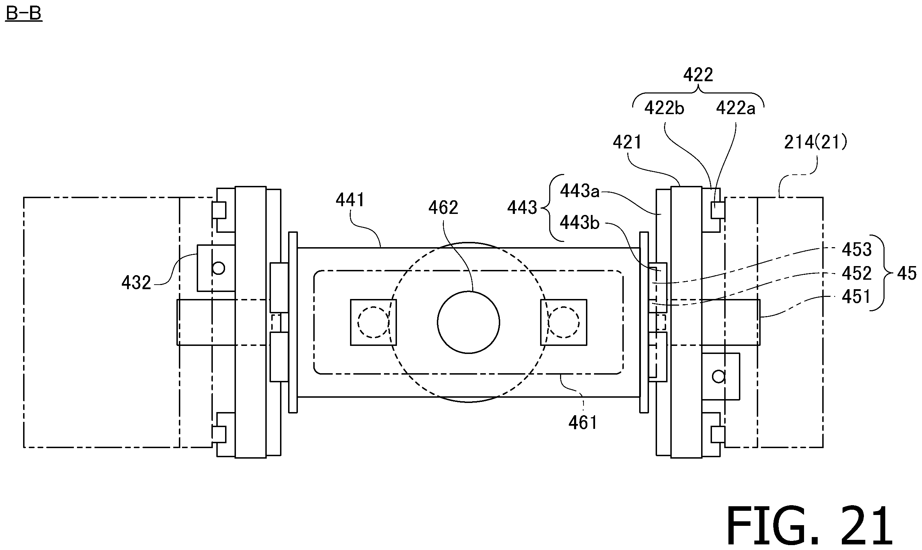

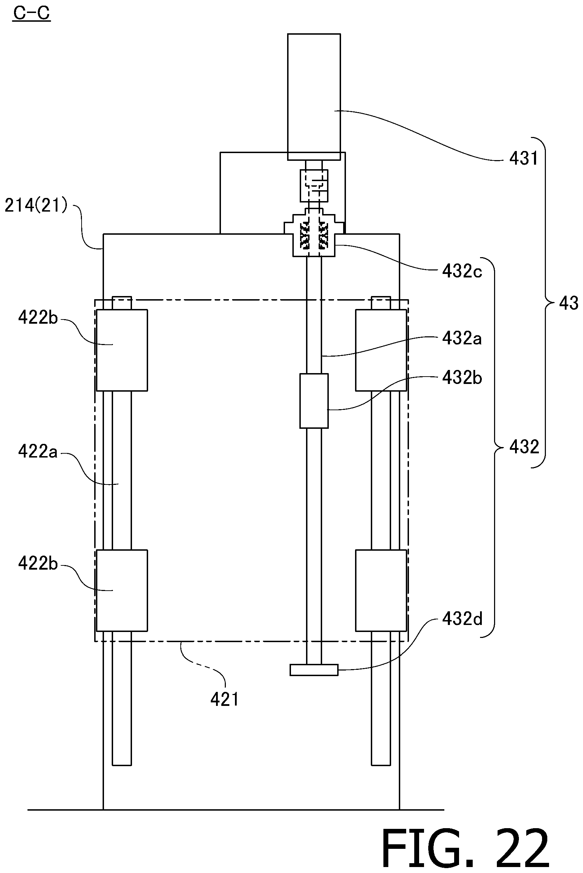

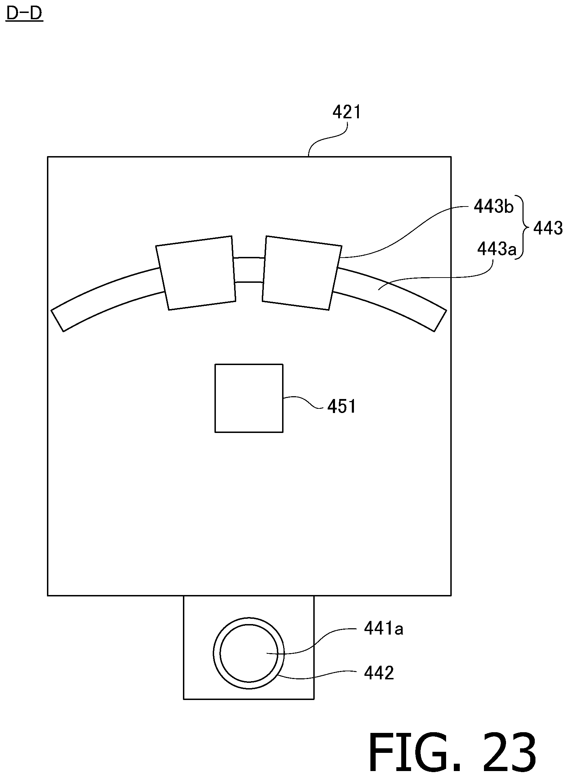

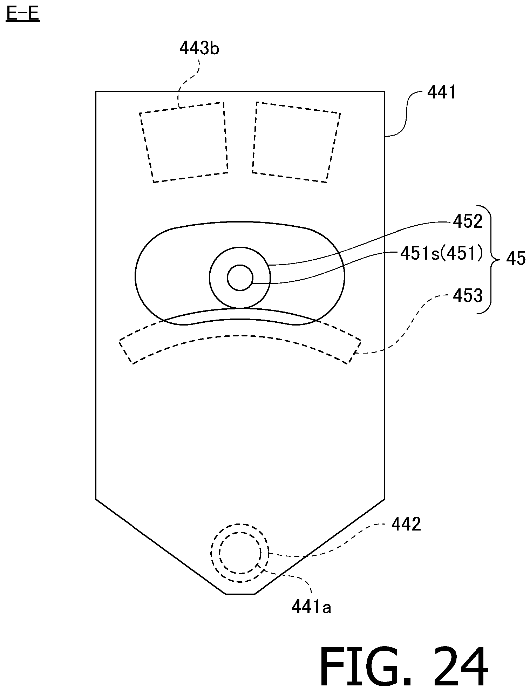

FIG. 20 is a diagram showing a schematic structure of the alignment part 40. FIGS. 21, 22, 23 and 24 are arrow views B-B, C-C, D-D and E-E of FIG. 20, respectively.

The alignment part 40 includes a load adjusting part 42, a camber angle adjusting part 44, and a slip angle adjusting part 46.

The load adjusting part 42 is a mechanism for adjusting load acting on the test wheel W (i.e., vertical load the test wheel receives from the road surface 63a) by changing height of the spindle 52 and the test wheel W mounted to the spindle 52 (more specifically, a distance from the road surface 63a to a center C of the test wheel W). The load adjusting part 42 is includes an elevating frame 421 (first movable frame) capable of moving vertically (in the Z-axis direction) with respect to the base 11, a plurality of (in the illustrated embodiment, two pairs of) linear guides 422 that guide the vertical movement of the elevating frame 421, and one or more (in the illustrated embodiment one pair of) Z-axis drive units 43 that drive the elevating frame 421 vertically.

On the left side of the main frame 21 of the carriage 20, an alignment mechanism support part 214 having a shed shape (or an arbor shape) and accommodates the alignment part 40 is provided. The elevating frame 421 is accommodated in the alignment mechanism support part 214. Each linear guide 422 includes a vertically extending rail 422a, and one or more (in the illustrated embodiment, two) traveling parts 422b capable of traveling on the rail 422a. One of the rail 422a and the traveling parts 422b of each linear guide 422 is attached to the alignment mechanism support part 214, and the other is attached to the elevating frame 421.

The Z-axis drive unit 43 (first drive unit) includes a motor 431, and a ball screw 432 (motion converter) that converts rotational motion of the motor 431 into linear motion in the Z-axis direction. The ball screw 432 includes a screw shaft 432a connected to a shaft of the motor 431, a nut 432b meshed with the screw shaft 432a, and bearings 432c and 432d that rotatably support the screw shaft 432a. The motor 431 and the two bearings 432c and 432d are attached to the alignment mechanism support part 214, and the nut 432b is attached to the elevating frame 421.

When the ball screw 432 is driven by the motor 431, the elevating frame 421 moves vertically together with the nut 432b. Accordingly, the test wheel W is lifted or lowered via the camber angle adjusting part 44, the slip angle adjusting part 46, and the spindle part 50 supported by the elevating frame 421, and load corresponding to an angular position of the ball screw 432 (i.e., the height of the test wheel W) acts on the test wheel W.

In the present embodiment, the screw shaft 432a is directly connected to the shaft of the motor 431. However, the motor 431 and the screw shaft 432a may be connected via a speed reducer, a gear device that reduces rotation such as a worm gear, or the like.

In the present embodiment, the lead screw mechanism is used as the motion converter. However, another type of motion converter capable of converting rotational motion into linear motion may be used.

The motor 431 of the present embodiment is a servo motor. However, another type of motor of which operation amount can be controlled may be used as the motor 431.

The camber angle adjusting part 44 is a mechanism for adjusting a camber angle, which is an inclination of the test wheel W with respect to the road surface, by rotating the spindle 52 about the $E_\varphi$-axis (an axis extending in a front-rear direction through the center C of the test wheel W). The camber angle adjusting part 44 includes a $\varphi$ rotating frame 441 (second movable frame) that is rotatable about an $E_\varphi$-axis, a pair of bearings 442 that support the $\varphi$ rotating frame 441 rotatably about the $E_\varphi$-axis, a pair of curved guides 443 that guide the rotation of the $\varphi$ rotating frame 441 about the $E_\varphi$-axis, and a pair of $\varphi$ drive units 45 (second drive units) on the left and right sides and that rotationally drive the $\varphi$ rotating frame 441 about the $E_\varphi$-axis.

As shown in FIG. 20, the $\varphi$ rotating frame 441 and the elevating frame 421 of the present embodiment have gate-like shapes (inverse U-shapes) when viewed in the Y-axis direction. The $\varphi$ rotating frame 441 is accommodated in a hollow portion of the inverse U-shaped elevating frame 421. Cylindrical pivots 441a projecting outward coaxially with the $E_\varphi$-axis (i.e., in a direction away from the test wheel W) are provided on a front surface and a back surface of the $\varphi$ rotating frame 441. The pivots 441a are respectively rotatably supported by the pair of bearings 442 attached to the elevating frame 421. The $\varphi$ rotating frame 441 is supported rotatably about the $E_\varphi$-axis with the pivots 441a as support shafts. The bearings 442 may be attached to the $\varphi$ rotating frame 441, and the pivots 441a may be attached to the elevating frame 421. The shapes of the $\varphi$ rotating frame 441 and the elevating frame 421 are not limited to the shapes of the present embodiment, and may be any shapes having a hollow portion capable of accommodating the spindle part 50 and the like.

The curved guide 443 includes an arcuate curved rail 443a disposed concentrically with the $E_\varphi$-axis, and one or more (in the illustrated embodiment, two) traveling parts 443b capable of traveling on the curved rail 443a. One of the curved rail 443a and the traveling parts 443b is attached to the elevating frame 421, and the other is attached to the φ rotating frame 441.

The φ drive unit 45 includes a pair of spur gears 453 attached to the front and rear surfaces of the φ rotating frame 441, respectively, a pair of pinions 452 meshed with the respective spur gears 453, and a pair of motors 451 that drive the respective pinions 452. The motors 451 are attached to the elevating frame 421, and the pinions 452 are coupled to shafts 451s of the motors 451. The spur gears 453 may be attached to the elevating frame 421, and the motors 451 may be attached to the φ rotating frame 441. The pinion 452 is a roller pinion including teeth consisting of a rotatably supported roller (roller pin), but an ordinary gear having fixed teeth may also be used. The spur gear 453 is a segment gear formed in an arc shape centered on the $E_φ$-axis (i.e., coaxial with the $E_φ$-axis). The spur gear 453 is a trochoid gear having a trochoid tooth profile. A gear mechanism having no backlash is realized by combining the trochoid gear and the roller pinion. The spur gears 453 are internal gears in the illustrated embodiment, but may be external gears.

The motor 451 of the present embodiment is a servo motor, but another type of motor of which operation amount can be controlled may be used as the motor 451.

When the pinions 452 are rotationally driven by the motors 451, the φ rotating frame 441, together with the spur gears 453 meshed with the pinions 452, rotates about the $E_φ$ axis with respect to the elevating frame 421. Accordingly, the test wheel W supported by the φ rotating frame 441 via the slip angle adjusting part 46 and the spindle part 50 rotates about the $E_φ$-axis, and the camber angle changes.

The slip angle adjusting part 46 is a mechanism for adjusting a slip angle, which is an inclination of the test wheel W (more specifically, a wheel center plane perpendicular to the axle) with respect to the traveling direction (X-axis direction) of the carriage 20, by changing an orientation of the spindle 52 about an $E_θ$-axis (an axis extending vertically through the center C of the test wheel W). As shown in FIG. 20, the slip angle adjusting part 46 includes a θ rotating frame 461 (third movable frame) rotatable about the $E_θ$-axis, a bearing 462 that rotatably supports the θ rotating frame 461, and a θ drive unit 47 that rotationally drives the θ rotating frame 461.

The θ rotating frame 461 is accommodated in a hollow portion of the φ rotating frame 441 having a gate-like shape (inverse U-shape) when viewed in the Y-axis direction. A pivot 461a projecting coaxially with the Ee-axis is provided on an upper surface of the θ rotating frame 461. The pivot 461a is rotatably supported by the bearing 462 attached to a top plate of the φ rotating frame 441. The θ rotating frame 461 is supported so as to be rotatable about the $E_θ$-axis with the pivot 461a as a support shaft.

The θ drive unit 47 includes a spur gear 473 attached to the θ rotating frame 461, one or more (in the illustrated embodiment, a pair of) pinions 472 that mesh with the spur gear 473, and one or more (in the illustrated embodiment, a pair of) motors 471 that rotationally drive the pinions 472, respectively. The spur gear 473 is coaxially coupled to the pivot 461a. The motors 471 are attached to the φ rotating frame 441, and the pinions 472 are attached to shafts of the motors 471. The spur gear 473 may be attached to the φ rotating frame 441, and the motor 471 may be attached to the θ rotating frame 461. In the present embodiment, the pinion 472 is a roller pinion, and the spur gear 473 is a trochoid gear, but the types of the pinion 472 and the spur gear 473 are not limited to the configuration of the present embodiment.

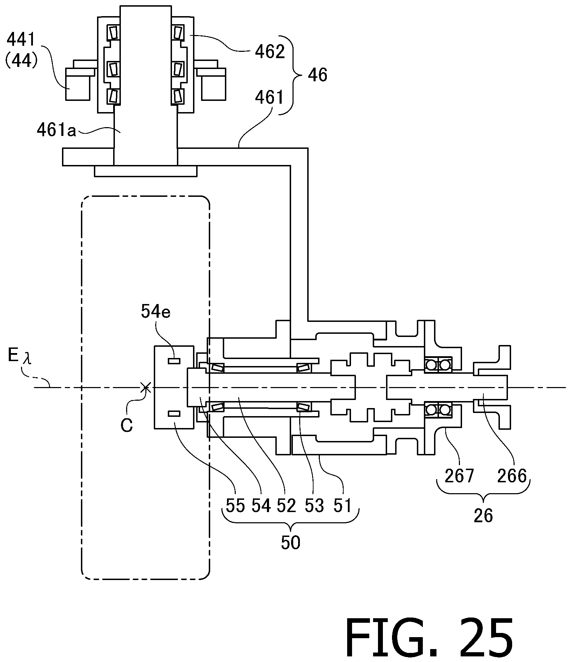

FIG. 25 is a diagram showing a schematic structure of the spindle part 50 (wheel support part). The spindle part 50 is attached to a lower end portion of the θ rotating frame 461. The spindle part 50 includes a frame 51 fixed to the θ rotating frame 461, a plurality of (in the illustrated embodiment, a pair of) bearings 53 attached to the frame 51, a spindle 52 rotatably supported by the bearing 53, a six component force sensor 54 that detects force acting on the test wheel W, and a wheel hub 55 coaxially attached to a distal end portion of the spindle 52 via the six component force sensor 54. The six component force sensor 54 includes a plurality of piezoelectric elements 54e. The wheel rim Wr of the test wheel W (FIG. 1) is attached to the wheel hub 55. The torque of the test wheel W is detected by the six component force sensor 54. However, a torque sensor capable of detecting the torque of the test wheel W may be separately provided in the spindle part 50 or the like.

The transmission shaft 266 of the transmission shaft part 26 is connected to an end of the spindle 52, and the transmission shaft 266 is rotatably supported by the bearing 267 attached to the frame 51 of the spindle part 50.

The alignment part 40 is configured such that the three axes, namely the Ee-axis, the $E_φ$-axis, and an $E_λ$-axis intersect at the center C of the test wheel W so that the position of the test wheel W does not move even if the camber angle (φ angle) or the slip angle (θ angle) is changed.

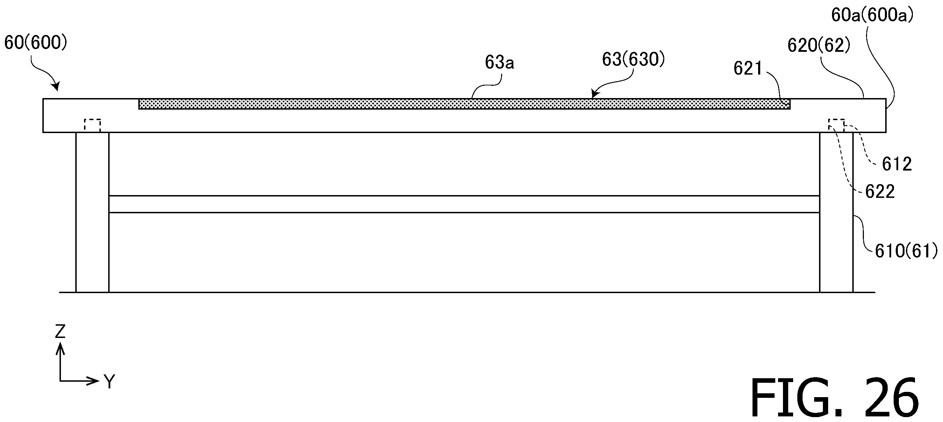

FIG. 26 is a transverse cross-sectional view of the road surface part 60. The road surface part 60 includes the frame 61 and a main body part 60a supported by the frame 61. The main body part 60a includes a base 62 and a pavement part 63 held by the base 62. On an upper surface of the base 62, a recessed part 621 extending in an extending direction of the road surface part 60 (i.e., in the X-axis direction being the travelling direction of the carriage 20) is formed. The pavement part 63 is for example formed by filling the recessed part 621 with simulated pavement material which will be described later and hardening the simulated pavement material. On an upper surface of the pavement part 63, the road surface 63a with which the test wheel W contacts is formed.

In the present embodiment, the main body part 60a is configured from main body part units 600a being road surface units (replaceable structures each including at least a portion of the road surface 63a) and is detachably attached on the frame 61. The road surface unit is not limited to a configuration in which the main body part 60a is unitized (hereinafter referred to as a "main body part unit") as in the present embodiment but may be formed to have a configuration in which only the pavement part 63 is unitized (hereinafter referred to as a "pavement part unit") or a configuration in which the entire road surface part 60 including the frame 61 is unitized (hereinafter referred to as a "road surface part unit").

The main body part 60a of the present embodiment is configured from a plurality of the main body part unit 600a formed by dividing the main body part 60a in the extending direction of the road surface part 60 and is configured to be replaceable per the main body part unit 600a. It should be noted that the entire main body part 60a may be formed as a single replaceable road surface unit.

By configuring the road surface part 60 from road surface units such as the main body part units 600a as in the present embodiment, it becomes possible to easily replace at least a part of the road surface 63a by replacing the road surface unit.

For example, only the main body part unit 600a at the central part of the road surface part 60 in the extending direction (X-axis direction) can be replaced to change a type of the pavement part 63 (e.g., materials, structures, surface profiles and the like) only at the central part. Also, the type of the pavement part 63 may be changed for every main body part unit 600a such that, for example, a friction coefficient of the road surface 63a changes in the extending direction of the road surface part 60.

On a lower surface of the base 62, a recessed part 622 that fits with a protruded part 612 provided on an upper surface of the frame 61 is provided. The main body part unit 600a is detachably attached on the frame 61 by placing the main body part unit 600a on the frame 61 such that the protruded part 612 and the recessed part 622 fit to each other and by fixing the main body part unit 600a to the frame 61 with (not shown) fixing means such as bolts or cam levers.

In the present embodiment, the frame 61 is formed from a plurality of frame units 610 formed by dividing the frame 61 in its extending direction and is replaceable per the frame unit 610.

In the present embodiment, the frame unit 610 and the main body part unit 600a are formed in the same length and thus replacement per road surface part unit 600 in which the main body part unit 600a is attached to the frame unit 610 is also possible.

In the present embodiment, the pavement part 63 is formed integrally with the base 62. However, the pavement part 63 may be configured to be detachable from and attachable to the base 62. For example, the pavement part 63 may be configured from a plurality of pavement part units 630 formed by dividing the pavement part 63 in its extending direction of the road surface part 60, and may be configured to be replaceable per pavement part unit 630. In this case, the pavement part unit 630 and a base unit 620 may be formed in the same length to make replacement per complex unit in which the pavement part unit 630 is attached to the base unit 620 (in other words, the main body part unit 600a in which the pavement part 63 is made detachable) possible. Also, the frame unit 610, the base unit 620 and the pavement part unit 630 may be assembled to form the road surface part unit 600 to make replacement per road surface part unit 600 possible.

As described above, in the present embodiment, a plurality of road surface part units 600 are connected to form the road surface part 60. By this configuration, it is possible to extend or shorten the road surface part 60 by adding or removing the road surface part unit 600. Furthermore, by configuring the plurality of road surface units to have the same structure, it becomes possible to efficiently manufacture the road surface part 60.

In the present embodiment, as with the road surface part 60, the track part 10 is divided into a plurality of track part units 100 in its extending direction. It is also possible to extend or shorten the track part 10 by adding or removing the track part unit 100. The track part unit 100 is formed in the same length as the road surface part unit 600. Therefore, it is possible to form the track part 10 and the road surface part 60 in the same length. The road surface part 60 and the track part 10 may also be configured to be possible to extend, shorten or partially replace per complex unit in which the track part unit 100 and the road surface part unit 600 are integrated.

In the road surface part 60 of the present embodiment, a simulated pavement simulating asphalt pavement (i.e., a pavement of which influences on a tire such as wear volume of a tire are comparable with the actual asphalt pavement) is formed as the pavement part 63. The simulated pavement is for example formed by shaping and curing simulated pavement material in which binder such as, for example, urethane resin or epoxy resin is added to aggregate formed by crushing (and further polishing and/or etching as necessary) ceramics with excellent wear resistance such as silicon carbide or alumina. By using such simulated pavement material, a simulated road surface with excellent wear resistance and stable road surface state (i.e., a simulated road surface that causes stable wear volume and the like to the test tire T) can be obtained. The wear volume of a tire can be adjusted by, for example, particle size of the aggregate and/or amount of the binder added.

The simulated pavement of the present embodiment has a single-layered structure. However, for example, a simulated pavement in which a plurality of layers formed from different materials are layered in a thickness direction may be used. Simulated pavements simulating flagstone pavements, brick pavement, concrete pavement and the like by, for example, adjusting types and/or particle size of the aggregate and/or adjusting types and/or amount of the binder may also be used.

The road surface 63a may also be formed to cause more (or less) damage on a tire than the actual road surface. It becomes possible to perform accelerated tire deterioration test by using the road surface 63a which has greater influence on a tire than the actual road surface.

The pavement part 63 may also be formed from actual pavement material (e.g., asphalt compound used for a superficial layer of an asphalt pavement). The pavement part 63 replicating or imitating not only a superficial layer of an actual pavement forming the road surface but also a lower layer structure of the actual pavement may also be used.

In the flat-type tire testing device 1000 of the present embodiment, since the road surface 63a does not move during the test, the test can be performed in a state where foreign matter (e.g., water, snow, mud water, dirt, sand, gravel, fallen leaves, oil, matter simulating the aforementioned foreign matter, or a mixture of two or more of the aforementioned foreign matters) which has influence on performance of a tire is scattered on the road surface 63a. For example, by performing the test in a state where water is scattered on the road surface 63a, wet braking test can be performed.

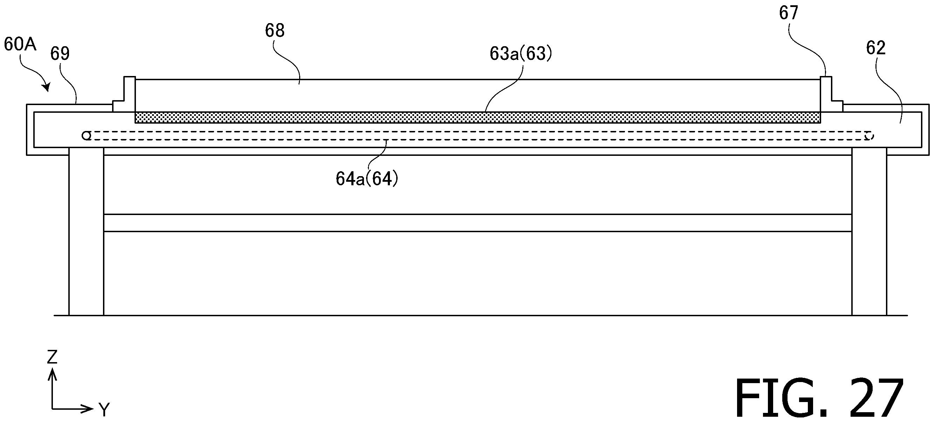

A variation of the road surface part 60 will be described. Fig. 27 is a transverse cross-sectional view of a road surface part 60A being a variation of the road surface part 60. The road surface part 60A includes a frame part 67 attached to the base 62. The frame part 67 is bonded to the base 62 to be watertight by caulking or the like and forms a basin 68 together with the base 62 and the pavement part 63. Foreign matter (e.g., water, gravel, dirt, fallen leaves or the like) having influence on performance of a tire is put in the basin 68 to cover the road surface 63a. By using the basin 68, it becomes possible to thickly deposit foreign matter on the road surface 63a. The frame part 67 of this variation is attached on an upper surface of the base 62, but the frame part 67 may be attached on side faces of the base 62. The frame part 67 may also be attached on an upper surface of the pavement part 63.

The road surface part 60A includes a temperature adjusting means 64 configured to be capable of adjusting temperature of the road surface 63a. The temperature adjusting means 64 of the present variation has a flow channel 64a embedded in the base 62, a temperature sensor 64b configured to detect temperature of the road surface 63a, and a temperature adjusting device 64c (Fig. 36). The temperature sensor 64b is, for example, a contact type temperature sensor which uses a thermocouple, a thermistor or the like or a non-contact type temperature sensor such as an infrared sensor. The temperature adjusting device 64c is connected to the controller 1070 and adjusts the temperature of the road surface 63a to a set temperature based on a command from the controller 1070. Specifically, the temperature adjusting device 64c adjusts temperature of heat carrier (e.g., oil or water containing antifreeze liquid) based on detection result by the temperature sensor 64b and transmits the heat carrier to the flow channel 64a. It is possible to adjust the temperature of the road surface 63a to a predetermined temperature by causing the heat carrier of which temperature is adjusted by the temperature adjusting device 64c to flow through the flow channel 64a. An outer surface of the base 62 is coated with heat insulating material 69 to stabilize the temperature of the road surface 63a and to improve heat use efficiency.

The temperature adjusting means 64 can adjust the temperature of the road surface 63a in a wide range from a low temperature (e.g., -40 degrees Celsius) up to a high temperature (e.g., 80 degrees Celsius). It is possible to form a frozen road surface by filling the basin 68 with water and setting the set temperature of the road surface 63a to below zero. That is, it is possible to perform ice braking test by using the road surface part 60A of the present variation. It is also possible to perform snow braking test in a state where the basin 68 is filled with snow.

The flow channel 64a is formed to meander at constant intervals within the base 62 in parallel with the road surface 63a. The base 62 is segmented into a plurality of sections (the base units 620) in its lengthwise direction and respective flow channels 64a are formed to respective sections. By this configuration, it becomes possible to adjust the temperature of the entire road surface 63a more evenly.

Next, a load detecting part 65 will be described. the load detecting part 65 is a configuration that is capable to detect distribution of load that act on a tire tread.

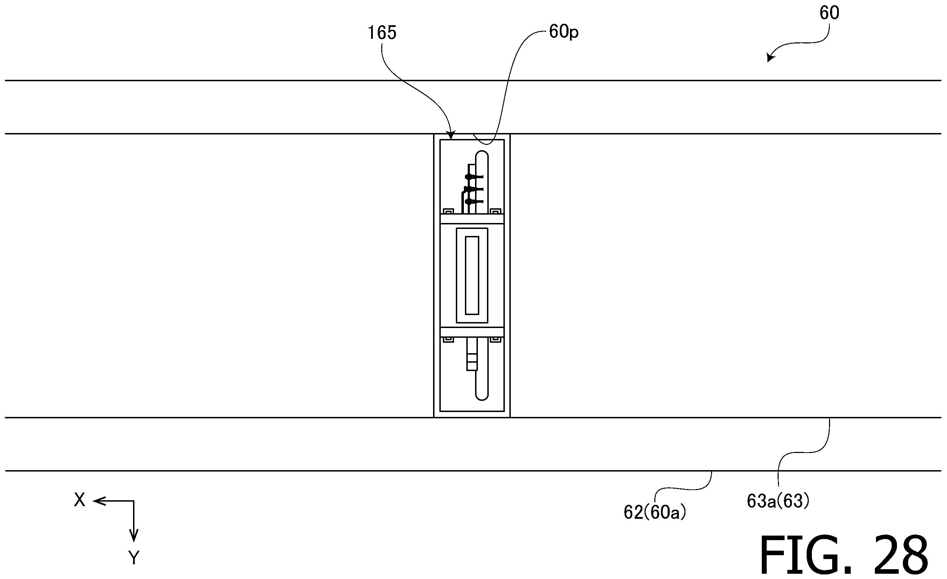

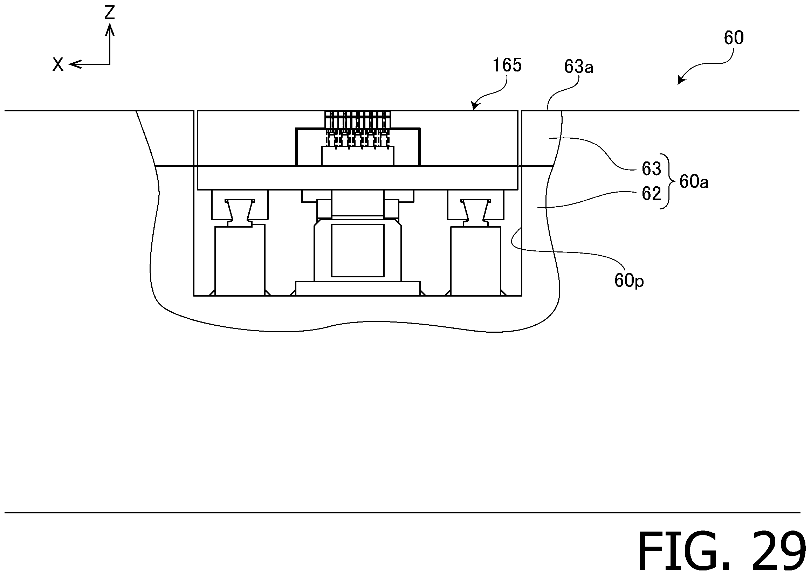

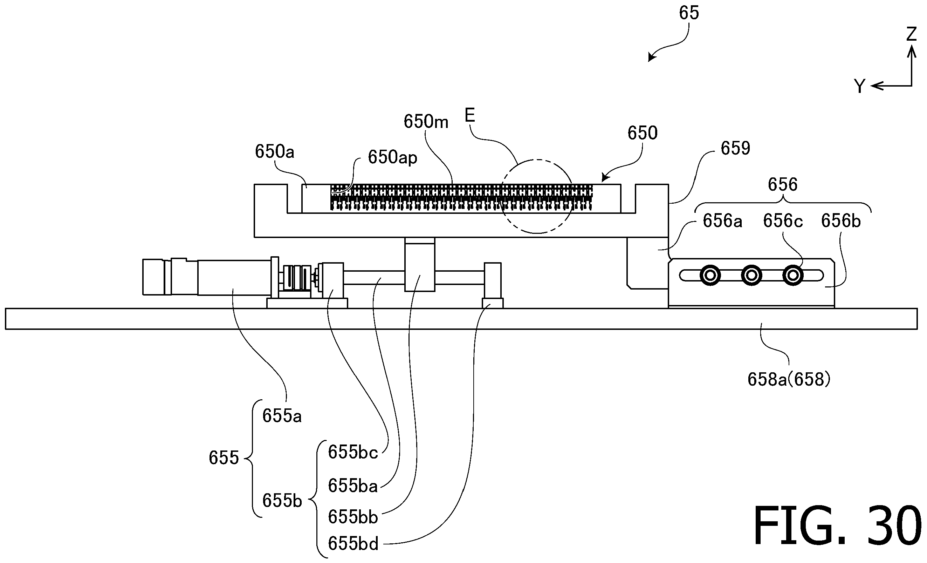

FIGS. 28 and 29 are a plan view and a left side view of and around the load detecting part 65 of the road surface part 60, respectively. FIGS. 30 to 32 are a front view, a left side view and a plan view of the load detecting part 65, respectively.

As shown in FIGS. 28 and 29, on an upper surface of the main body part 60a of the road surface part 60, a recessed part 60p elongated in the Y-axis direction is formed. The load detecting part 65 is accommodated inside the recessed part 60p and is fixed to the bottom of the recessed part 60p.

As shown in FIGS. 30 to 32, the load detecting part 65 includes a fixed frame 658, a movable frame 659, a pair of linear guides 654, a sensor array unit 650, a moving unit 655, and a sensor position detecting part 656. In Fig. 30, the linear guides 654 and rail supporting parts 658b of the fixed frame 658 which will be described later are omitted. The movable frame 659 is supported by the pair of linear guides 654 to be movable in the Y-axis direction (i.e., in a widthwise direction of the road surface part 60). The sensor array unit 650 is attached on an upper surface of the movable frame 659. Details of the sensor array unit 650 will be described later.

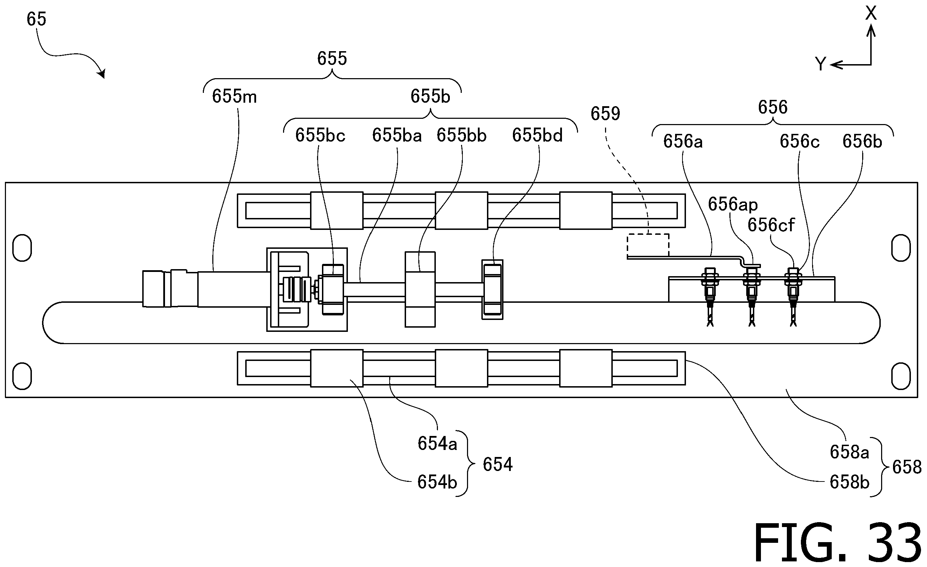

FIG. 33 is a plan view showing the load detecting part 65 in a state where the movable part (i.e., the movable frame 659 and the sensor array unit 650) is removed.

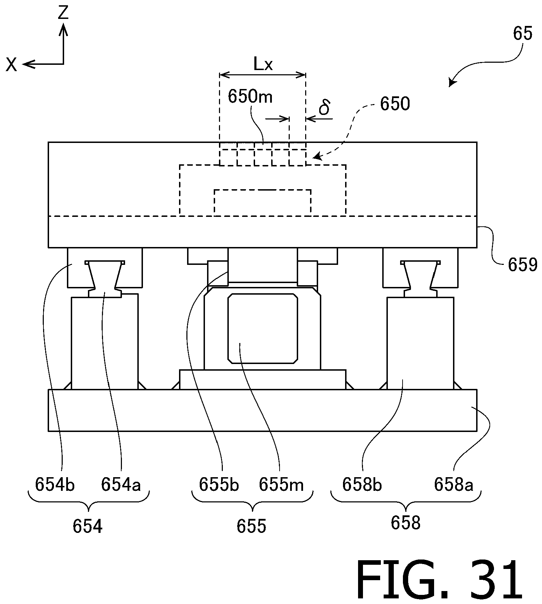

As shown in FIGS. 31 and 33, the fixed frame 658 includes a substantially rectangular base plate 658a, and a pair of rail supporting parts 658b fixed on an upper surface of the base plate 658a. The pair of rail supporting parts 658b are arranged in the X-axis direction with an interval therebetween while orienting their lengthwise directions in the Y-axis direction.

The linear guide 654 includes a rail 654a extending in the Y-axis direction, and a plurality of (in the present embodiment, three) carriages 654b (hereinafter referred to as "runners 654b") capable of travelling on the rail 654a. The rail 654a is attached on an upper surface of the rail supporting part 658b. The runners 654b are attached on a lower surface of the movable frame 659. The movement of the movable frame 659 in the Y-axis direction is guided by the linear guides 654.

The moving unit 655 is disposed between the pair of rail supporting parts 658b and the linear guides 654. The moving unit 655 includes a motor 655m and a ball screw 655b. The ball screw 655b includes a screw shaft 655ba, a nut 655bb, a bearing part 655bc, and a bearing part 655bd. The motor 655m of the present embodiment is a servo motor, but another type of motor of which operation amount can be controlled may be used as the motor 655m.

The screw shaft 655ba is rotatably supported by a pair of the bearing parts 655bc and 655bd at both ends of the screw shaft 655ba. One end of the screw shaft 655ba is connected to a shaft of the motor 655m. The nut 655bb engaging with the screw shaft 655ba is attached on the lower surface of the movable frame 659. As the screw shaft 655ba is rotated by the motor 655m, the movable frame 659 and the sensor array unit 650 moves in the Y-axis direction together with the nut 655bb. That is, a position of the sensor array unit 650 in the Y-axis direction can be changed by rotationally driving the motor 655m.

As shown in FIG. 33, the sensor position detecting part 656 includes a movable arm 656a, a plurality of (in the present embodiment, three) proximity sensors 656c, and a sensor attaching part 656b. An end portion of the movable arm 656a is fixed to the movable frame 659 and the movable arm 656a is movable in the Y-axis direction together with the movable frame 659. The sensor attaching part 656b is attached to the fixed frame 658.

The plurality of proximity sensors 656c are arranged in the Y-axis direction with intervals (e.g., at constant intervals) while orienting their detecting surfaces 656cf in the X-axis positive direction, and are attached to the sensor attaching part 656b.

At a tip portion of the movable arm 656a, a proximity part 656ap adjacent to the proximity sensors 656c are formed. In the present embodiment, the proximity part 656ap is formed by bending the tip portion of the movable arm 656a in a crank shape. The proximity part 656ap is disposed at the same height as the detecting surfaces 656cf of the plurality of proximity sensors 656c. The detecting surfaces 656cf of the plurality of proximity sensors 656c are arranged within a movable range of the proximity part 656ap in the Y-axis direction with intervals therebetween.

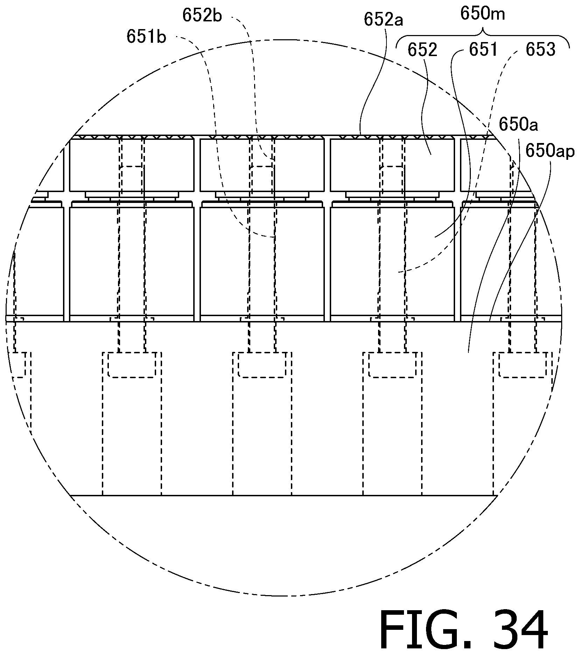

FIG. 34 is an enlarged view of an area E surrounded by a chain double-dashed line in FIG. 30. As shown in FIGS. 30 and 34, the sensor array unit 650 includes a frame 650a and a plurality of (in the present embodiment, 150) load detecting modules 650m. At the central part of an upper surface of the frame 650a, a recessed part 650ap long in the Y-axis direction is formed. The plurality of load detecting modules 650m are accommodated in the recessed part 650ap and are fixed to the bottom of the recessed part 650ap.

The plurality of load detecting modules 650m are arranged in the X-axis direction and the Y-axis direction at lattice points at constant intervals (e.g., with substantially no gap therebetween). In the present embodiment, 150 load detecting modules 650m are arranged in 5 rows in the X-axis direction and 30 rows in the Y-axis direction.

The load detecting module 650m includes a three component force sensor 651, a pavement part 652, and a bolt 653. The three component force sensor 651 is a columnar piezoelectric element whose center axis is oriented in the Z-axis direction. The pavement part 652 is, for example, a rectangular parallelepiped member formed of the simulated pavement material or pavement material that is the same as the pavement part 63 and having the same length in the X-axis direction and the Y-axis direction. The shapes of the three component force sensor 651 and the pavement part 652 are not limited to these shapes. For example, the three component force sensor 651 may have a rectangular parallelepiped shape, and the pavement part 652 may have a columnar shape.

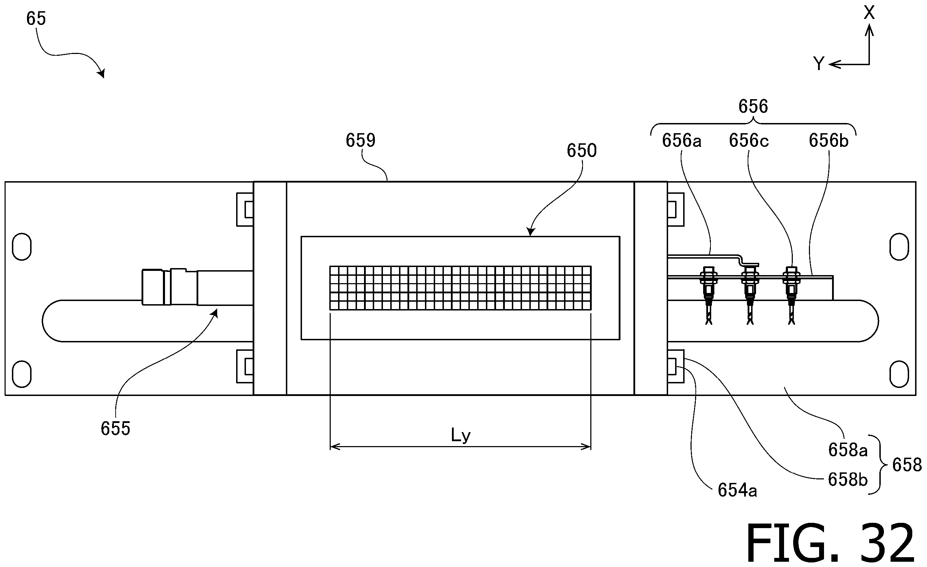

At the center of the cylindrical three component force sensor 651, a hole 651b penetrating in the Z-axis direction is formed. At the center of the pavement part 652, a bolt hole 652b extending in the Z-axis direction is formed. The load detecting module 650m is integrated and fixed to the frame 650a by the bolt 653 inserted through the hole 651b of the three component force sensor 651 and screwed in the bolt hole 652b of the pavement part 652. Upper surfaces of the pavement parts 652 are disposed horizontally at the same height to form a road surface 652a. An area in the X-axis direction and the Y-axis direction where the load detecting modules 650m are arranged is a detecting area of the sensor array unit 650. A width (i.e., a length in the Y-axis direction) Ly (FIG. 32) of the detecting area of the sensor array unit 650 is sufficiently wider than a tread width of the test tire T so that the entire tread width of the test tire T can contact the road surface 652a.

Temporal changes of the following three forces $f_R$, $f_T$ and $f_L$ that act on the road surface 652a of each load detecting module 650m (i.e., on the tire tread) are detected by the three component force sensor 651.

a) radial force $f_R$
b) tangential force fr
c) lateral force $f_L$

It is possible to detect distribution and temporal change of force that the road surface receives from the tire tread of the test tire T (i.e., force that acts on the tire tread) by using the load detecting part 65.

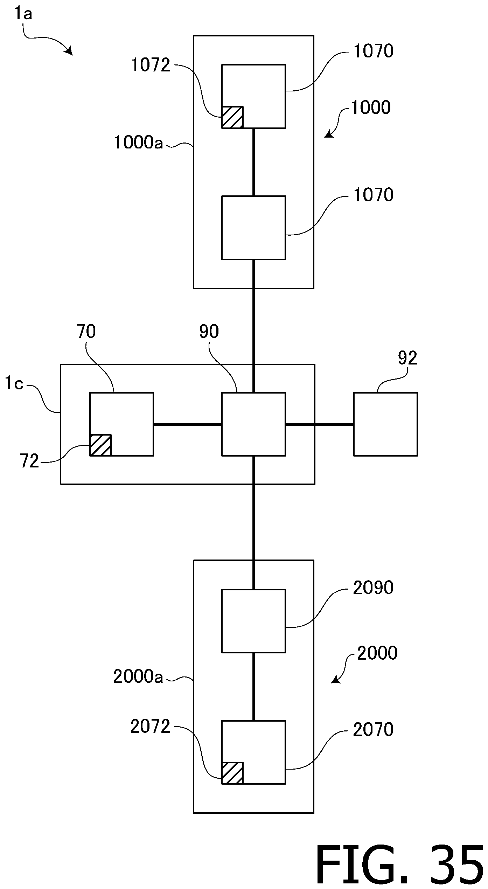

FIG. 35 is a block diagram showing a schematic configuration of a control system 1a of the tire testing system 1. The control system 1a includes a central control device 1c that calculates a corrected $\mu$-S characteristic which will be described later, a control system 1000a that controls the flat-type tire testing device 1000, and a control system 2000a that controls the drum-type tire testing device 2000. The central control device 1c includes a controller 70 (computer) having a storage device 72, and an interface part 90 that performs input from and output to the outside. For example, a personal computer, a PCL (Programmable Logic Controller), or a portable information terminal such as a smartphone is used as the central control device 1c. The control system 1a of the present embodiment includes three controllers 70, 1070, and 2070, but two or more of these controllers may be integrated. In this case, interface parts 90, 1090, and 2090 which will be described later corresponding to the controllers 70, 1070, and 2070 to be integrated are also integrated.

The interface part 90 includes, for example, one or more of a user interface for input by and output to a user, a network interface for connection to various types of networks such as a LAN (Local Area Network), and various types of communication interfaces such as a USB (Universal Serial Bus) and a GPIB (General Purpose Interface Bus) for connection to external devices. The user interface includes, for example, one or more of various types of operation switches, indicators, various types of display devices such as an LCD (Liquid Crystal Display), various types of pointing devices such as a mouse and a touch panel, and various types of input/output devices such as a touch screen, a video camera, a printer, a scanner, a buzzer, a speaker, a microphone and a memory card reader/writer.

The central control device 1c is connected to the control systems 1000a and 2000a via, for example, a network such as a LAN or a bus such as a USB. The operations of the flat-type tire testing device 1000 and the drum-type tire testing device 2000 can be controlled based on instructions from the controller 70 of the central control device 1c. Test results obtained using the flat-type tire testing device 1000 or the drum-type tire testing device 2000 are transmitted to the central control device 1c or stored in a network storage such as a server 92 or a NAS (Network Attached Storage).

FIG. 36 is a block diagram showing a schematic configuration of the control system 1000a of the flat-type tire testing device 1000. The control system 1000a includes the controller 1070 (computer) that controls operations of the entire flat-type tire testing device 1000, a measurement part 1080 that performs various measurements, and an interface part 1090 that performs input from and output to the outside.

The motors 141 of respective drive parts 14, the motor 32 of the torque generating part 30, the motor 431 of the load adjusting part 42, the motors 451 of the camber angle adjusting part 44, the motors 471 of the slip angle adjusting part 46, and the motor 655m of the moving unit 655 are connected to the controller 1070 via drivers 141a, 32a, 431a, 451a, 471a, and 655a, respectively. The temperature adjusting device 64c is connected to the controller 1070.

The controller 1070 and each of the drivers 141a, 32a, 431a, 451a, and 471a are communicably connected to each other through an optical fiber, and high-speed feedback control can be performed between the controller 1070 and each of the drivers. This enables synchronous control with higher accuracy (higher resolution and higher accuracy on the time axis).

The six component force sensor 54 of the spindle part 50, the three component force sensors 651 of the load detecting part 65, and the proximity sensors 656c of the sensor position detecting part 656 are connected to the measurement part 1080 via amplifiers 54a, 651a, and 656ca, respectively. Signals from the six component force sensor 54, the three component force sensors 651, and the proximity sensors 656c are amplified by the amplifiers 54a, 651a, and 656ca, respectively, and are then converted into digital signals in the measurement part 1080, thereby generating measurement data. The measurement data is input to the controller 1070. In FIG. 36, only one of the three component force sensors 651, only one of the amplifiers 651a, only one of the proximity sensors 656c, and only one of the amplifiers 656ca are shown.

Pieces of phase information detected by built-in rotary encoders RE of the motors 141, 32, 431, 451, 471, and 655m are input to the controller 1070 via the drivers 141a, 32a, 451a, 471a, and 655a, respectively.

Since a configuration of the interface part 1090 is the same as that of the interface part 90 of the control system 1a described above, redundant description is omitted.

The controller 1070 synchronously controls driving of the motors 141 of the drive parts 14 based on speed setting data input through the interface part 76, thereby allowing the carriage 20 to travel at a predetermined speed. In the present embodiment, all of the four drive parts 14 are driven in the same phase (more precisely, the drive parts 14LA and 14LB on the left side and the drive parts 14RA and 14RB on the right side are driven in opposite phases [in opposite rotating directions]).

The controller 1070 can apply a predetermined longitudinal force to the test tire T by controlling driving of the motor 32 of the torque generating part 30 based on longitudinal force (braking force or driving force) setting data to be applied to the test tire T obtained through the interface part 76. The controller 1070 can also apply a predetermined torque to the test wheel W by controlling the torque generating part 30 based on torque setting data (or acceleration setting data) in place of the longitudinal force setting data.

The controller 1070 can execute the control of the drive parts 14 for causing the carriage 20 to travel in a predetermined travelling speed (and, at the same time, causing the test tire T to rotate in a peripheral speed that is substantially the same as the travelling speed) and the control of the torque generating part 30 for applying the longitudinal force (or the torque) to the test tire T synchronously based on a synchronizing signal.

Aside from basic waveforms such as sine wave, half sine wave, sawtooth wave, triangle wave and trapezoid wave, longitudinal force (or torque) waveforms that are measured in on-road tests, longitudinal force (or torque) waveforms that are obtained through simulated calculations, or other arbitrary synthesized waveforms (e.g., waveforms that are generated by a function generator or the like) can be used as waveforms of the torque to be generated by the torque generating part 30.

Similarly, with regard to the control of the travelling speed of the carriage 20 (or the rotating speed of the test wheel W), aside from the basic waveforms, waveforms of rotating speeds of wheels that are measured in on-road tests, waveforms of change of speed that are obtained through simulated calculations, or other arbitrary synthesized waveforms (e.g., waveforms that are generated by a function generator or the like) can be used.

The flat-type tire testing device 1000 of the present embodiment can measure a $\mu$-S characteristic of the test tire T. The $\mu$-S characteristic of a tire refers to a relationship (characteristic) between a degree of slip of the rotating tire (slip ratio S) and a friction coefficient (or braking force coefficient) $\mu$ between the tire and the road surface during braking or driving, and is generally expressed in a graph with the slip ratio S on the horizontal axis and the friction coefficient $\mu$ on the vertical axis.

The friction coefficient $\mu$ is a value of a ratio between a friction force acting between a road surface and a contact surface of the tire and a load (vertical load) acting perpendicularly to the road surface and the contact surface of the tire (i.e., a value obtained by dividing the friction force by the load). The braking force coefficient $\mu$ is a value obtained by dividing the braking force by the load acting on the tire. In the tire test, the braking force coefficient $\mu$ is often measured instead of the friction coefficient $\mu$. The $\mu$-S characteristic of the tire varies depending on the type of the tire, a traveling speed, a condition (dry, wet, etc.) or property of the road surface, and so on.

An example of a method for measuring the $\mu$-S characteristic will be described below. In this measurement method, measurement is performed a plurality of times while changing the traveling speed, and the $\mu$-S characteristic is obtained for a plurality of different traveling speeds. The following measurement and recording of the $\mu$-S characteristics are performed by the controller 1070 executing a program stored in the storage device 1072 of the controller 1070 shown in FIG. 36 (or other storing means accessible by the controller 1070 such as a server 1092 connected to the controller 1070 via a network such as a LAN, for example), and the measurement results and the like are stored in the storage device 1072 or other storing means.

The slip ratio S can be calculated by the following formula (1):

$$\text{Slip ratio S} = (\text{vehicle speed - wheel peripheral speed}) \div \text{vehicle speed} \times 100\% \quad (1)$$

The vehicle speed is the traveling speed of a vehicle (i.e., a moving speed of a center of gravity of the vehicle), and corresponds to the traveling speed of the carriage 20 in the flat-type tire testing device 1000 of the present embodiment. The wheel peripheral speed is a speed in a tangential direction on an outer peripheral surface of the wheel (i.e., a surface of the tread of the tire), and corresponds to a peripheral speed of the test wheel W in the flat-type tire testing device 1000 of the present embodiment.

When the slip ratio is 0%, the vehicle speed and the wheel peripheral speed are equal, the vehicle is traveling at a speed corresponding to a rotation speed of the wheel, and there is no slip, rotation loss, or the like. On the other hand, when the slip ratio is 100%, the wheel peripheral speed = 0, which represents a state where the vehicle travels while slipping (more precisely, the tire is slipping on the road surface) even though the wheel is completely locked (i.e., the rotation is stopped).

When measuring the $\mu$-S characteristic with the flat-type tire testing device 1000 of the present embodiment, the $\mu$-S characteristic can be measured with the following procedure.

First, a predetermined initialization process is performed to set the flat-type tire testing device 1000 to the initial state. As shown in FIG. 1, in the initial state, the carriage 20 is positioned at an initial position (initial traveling position) $P_{X0}$ which is set near an end in the X-axis negative direction of its movable range. The elevating frame 421 (FIG. 20) is positioned at an initial position $P_{Z0}$ which is set near, for example, an upper end of its movable range. At the initial position $P_{Z0}$, the test wheel W floats from the road surface 63a, so that the test wheel W can be attached and detached and the alignment can be adjusted. The camber angle adjusting part 44 and the slip angle adjusting part 46 adjust the camber angle and the slip angle to set values, respectively. Then, the traveling speed at which the $\mu$-S characteristic is to be measured first is set. For example, when measuring the μ-S characteristic at a speed of 5km/h, a value of 5km/h is set in a predetermined memory or the like as the set value of the traveling speed.

Then, the test wheel W is lowered by the load adjusting part 42 and the test wheel W touches the road surface 63a, and a set load is applied to the test wheel W.

Then, the motor 141 of each drive part 14 is driven, the carriage 20 travels at the set traveling speed, that is, at a speed of 5km/h, and the test wheel W rotates at a peripheral speed substantially the same as the traveling speed of the carriage 20. At this time, since the vehicle speed is nearly equal to the peripheral speed of the wheels, the slip ratio S is nearly equal to 0%. Even in a state where the motor 32 of the torque generating part 30 is in a stopped state, the peripheral speed of the test wheel W does not sufficiently coincide with the traveling speed of the carriage 20, and a non-negligible torque may be generated due to the speed difference between the two speeds. In such a case, for example, by setting a target value of the torque of the test wheel W to 0N·m and controlling a torque of the motor 32 of the torque generating part 30, the slip ratio can be made substantially 0%.

Then, the motor 32 of the torque generating part 30 is driven, and the set torque is applied to the test wheel W. While the carriage 20 is traveling at the set traveling speed, the three component force sensor 651 of the load detecting part 65 and the six component force sensor 54 of the spindle part 50 detect forces acting on the road surface 652a and the test wheel W, respectively, at predetermined time intervals (e.g., at intervals of 5 milliseconds). The time intervals of the detections by the three component force sensor 651 and the six component force sensor 54 are appropriately set according to the test conditions (e.g., the traveling speed of the carriage 20 and a required test accuracy).

The torque applied to the test wheel W by the torque generating part 30 is controlled such that a predetermined torque is applied while the carriage 20 travels at the set traveling speed. For example, while causing the carriage 20 to travel at the set traveling speed, control is performed so that the test starts in a state where the torque is nearly equal to 0N·m, that is, the vehicle speed is nearly equal to the wheel peripheral speed and the slip ratio S is nearly equal to 0%, the torque is gradually increased, and after an elapse of a predetermined time, a torque that causes the test wheel W to be completely locked (i.e., the wheel peripheral speed to be 0km/h, and the slip ratio S to be 100%) is applied.

As described above, while gradually increasing the torque so that the slip ratio S changes from 0% to 100%, the measured values by the various sensors provided in the flat-type tire testing device 1000 of the present embodiment are recorded at predetermined time intervals (e.g., at intervals of 5 milliseconds). The vehicle speed is calculated from the detection results of the rotary encoders RE of the motors 141 of the drive parts 14, and the wheel peripheral speed is calculated from the detection result of the rotary encoder 38 of the torque generating part 30 and the rotary encoder RE of the motor 32. As a result, values of the braking force coefficient μ and the slip ratio S at the respective measurement timings are measured at predetermined time intervals, and the μ-S characteristic at the initially set traveling speed of the carriage 20 (e.g., 5km/h) is measured.

A time required to change the slip ratio S from 0% to 100% (test time) can be determined from a balance between the length of the road surface part 60 and the set value of the traveling speed of the carriage 20. For example, the torque can be controlled so that the slip ratio S changes from 0% to 100% within a period of time during which the carriage 20 can travel on the road surface 63a at a predetermined traveling speed, while excluding a length of the road surface part 60 required to accelerate or decelerate the carriage 20 to the predetermined traveling speed. The predetermined time intervals at which the various sensors of the flat-type tire testing device 1000 of the present embodiment detect the measured values can also be determined in accordance with the predetermined time required for changing the slip ratio S, the set value of the traveling speed of the carriage 20, or the required resolution on the time axis.

As described above, the flat-type tire testing device 1000 of the present embodiment is used to measure the μ-S characteristic at the traveling speed (e.g., 5km/h) of the carriage 20 which is initially set. When the measurement of the μ-S characteristic at a certain set speed (i.e., the set value of the traveling speed) is completed, the test wheel W is lifted from the road surface 63a, and the carriage 20 is again positioned at the initial position (initial traveling position) $P_{X0}$ that is set near the end of the movable range in the X-axis negative direction to prepare for the measurement at the next set speed. By changing the set speed and repeating the above measurement, it is possible to sequentially measure the μ-S characteristic at a plurality of set speeds.

For example, it is possible to prepare a memory area CTM for counting in the storage device 1072, perform counting by incrementing the CTM from 1 in order, set a set speed according to a value of the CTM (e.g., CTM×5km/h), and measure the μ-S characteristic at the set speed. With this configuration, it is possible to sequentially measure the μ-S characteristic at each set speed while gradually increasing the set speed for the same test tire T, such as the μ-S characteristic at 5km/h (CTM=1), the μ-S characteristic at 10km/h (CTM=2), the μ-S characteristic at 15km/h (CTM=3), and so on. It should be noted that the test tire T may be replaced with a new one each time the value of the CTM (i.e., the set speed) is changed.

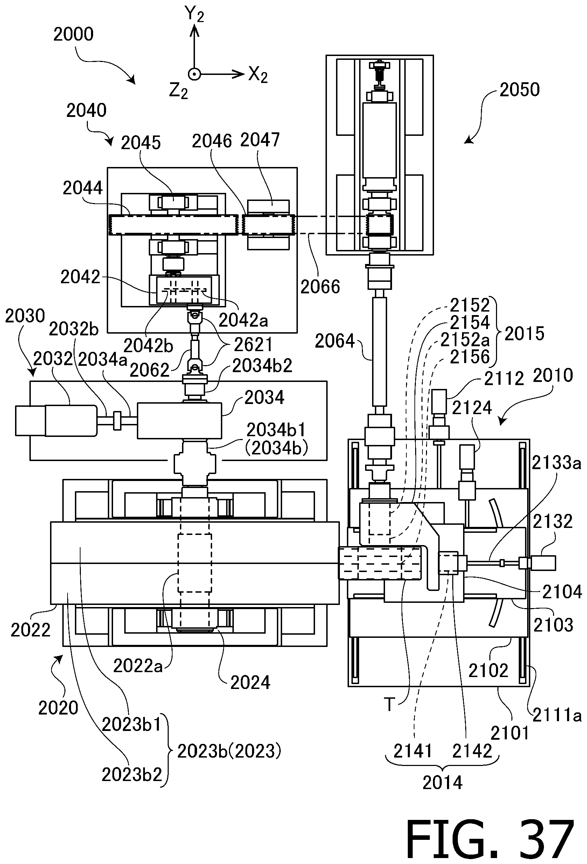

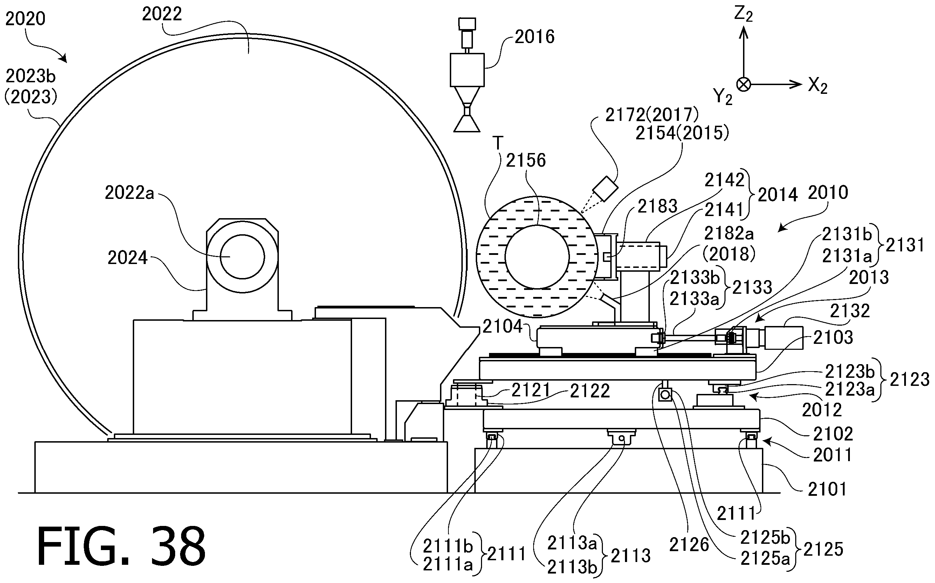

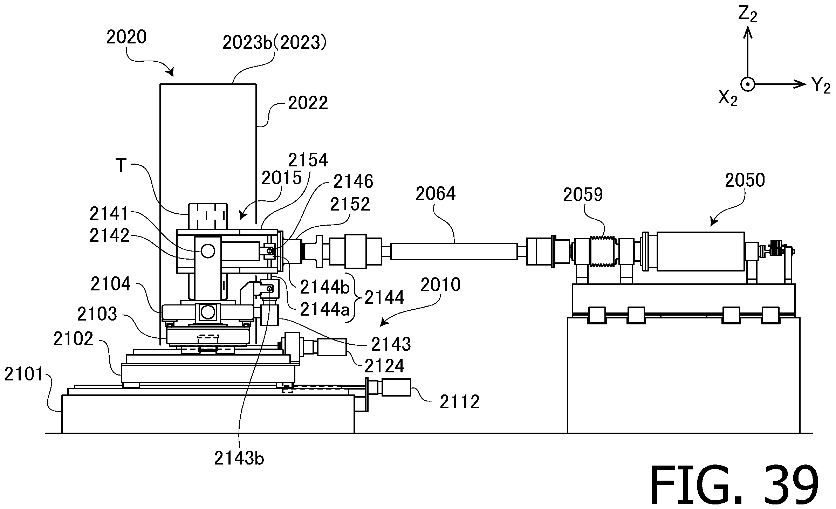

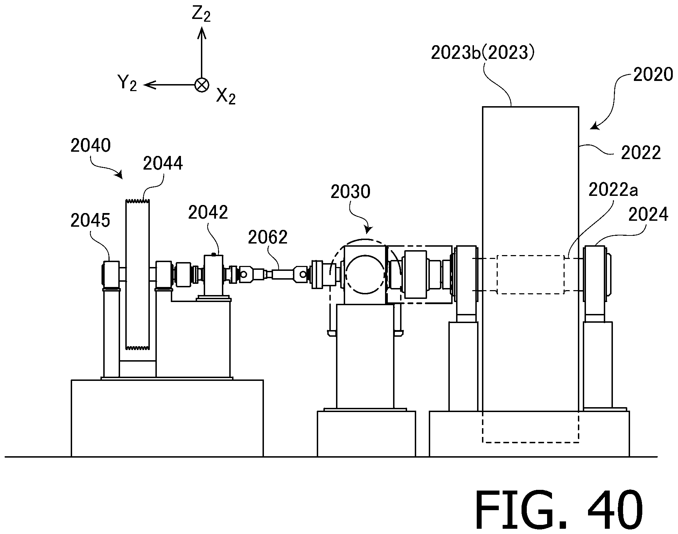

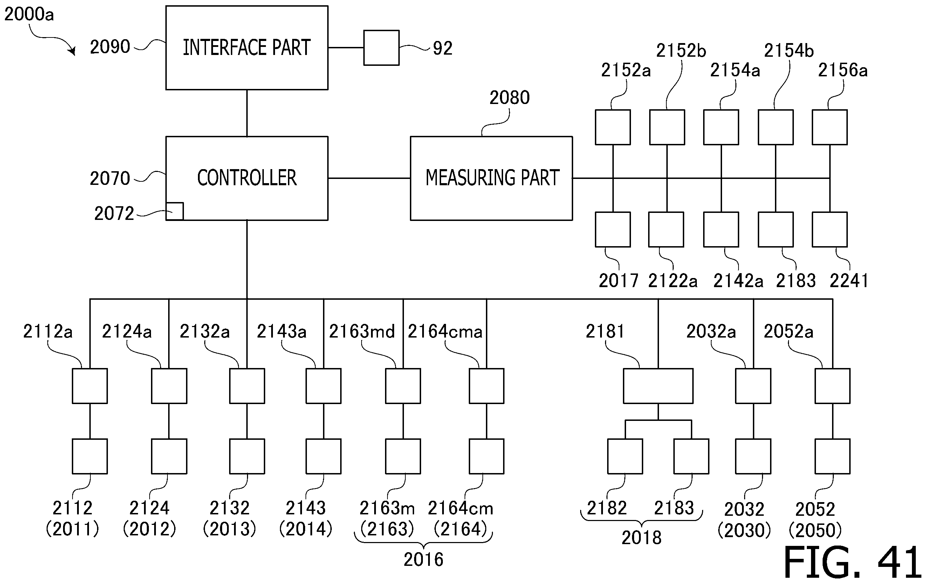

Next, a drum-type tire testing device 2000 according to an embodiment of the present invention will be described. FIGS. 37 to 40 are a plan view, a front view, a right side view, and a left side view, respectively, of the drum-type tire testing device 2000 according to an embodiment of the present invention. For convenience of description, a part of the drum-type tire testing device 2000 is not shown in FIGS. 38 to 40. FIG. 41 is a block diagram showing a schematic configuration of a control system 2000a of the drum-type tire testing device 2000.

In the following description, as shown by coordinates in FIG. 37, a direction from left to right in FIG. 37 is defined as an $X_2$-axis direction, a direction from bottom to top in FIG. 37 is defined as a $Y_2$-axis direction, and a direction perpendicular to the paper surface and from back to front in FIG. 37 is defined as a Zz-axis direction. The $X_2$-axis direction and the Yz-axis direction are horizontal directions orthogonal to each other, and the $Z_2$-axis direction is a vertical direction.

The drum-type tire testing device 2000 is a device capable of performing a bench test of a tire for causing a test tire T to wear under conditions close to the actual running test by causing a rotating drum 2022 and the test tire T to rotate for a predetermined period of time (e.g., 24 hours) in a state where the test tire T is brought into contact with a road surface 2023b provided on the outer periphery of the rotating drum 2022. The drum-type tire testing device 2000 of the present embodiment achieves high energy utilization efficiency by the adoption of an electric motor and a power circulation system in the drive system. Furthermore, by adopting a torque generating part 2050 (torque applying part) described later, it is possible to independently perform rotation control and torque control by providing dedicated motors for the two functions, namely, rotary driving and torque applying, respectively. This makes it possible to perform torque control with a high degree of freedom and high accuracy, as well as to reduce capacities of the electric motor to thereby downsize the testing device and reduce power consumption. Furthermore, by using an ultra-low inertia servo motor excellent in acceleration performance in the torque generating part 2050, it is possible to accurately reproduce torque fluctuations having a high frequency component at the time of sudden start and sudden braking.

The drum-type tire testing device 2000 includes a tire holding part 2010 that holds the test tire T, a moving road surface part 2020 having the road surface 2023b with which the test tire T comes into contact, a rotation drive part 2030 that rotationally drives a power circulation circuit, a torque generating part 2050 that generates braking force and driving force to be applied to the test tire T, and a relay part 2040 that relays power transmission from the rotation drive part 2030 to the torque generating part 2050. The drum-type tire testing device 2000 includes a first coupling means (drive shaft 2062) that couples the rotation drive part 2030 and the relay part 2040, a second coupling means (V-belt 2066) that couples the relay part 2040 and the torque generating part 2050, and a third coupling means (constant-velocity joint 2064) that couples the torque generating part 2050 and the tire holding part 2010 (spindle 2152). The moving road surface part 2020, the rotation drive part 2030, the relay part 2040, the torque generating part 2050, and a later-described spindle part 2015 of the tire holding part 2010 are annularly coupled via the test tire T to form a power circulation circuit.

In the present embodiment, the rotating drum 2022 is disposed with its rotation axis oriented in the $Y_2$-axis direction, but the rotating drum 2022 may be disposed with its rotation axis oriented, for example, in the $X_2$-axis direction, the $Z_2$-axis direction, or an intermediate direction therebetween (e.g., a direction forming an angle of 45 ° with the $X_2$-axis and the $Z_2$-axis). In this case, the orientation and arrangement of the other parts of the drum-type tire testing device 2000 are also changed in accordance with the orientation of the rotating drum 2022.

As shown in FIG. 41, the control system 2000a of the drum-type tire testing device 2000 includes a controller 2070 (computer) that controls operations of the entire drum-type tire testing device 2000, a measuring part 2080 that performs various measurements based on signals from various sensors provided in the drum-type tire testing device 2000, and an interface part 2090 that performs input and output to and from the outside.

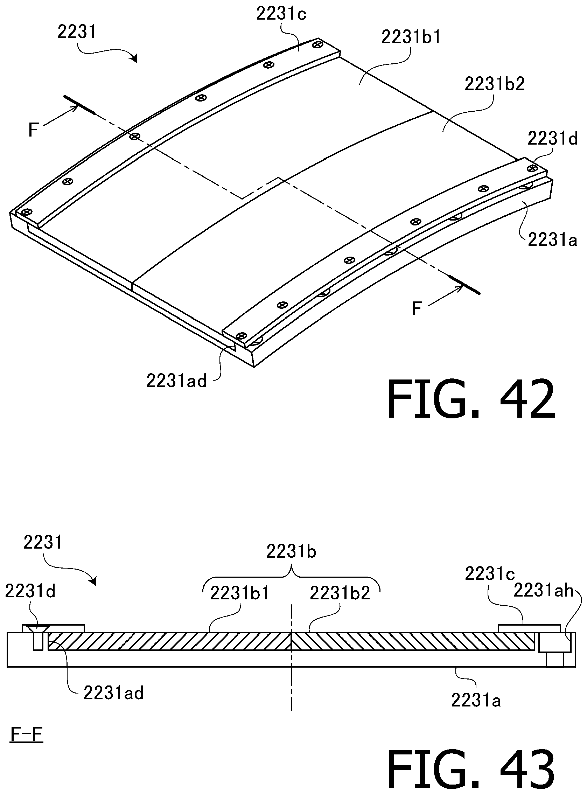

As shown in FIGS. 37 to 40, the moving road surface part 2020 includes the rotating drum 2022, the road surface part 2023 provided on an outer peripheral portion of the rotating drum 2022, and a bearing part 2024 that rotatably supports a shaft 2022a of the rotating drum 2022. The bearing part 2024 includes a rotary encoder 2241 (FIG. 41) that detects a rotation speed of the rotating drum 2022. The road surface part 2023 of the present embodiment is formed by a plurality of road surface units 2231 (FIGS. 42 and 43) arranged on an outer periphery of the rotating drum 2022 without a gap in a circumferential direction.

FIG. 42 is a perspective view of the road surface unit 2231 to be attached to the outer periphery of the rotating drum 2022. FIG. 43 is a cross-sectional view of the road surface unit 2231 cut along a cut plane H-H shown in FIG. 42. The road surface unit 2231 includes a frame 2231a, a road surface body 2231b (223b1, 2231b2) fitted into a recess 2231ad formed on a surface of the frame 2231a, and a pair of pressing plates 2231c on the left and right that sandwich the road surface body 2231b with the frame 2231a and fix the road surface body 2231b to the frame 2231a. The pressing plates 2231c are removably fixed to the frame 2231a by a plurality of countersunk head screws 2231d. A plurality of through holes 2231ah through which bolts for fixing the road surface unit 2231 to the rotating drum 2022 pass are formed at both end portions of the frame 2231a in the width direction (lateral direction in FIG. 43).

The road surface 2023b is formed by surfaces of a plurality of road surface bodies 2231b arranged in the circumferential direction. The road surface body 2231b of the present embodiment is composed of two portions (a first portion 2231b1 on the left half and a second portion 2231b2 on the right half in FIG. 43) formed of materials different from each other and extending in the circumferential direction. The first portion 2231b1 forms a first travel lane 2023b1 which will be described later, and the second portion 2231b2 forms a second travel lane 2023b2.

The entire road surface body 2231b may be uniformly formed of a single material. The road surface body 2231b of the present embodiment is formed in a cylindrical shape having a smooth surface but, for example, a thickness of the road surface body 2231b may be periodically or randomly changed in the circumferential direction (or in both the circumferential direction and the width direction) to provide unevenness in the circumferential direction (or in both the circumferential direction and the width direction) on the surface.

In the present embodiment, the road surface body 2231b formed in advance is attached to the frame 2231a by the pressing plate 2231c, but the road surface body 2231b may be provided with through holes through which bolts for fixing to the frame 2231a pass, and the road surface body 2231b may be directly attached to the frame 2231a by the bolts. The road surface body 2231b may alternatively be fixed to a surface of the road surface unit 2231 by filling the recess 2231ad with a material having plasticity such as concrete or a curable resin and curing the material.

The road surface body 2231b is a member obtained by adding a binder containing a curable resin, such as a urethane resin or an epoxy resin, to an aggregate obtained by pulverizing (and polishing as necessary) a ceramic having excellent wear resistance, such as silicon carbide or alumina, and then molding and curing the resulting mixture.

In the present embodiment, the road surface 2023b is divided into two travel lanes in an axial direction of the rotating drum 2022 (the first travel lane 2023b 1 and the second travel lane 2023b2) (width direction). In the present embodiment, two travel lanes are formed on the road surface 2023b, but a single or three or more travel lanes may be formed. The two travel lanes 2023b1 and 2023b2 of the road surface 2023b are formed by changing the particle size and amount of aggregates used. The first travel lane 2023b1 on the right side when facing the traveling direction is a simulated road surface simulating a smooth road surface such as an asphalt paved road surface, and the second travel lane 2023b2 on the left side is a simulated road surface simulating a rough road surface such as a stone pavement. The road surface conditions can be changed by switching the travel lanes 2023b 1 and 2023b2 of the road surface 2023b on which to make the test tire T to contact. The switching of the travel lanes is performed by a later-described traverse mechanism 2011 (travel lane switching mechanism) of the tire holding part 2010.

The rotation drive part 2030 includes a motor 2032, and a power coupling part 2034 that couples power output from the motor 2032 to the power circulation circuit. The motor 2032 is, for example, an inverter motor of which driving is controlled by an inverter circuit 2032a (FIG. 41). A shaft 2032b of the motor 2032 is coupled to an input shaft 2034a of the power coupling part 2034. One end 2034b 1 of the output shaft 2034b of the power coupling part 2034 is coupled to the shaft 2022a of the rotating drum 2022, and the other end 2034b2 of the output shaft 2034b is coupled to one end of the drive shaft 2062. The output shaft 2034b of the power coupling part 2034 constitutes a part of the power circulation circuit, and the output shaft of the motor 2032 is coupled to the power circulation circuit via the power coupling part 2034. That is, the motor 2032 rotationally drives the power circulation circuit to control a rotation speed of the power circulation circuit.

The relay part 2040 includes a gear box 2042, a drive pulley 2044, a bearing part 10045 that rotatably supports a shaft of the drive pulley 2044, a tension pulley 2046 that applies a predetermined tension to the V belt 2066 wound around the drive pulley 2044, and a bearing part 2047 that rotatably supports a shaft of the tension pulley 2046.

The gear box 2042 includes a first gear 2042a coupled to the other end of the drive shaft 2062, and a second gear 2042b meshed with the first gear 2042a. The second gear 2042b is coupled to the shaft of the drive pulley 2044. In the present embodiment, since the number of teeth of the first gear 2042a is the same as the number of teeth of the second gear 2042b, the gear box 2042 converts rotation input from the drive shaft 2062 into rotation of the same speed in the opposite direction, and transmits the rotation to the drive pulley 2044.

The first gear 2042a and the second gear 2042b are replaceable with gears having different numbers of teeth (diameters). For example, the rotation speed may be increased or decreased by the gear box 2042 by providing a difference in the number of teeth between the first gear 2042a and the second gear 2042b. In order to make it possible to change the numbers of teeth of the first gear 2042a and the second gear 2042b, a distance between rotation shafts of the first gear 2042a and the second gear 2042b is made changeable. Specifically, a position of the rotation shaft of the second gear 2042b is fixed, and a position of the rotation shaft of the first gear 2042a is movable laterally (in a direction to change a distance from the second gear 2042b, that is, the $X_2$-axis direction). When changing the number of teeth of each gear, the position of the rotation shaft of the first gear 2042a is moved laterally to adjust the meshing with the second gear 2042b. The rotation drive part 2030 (specifically, the other end 2034b2 of the output shaft 2034b of the power coupling part 2034) and the first gear 2042a are connected by the drive shaft 2062 (or a sliding constant velocity joint) provided with universal joints 2621 at both ends and having a variable length. Therefore, even if the first gear 2042a moves laterally, distortion does not occur in the drive shaft 2062 and the first gear 2042a, and smooth rotation of the power circulation circuit is maintained.

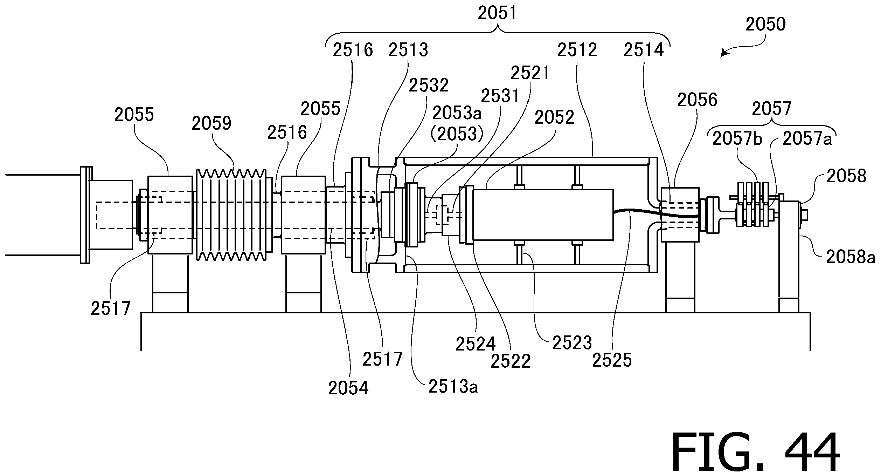

FIG. 44 is a longitudinal cross-sectional view of a torque generating part 2050 (torque generating device). The torque generating part 2050 includes an outer cylinder 2051 (case), a servo motor 2052, speed reducer 2053 and shaft 2054 provided inside the outer cylinder 2051, three bearing parts 2055, 2055, and 2056 that rotatably support the outer cylinder 2051, a slip ring part 2057 (a slip ring 2057a and a brush 2057b), a bearing part 2058 that rotatably supports the slip ring 2057a, and a driven pulley 2059.

In the present embodiment, the servo motor 2052 is an ultra-low inertia high output type AC servo motor of which inertia moment of a rotating part is 0.01kg·$m^2$ or less and the rated output is 7kW to 37kW. As shown in FIG. 41, the servo motor 2052 is connected to the controller 2070 via a servo amplifier 2052a.

The outer cylinder 2051 has a motor housing part 2512 and a speed reducer holding part 2513 which are substantially cylindrical and have large diameters, and shaft parts 2514 and 2516 which are substantially cylindrical and have small diameters. A shaft part 2514 is coupled coaxially (i.e., such that rotation axes thereof coincide with each other) to one end (the right end in FIG. 44) of the motor housing part 2512. A shaft part 2516 is coaxially coupled to the other end (the left end in FIG. 44) of the motor housing part 2512 via the speed reducer holding part 2513. The shaft part 2514 is rotatably supported by the bearing part 2056, and the shaft part 2516 is rotatably supported by a pair of bearing parts 2055.

The driven pulley 2059 coupled to the shaft part 2516 is disposed between the pair of bearing parts 2055. The outer cylinder 2051 is rotationally driven by the V-belt 2066 (FIG. 37) wound around the driven pulley 2059 and the drive pulley 2044 of the relay part 2040 via the driven pulley 2059.

Bearings 2517 are provided at both end portions of an inner periphery of the shaft part 2516. The shaft 2054 is inserted into a hollow portion of the shaft part 2516, and is rotatably supported by the shaft part 2516 via the pair of bearings 2517. The shaft 2054 passes through the shaft part 2516, and has one end protruding into the speed reducer holding part 2513 and the other end protruding to the outside of the outer cylinder 2051.

The servo motor 2052 is accommodated in a hollow portion of the motor housing part 2512. A shaft 2521 of the servo motor 2052 is disposed coaxially with the motor housing part 2512, and a motor case is fixed to the motor housing part 2512 with a plurality of rods 2523. A flange 2522 of the servo motor 2052 is coupled to a gear case 2053a of the speed reducer 2053 via a connecting cylinder 2524. The gear case 2053a of the speed reducer 2053 is fixed to an inner flange 2513a of the speed reducer holding part 2513.

The shaft 2521 of the servo motor 2052 is connected to an input shaft 2531 of the speed reducer 2053. The shaft 2054 is connected to an output shaft 2532 of the speed reducer 2053. Torque output from the servo motor 2052 is amplified by the speed reducer 2053 and transmitted to the shaft 2054. Rotation of the shaft 2054 is obtained by adding rotation driven by the servo motor 2052 to rotation of the outer cylinder 2051 driven by the motor 2032 of the rotation drive part 2030.

The slip ring 2057a is connected to the shaft part 2514 of the outer cylinder 2051. The brush 2057b in contact with the slip ring 2057a is supported by a fixed frame 2058a of the bearing part 2058. A cable 2525 of the servo motor 2052 is passed through a hollow portion of the shaft part 2514 and connected to the slip ring 2057a. The brush 2057b is connected to the servo amplifier 2052a (FIG. 41). That is, the servo motor 2052 and the servo amplifier 2052a are connected via the slip ring part 2057.

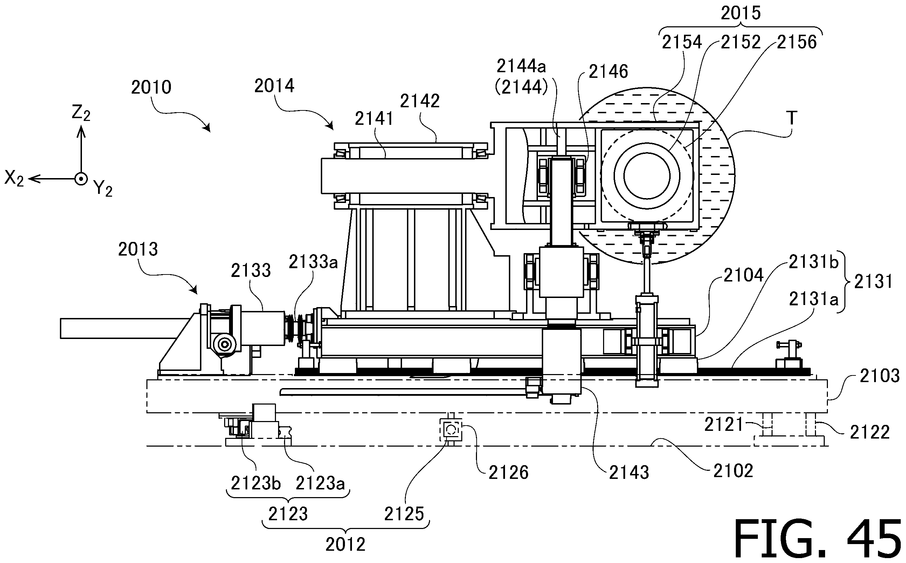

Next, a configuration of the tire holding part 2010 will be described with reference to FIGS. 37 to 39 and FIG. 45. FIG. 45 is a rear view (partial sectional view) of the tire holding part 2010. The tire holding part 2010 is a mechanism that rotatably holds the test tire T while making the test tire T to contact the road surface 2023b with a predetermined alignment and applying a predetermined load. The tire holding part 2010 includes four base plates 2101, 2102, 2103, and 2104 stacked vertically, and the spindle part 2015 that rotatably holds the test tire T. The tire holding part 2010 includes the traverse mechanism 2011, a camber angle adjusting mechanism 2012, a tire load adjusting mechanism 2013, and a slip angle adjusting mechanism 2014 as an alignment mechanism for the test tire T. The alignment mechanism is a mechanism capable of adjusting the alignment of the test tire T with respect to the road surface 2023b by changing a position or orientation of the spindle part 2015.

The traverse mechanism 2011 (travel lane switching mechanism) is a mechanism that moves a position of the test tire T in the axial direction by moving the base plate 2102 in the YY-axis direction with respect to the base plate 2101 to switch the travel lanes 2023b 1 and 2023b2 of the road surface 2023b with which the test tire T is in contact. The traverse mechanism 2011 includes a plurality of linear guides 2111 that guide the base plate 2102 in the axial direction of the rotating drum 2022 (YY-axis direction) with respect to the base plate 2101, a servo motor 2112 that drives the base plate 2102, and a ball screw 2113 (feed screw mechanism) that converts rotational motion of the servo motor 2112 into linear motion in the YY-axis direction. The ball screw 2113 includes a screw shaft 2113a and a nut 2113b.

Each linear guide 2111 includes a rail 2111a, and one or more carriages 2111b that can travel on the rail 2111a via not-shown rolling bodies. The rail 2111a of the linear guide 2111 is attached to an upper surface of the base plate 2101, and the carriage 2111b is attached to a lower surface of the base plate 2102. That is, the base plate 2101 and the base plate 2102 are connected slidably in the YY-axis direction via the plurality of linear guides 2111.

The servo motor 2112 whose shaft is oriented in the YY-axis direction is attached to the base plate 2101. The shaft of the servo motor 2112 is coupled to the screw shaft 2113a of the ball screw 2113, and the nut 2113b is attached to the lower surface of the base plate 2102. By driving the servo motor 2112, the base plate 2102 moves in the YY-axis direction with respect to the base plate 2101. As a result, the position of the test tire T with respect to the rotating drum 2022 moves in the YY-axis direction, and the travel lane 2023b1 or 2023b2 of the road surface 2023b with which the test tire T is in contact switches.

As shown in FIG. 41, the servo motor 2112 is connected to the controller 2070 via a servo amplifier 2112a. The switching operation of the travel lane with the servo motor 2112 is controlled by the controller 2070.

FIG. 45 is a rear view showing an upper portion of the tire holding part 2010. The camber angle adjusting mechanism 2012 is a mechanism that adjusts a camber angle of the test tire T by making the base plate 2103 pivot around the Zz-axis with respect to the base plate 2102. The camber angle adjusting mechanism 2012 includes a vertically extending shaft 2121, a bearing 2122 that rotatably supports the shaft 2121, a curved guide 2123 that guides pivoting of the base plate 2103 about the shaft 2121, a servo motor 2124 attached to the base plate 2102 with a shaft thereof oriented in the $Y_2$-axis direction, and a ball screw 2125 (feed screw mechanism) that converts rotational motion of the servo motor 2124 into linear motion in the $Y_2$-axis direction.

The shaft 2121 is attached to the base plate 2103, and the bearing 2122 is attached to the base plate 2102. The bearing 2122 is provided with a rotary encoder 2122a (camber angle detecting means) shown in FIG. 41 that detects angular position (i.e. camber angle) of the shaft 2121. The shaft 2121 is disposed immediately below the contact surface at which the test tire T contacts the rotating drum 2022. Specifically, a center line (rotation axis) of the shaft 2121 is a straight line perpendicular to the spindle 2152 and passing through the contact surface. The curved guide 2123 includes a rail 2123a extending in an arc shape concentric with the shaft 2121, and a carriage 2123b capable of traveling on the rail 2123a via not-shown rolling bodies. The rail 2123a is attached to an upper surface of the base plate 2102, and the carriage 2123b is attached to a lower surface of the base plate 2103. A screw shaft 2125a of the ball screw 2125 is coupled to a shaft of the servo motor 2124, and a nut 2125b of the ball screw 2125 is attached the base plate 2103 via a hinge 2126 pivotable about a vertical axis. By driving the servo motor 2124, the base plate 2103 pivots about the shaft 2121, thereby changing a camber angle of the test tire T.

As shown in FIG. 41, the servo motor 2124 is connected to the controller 2070 via a servo amplifier 2124a. The adjusting operation of the camber angle with the servo motor 2124 is controlled by the controller 2070.

The tire load adjusting mechanism 2013 is a mechanism that adjusts vertical load (ground contact pressure) acting on to the test tire T by moving the base plate 2104 in the $X_2$-axis direction with respect to the base plate 2103 to thereby move the test tire T in a radial direction. The tire load adjusting mechanism 2013 includes a plurality of linear guides 2131 that guide the base plate 2104 in a radial direction of the rotating drum 2022 ($X_2$-axis direction) with respect to the base plate 2103, a servo motor 2132 that drives the base plate 2104, and a ball screw 2133 (feed screw mechanism) that converts rotational motion of the servo motor 2132 into linear motion in the Xz-axis direction.

The linear guide 2131 includes a rail 2131a extending in the $X_2$-axis direction, and a carriage 2131b capable of traveling on the rail via rolling bodies. The rail 2131a of the linear guide 2131 is attached to an upper surface of the base plate 2103, and the carriage 2131b is attached to a lower surface of the base plate 2104.

The servo motor 2132 whose shaft is oriented in the $X_2$-axis direction is attached to the base plate 2103. The shaft of the servo motor 2132 is coupled to a screw shaft 2133a of the ball screw 2133, and the nut 2133b is attached to the base plate 2104. By driving the servo motor 2132, the base plate 2104 moves in the $X_2$-axis direction with respect to the base plate 2103 together with the nut 2133b. As a result, a distance between the axes of the rotating drum 2022 and the test tire T changes, and the load acting on the test tire T changes.

As shown in FIG. 41, the servo motor 2132 is connected to the controller 2070 via a servo amplifier 2132a. The load adjusting operation of the test tire T with the servo motor 2132 is controlled by the controller 2070.

The slip angle adjusting mechanism 2014 is a mechanism that adjusts a slip angle of the test tire T by rotating the spindle part 10015 about the $X_2$-axis with respect to the base plate 2104 to tilt the rotation axis of the test tire T about the $X_2$-axis with respect to the rotation axis of the rotating drum 2022.

The slip angle adjusting mechanism 2014 includes a shaft 2141 having one end fixed to a spindle case 2154 (bearing part) of the spindle part 2015 and extending in the $Y_2$-axis direction, a bearing part 2142 that supports the shaft 2141 rotatably about the $X_2$-axis (i.e., around an axis perpendicular to the contact surface), a servo motor 2143, and a ball screw 2144 (feed screw mechanism). The bearing part 2142 includes a rotary encoder 2142a (FIG. 41) that detects angular position of the shaft 2141 (i.e., the slip angle of the test tire T). A center line (rotation axis) of the shaft 2141 passes through the approximate center of a wheel part 2156 and is disposed perpendicular to a rotation axis of the wheel part 2156. The servo motor 2143 is attached to the base plate 2104 via a hinge 2143b pivotable about the $Y_2$-axis with a shaft oriented approximately in the $Z_2$-axis direction. The shaft of the servo motor 2143 is coupled to a screw shaft 2144a of the ball screw 2144. A nut 2144b of the ball screw 2144 is attached to one end portion of the spindle case 2154 in the $X_2$-axis direction (a portion away from a center of the shaft 2141 in the $X_2$-axis direction) via a hinge 2146 pivotable about the $Y_2$-axis.

By driving the servo motor 2143 to move the nut 2144b of the ball screw 2144 up and down, the spindle case 2154 rotates together with the shaft 2141. As a result, the slip angle of the test tire T held by the spindle part 2015 changes.

As shown in FIG. 41, the servo motor 2143 is connected to the controller 2070 via a servo amplifier 2143a. The slip angle adjusting operation with the servo motor 2143 is controlled by the controller 2070.

The spindle part 2015 includes the spindle 2152, the spindle case 2154 (bearing part) that rotatably supports the spindle 2152, and the wheel part 2156 coaxially attached to one end of the spindle 2152. The test tire T is mounted to the wheel part 2156. The spindle 2152 includes a torque sensor 2152a that detects torque acting on the test tire T, and a three component force sensor 2152b (FIG. 41) that detects three component forces (i.e., a force in the $X_2$-axis direction [radial force; load], a force in the $Y_2$-axis direction [lateral force], and a force in the $Z_2$-axis direction [tractive

force; tangential force]) acting on the test tire T. The spindle case 2154 also includes a rotary encoder 2154b (FIG. 41) that detects a rotation speed of the spindle (i.e., the test tire T). Since a piezoelectric element is used for both the torque sensor 2152a and the three component force sensor 2152b, the spindle 2152 and the spindle case 2154 have high rigidity, thereby enabling highly accurate measurement. The wheel part 2156 includes an air pressure sensor 2156a (FIG. 41) that detects an air pressure of the test tire T.

The tire holding part 2010 includes a tire temperature adjusting system 2018 (only an air blowing duct 2182a is shown in FIG. 38) that adjusts a temperature of the test tire T by applying cold air or warm air to the test tire T. The temperature of the test tire T (in particular, the temperature of the tread surface) during the test (during traveling) affects a test result (wearing amount). Therefore, it is desirable to keep the temperature of the tread surface of the test tire T within a certain temperature range (e.g., 35 ± 5°C) during the test. The temperature of the test tire T also affects a measurement result in a measurement of the wearing amount of the test tire T described later. In order to accurately measure the wearing amount, it is necessary to adjust the temperature of the test tire T to a predetermined reference temperature (e.g., 25°C) during the measurement. Therefore, the temperature of the test tire T is adjusted to a set temperature during the test and the measurement of the wearing amount using the tire temperature adjusting system 2018.

The tire temperature adjusting system 2018 (FIG. 41) includes a controller 2181, a spot air conditioner 2182, and a temperature sensor 2183. The temperature sensor 2183 is a non-contact temperature sensor (radiation thermometer) that measures the temperature of the tread surface of the test tire T, and is disposed to face the tread surface. The controller 2181 controls operation of the spot air conditioner 2182 to blow cold air, warm air, or air at room temperature to the tread surface of the test tire T based on the measurement result of the temperature sensor 2183 so that the deviation from the set temperature is eliminated. The set temperature of the test tire T can be set to different values at the time of testing (traveling) and at the time of measuring the wear amount. In addition, different set temperatures can be set according to a type of the test tire T. The tire temperature adjusting system 2018 may be further provided with a temperature sensor that measures room temperature, and the operation of the spot air conditioner 2182 may be controlled based on the room temperature and the temperature of the test tire T.

The tire temperature adjusting system 2018 of the present embodiment is configured to adjust the temperature of the test tire T by blowing warm air or cold air to the test tire T using the spot air conditioner 2182, but the tire temperature adjusting system is not limited to this configuration. For example, a cover (constant temperature room) surrounding the entire test tire T may be provided, and the temperature of the test tire T may be adjusted by adjusting air temperature inside the cover.

The set temperature during the test may be set in accordance with the climate of the area where the tire is going to be used. Since wear of a tire is accelerated by the increase in temperature, accelerated aging test can be performed by adjusting the temperature of the test tire T during the test to be higher than the temperature of the tire during normal traveling using the tire temperature adjusting system 2018.

The tire holding part 2010 includes a two dimensional laser displacement sensor 2017 (hereinafter, abbreviated as "displacement sensor 2017") used to measure the wearing amount of the tread of the test tire T. The displacement sensor 2017 measures a two dimensional profile of the tread surface of the test tire T (cross-sectional shape cut along a plane including the rotation axis of the tire) in a non-contact manner using a laser beam (laser light sheet) spread in a band shape by a cylindrical lens.

As shown in FIG. 41, the displacement sensor 2017 is connected to the measuring part 2080, and functions as a wear measuring part together with the measuring part 2080. The measuring part 2080 controls operation of the displacement sensor 2017 and calculates the wearing amount of the test tire T based on the two dimensional profile obtained by the displacement sensor 2017.

The two dimensional profile measurement by the wear measuring part is performed before and after the tire test (and additionally in the middle of the test) with the test tire T in a stopped state. Based on the two dimensional profiles measured before and after (and in the middle of) the test, the wearing amount of the test tire T caused by the test is calculated. As described above, since the measured value of the wearing amount of a tire is affected by the temperature of the tire, when performing the measurement after the test (or after the test is stopped), it is desirable to perform the test after the entire tire reaches the predetermined reference temperature by natural heat radiation or forced cooling by the tire temperature adjusting system 2018.

In the drum-type tire testing device 2000 of the present embodiment described above, the μ-S characteristic of the test tire T can be measured as in the flat-type tire testing device 1000 of the present embodiment. The measurement and recording of the μ-S characteristic in the drum-type tire testing device 2000 are performed by the controller 2070 shown in FIG. 41 by executing a program stored in a storage device 2072 (or other storing means accessible by the controller 2070 such as the server 2092 connected to the controller 2070 via a network such as a LAN), and the measurement results and the like are stored in the storage device 2072 or other storing means.

First, a predetermined initialization process is performed, and the drum-type tire testing device 2000 is set to an initial state. Then, the traveling speed (i.e., a peripheral speed of the rotating drum 2022) at which the μ-S characteristic is to be measured first is set. For example, when measuring the μ-S characteristic at a speed of 5km/h, a value of 5km/h is set in a predetermined memory or the like.

Then, the tire load adjusting mechanism 2013 is operated to bring the test tire T into contact with the road surface 2023b provided on the outer periphery of the rotating drum 2022, and a set load is applied to the test wheel W. It is desirable that the loads to be applied to the test wheel W at the time of the measurement of the µ-S characteristic by the flat-type tire testing device 1000 and to the test wheel W at the time of the measurement of the µ-S characteristic by the drum-type tire testing device 2000 are the same, since the comparison of the µ-S characteristics described later becomes easy, but the µ-S characteristics can also be compared by using the measurement results obtained by applying different loads.

Then, the rotating drum 2022 and the test wheel W are rotationally driven by the rotation drive part 2030, and the rotating drum 2022 rotates at the set peripheral speed (traveling speed), that is, at an angular speed corresponding to 5km/h, and the test tire T rotates at substantially the same peripheral speed as the rotating drum 2022. That is, instead of the carriage 20 in the flat-type tire testing device 1000 described above traveling at the set traveling speed (e.g., 5km/h), in the drum-type tire testing device 2000, the rotating drum 2022 rotates at an angular speed at which the peripheral speed of the outer peripheral surface of the rotating drum 2022 becomes the set traveling speed (e.g., 5km/h). At this time, since a vehicle speed is nearly equal to a wheel peripheral speed, the slip ratio S is nearly equal to 0%, and the peripheral speed of the test wheel W becomes substantially the same as the set traveling speed (e.g., 5km/h).

Even in a state where the servo motor 2052 of the torque generating part 2050 is stopped, there is a case where the peripheral speed of the test wheel W does not sufficiently coincide with the peripheral speed of the rotating drum 2022, and a non-negligible amount of torque may be generated due to the speed difference between the two. In such a case, for example, by setting a target value of the torque of the test wheel W to 0N·m and controlling the torque of the servo motor 2052 of the torque generating part 2050, the slip ratio can be made approximately 0%.

The torque generating part 2050 applies a set torque to the test tire T. While the rotating drum 2022 is rotating at the set peripheral speed (traveling speed), the torque acting on the test tire T and the three component forces acting on the test tire T are detected by the torque sensor 2152a and the three component force sensor 2152b at predetermined time intervals (e.g., at intervals of 5 milliseconds). The time intervals between the detections by the torque sensor 2152a and the three component force sensor 2152b are appropriately set in accordance with test conditions (e.g., the set value of the traveling speed, required test accuracy, and the like).

The torque to be applied to the test tire T by the torque generating part 2050 is controlled so that a predetermined torque is applied while the rotating drum 2022 is rotating at the set peripheral speed (traveling speed). For example, while causing the rotating drum 2022 to travel at a constant speed (constant-speed rotation) at the set peripheral speed (traveling speed), control is performed so that the test starts in a state where the torque is nearly equal to 0N·m, that is, the vehicle speed is nearly equal to the wheel peripheral speed and the slip ratio S is nearly equal to 0%, the torque is gradually increased, and after an elapse of a predetermined time, a torque that causes the test wheel W to be completely locked (i.e., the wheel peripheral speed to be 0km/h, and the slip ratio S to be 100%) is applied.

As described above, while gradually increasing the torque so that the slip ratio S changes from 0% to 100%, the measured values by the various sensors provided in the drum-type tire testing device 2000 of the present embodiment are recorded at predetermined time intervals (e.g., at intervals of 5 milliseconds). The traveling speed (the peripheral speed of the outer peripheral surface of the rotating drum 2022) is calculated from the detection result of the rotary encoder 2241, and is calculated from the detection result of the rotary encoder 2154b. As a result, values of the braking force coefficient µ and the slip ratio S at the respective measurement timings are measured at predetermined time intervals, and the µ-S characteristic at the initially set traveling speed (e.g., 5km/h) is measured.

It should be noted that, for example, when performing the test with both the flat-type tire testing device 1000 and the drum-type tire testing device 2000 for the same traveling speed (vehicle speed), it is desirable that the measurement is performed while setting a time (test time) required to change the slip ratio S from 0% to 100% to the same as the test time set in the flat-type tire testing device 1000 described above. It is also desirable that the measurement is performed while setting the predetermined time intervals at which the various sensors of the drum-type tire testing device 2000 detect the measured values to the same as the time intervals adopted in the flat-type tire testing device 1000 described above. However, even when the measurement results obtained under different conditions for these setting items (i.e., the test time, the time intervals of detection, and the like) are used, the present invention can be appropriately applied by comparing respective approximate curves or the like.

As described above, the drum-type tire testing device 2000 of the present embodiment is used to measure the µ-S characteristic at the first set traveling speed (e.g., 5km/h). When the measurement of the µ-S characteristic at a certain set speed (i.e., the set value of the traveling speed) is completed, the rotation of the rotating drum 2022 and the test tire T may be stopped once to prepare for the measurement at the next set speed. By changing the set speed and repeating the above measurement, the µ-S characteristic can be measured for a plurality of set speeds in sequence.

For example, as in the case of the flat-type tire testing device 1000 described above, it is possible to prepare a memory area CTM' for counting, perform counting by incrementing the CTM' from 1 in order, set a set speed according to a value of the CTM' (e.g., CTM'×5km/h), and measure the µ-S characteristic at the set speed. With this configuration, it is possible to sequentially measure the $\mu$-S characteristic at each set speed while gradually increasing the set speed for the same test tire T, such as the $\mu$-S characteristic at 5km/h (CTM'=1), the $\mu$-S characteristic at 10km/h (CTM'=2), the $\mu$-S characteristic at 15km/h (CTM'=3), and so on.

Unlike in the flat-type tire testing device 1000 having the road surface 63a of a finite length, in the drum-type tire testing device 2000 having the road surface 2023b of infinite length (endless), acceleration/deceleration to a predetermined traveling speed is not restricted by the length of the road surface. Therefore, the drum-type tire testing device 2000 can perform the test at a higher traveling speed (in other words, at a wider range of traveling speeds). It is desirable that at least one (preferably all) of the set speeds used in the measurement by the flat-type tire testing device 1000 be used to perform the measurement by the drum-type tire testing device 2000.

As described above, the drum-type tire testing device 2000 can perform the test at a higher traveling speed, but cannot accurately reproduce traveling on a flat actual road surface because the road surface 2023b has a curvature in the traveling direction. On the other hand, in the flat-type tire testing device 1000, the traveling speed is limited to a relatively low speed, but the flat-type tire testing device 1000 can accurately reproduce traveling on a flat actual road surface because the road surface 63a has no curvature. A correction of the $\mu$-S characteristic described below is a technique for obtaining the $\mu$-S characteristic (corrected $\mu$-S characteristic) of a test tire having an accuracy comparable to the measurement result by the flat-type tire testing device 1000 over a wide speed range measurable by the drum-type tire testing device 2000 based on the $\mu$-S characteristic (first $\mu$-S characteristic) measured by the flat-type tire testing device 1000 and the $\mu$-S characteristic (second $\mu$-S characteristic) measured by the drum-type tire testing device 2000.

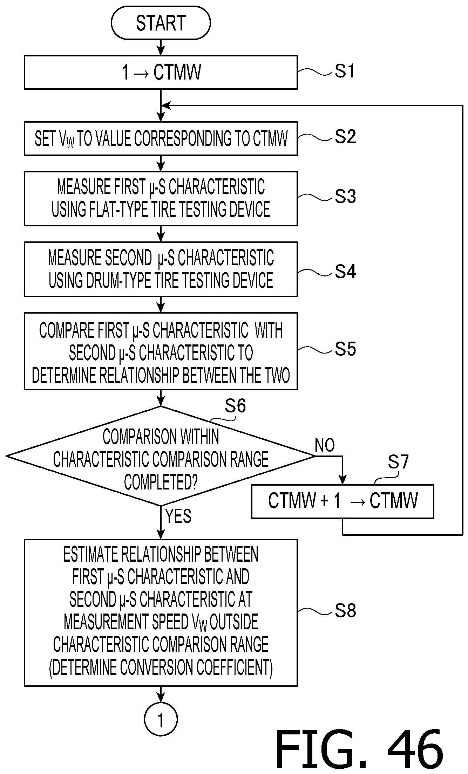

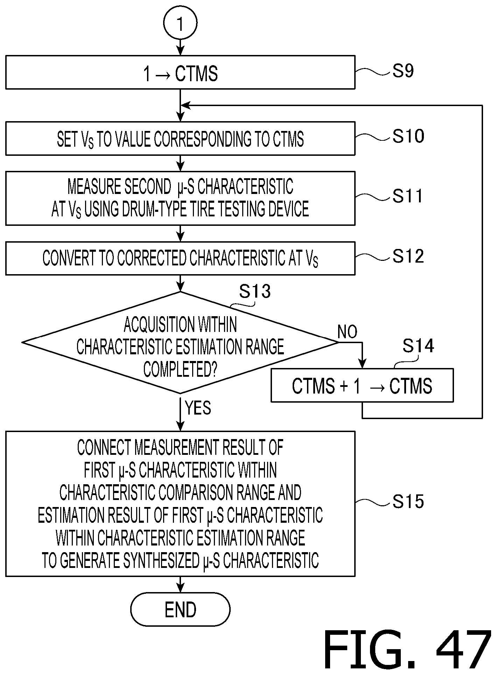

FIGS. 46 and 47 are flowcharts explaining an example of a method for obtaining the corrected $\mu$-S characteristic from the first $\mu$-S characteristic measured using the flat-type tire testing device 1000 and the second $\mu$-S characteristic measured using the drum-type tire testing device 2000. Procedures shown in these flowcharts can be executed by the controller 70 (FIG. 35) reading a predetermined program stored in the storage device 72 and performing processes in accordance with this program. The central control device 1c may be configured to sequentially give measurement instructions to the flat-type tire testing device 1000 and the drum-type tire testing device 2000 and obtain the corrected $\mu$-S characteristic using the received measurement results. The measurement results may be obtained directly from the flat-type tire testing device 1000 and the drum-type tire testing device 2000 via a network such as a LAN or a bus such as a USB, or may be obtained via a network storage such as the server 92 or a NAS.

First, in step S1, the controller 70 sets the counter CTMW to 1. In the following, the set speed Vw is sequentially set according to the value of the counter CTMW, and the first $\mu$-S characteristic from the flat-type tire testing device 1000 and the second $\mu$-S characteristic from the drum-type tire testing device 2000 are sequentially compared at each set speed Vw.

In the next step S2, the controller 70 obtains and sets the measurement speed Vw corresponding to the counter CTMW (i.e., stores the measurement speed Vw in a predetermined memory such as the storage device 72). The measurement speed Vw is, for example, obtained by a predetermined calculation formula such as formula (2).

$$Vw = 5 \times CTMW \ (km/h) \qquad (2)$$

In this case, the first and second $\mu$-S characteristics are sequentially measured at each set speed Vw while increasing the set speed Vw by 5km/h, and the corrected $\mu$-S characteristic is obtained.

It is also possible to obtain and set the measurement speed Vw by preparing a table in which the values of the counter CTMW and the values of the measurement speed Vw are associated with each other and stored in a memory in advance and reading out the value of the measurement speed Vw corresponding to the value of the counter CTMW from the table. It is also possible to set the measurement speed Vw at unequal intervals, namely, for example, Vw = 5km/h when CTMW = 1, Vw = 10km/h when CTMW = 2, Vw = 20km/h when CTMW = 3, and the like. It is also possible, for example, to narrow the intervals between the measurement speeds Vw in a low-speed range and widen the intervals between the measurement speeds Vw in a high-speed range, or vice versa.

In the next step S3, the controller 70 performs the measurement using the flat-type tire testing device 1000 and obtains the first $\mu$-S characteristic at the measurement speed Vw. In this case, if the controller 70 is connected to the flat-type tire testing device 1000, an instruction may be sequentially given to the flat-type tire testing device 1000 to operate the flat-type tire testing device 1000 and measure the first $\mu$-S characteristic each time. Alternatively, it is possible to configure the controller 70 to read out the first $\mu$-S characteristic, which has already been measured by the flat-type tire testing device 1000 and stored in, for example, the server 92, as necessary. In this case, the location where the first $\mu$-S characteristics are stored may be an internal storing means of the flat-type tire testing device 1000 (e.g., the storage device 1072) or an external storing means connected to the flat-type tire testing device 1000, or may be a separate storing means not connected to the flat-type tire testing device 1000.

In the next step S4, the controller 70 obtains the second $\mu$-S characteristic at the measurement speed Vw using the drum-type tire testing device 2000 of the present embodiment. In this case, as in the above-described step S3, if the controller 70 is connected to the drum-type tire testing device 2000, an instruction may be sequentially given to the drum-type tire testing device 2000 to operate the drum-type tire testing device 2000 and measure the second $\mu$-S characteristic each time. Alternatively, it is possible to configure the controller 70 to read out the second $\mu$-S characteristic, which has already been measured by the drum-type tire testing device 2000 and stored in, for example, the server 92, as necessary. In this case, the location where the second $\mu$-S characteristics are stored may be an internal storing means of the drum-type tire testing device 2000 (e.g., the storage device 2072) or an external storing means connected to the drum-type tire testing device 2000, or may be a separate storing means not connected to the drum-type tire testing device 2000.

Then, the controller 70 compares the measurement result of the first $\mu$-S characteristic at the measurement speed Vw obtained in step S3 with the measurement result of the second $\mu$-S characteristic at the measurement speed Vw obtained in step S4 (step S5). At this time, as described above, when the values of the slip ratios S are close to each other (e.g., substantially the same value), the comparison of the first $\mu$-S characteristic and the second $\mu$-S characteristic may be easy.

For example, when the values of the slip ratios are the same, the measured value of the braking force coefficient $\mu$ by the flat-type tire testing device 1000 (first braking force coefficient $\mu_1$) and the measured value of the braking force coefficient $\mu$ by the drum-type tire testing device 2000 (second braking force coefficient $\mu_2$) can be compared with each other to obtain a relationship between the two. That is, for example, when the value of the slip ratio S is measured at intervals of 5% in the range of 0% to 100%, the first braking force coefficient $\mu_1$ and the second braking force coefficient $\mu_2$ at each slip ratio are compared with each other to calculate the ratio (specific braking force coefficient $\mu_1/\mu_2$). Thus, the specific braking force coefficients $\mu_1/\mu_2$ at S = 0%, 5%, 10%, 15%, ..., 95%, 100% are obtained. Then, the values of the specific braking force coefficient $\mu_1/\mu_2$ at respective values of the slip ratio S are averaged, and this average value can be used as a conversion coefficient at the measurement speed Vw. The conversion coefficient is a parameter for converting the second $\mu$-S characteristic measured by the drum-type tire testing device 2000 into the $\mu$-S characteristic (corrected $\mu$-S characteristic) corresponding to the first $\mu$-S characteristic obtained by the flat-type tire testing device 1000.

It is also possible to prepare a general relational formula representing the $\mu$-S characteristic in advance, determine a relational formula of the first $\mu$-S characteristic from the measured value of the first $\mu$-S characteristic by the flat-type tire testing device 1000 by regression analysis such as the least square method, determine a relational formula of the second $\mu$-S characteristic from the measured value of the second $\mu$-S characteristic by the drum-type tire testing device 2000 by regression analysis such as the least square method, and compare these relational formulas to determine the conversion coefficient at the measurement speed Vw. For example, it is possible to provide a general relational formula representing the $\mu$-S characteristic as, for example, a polynomial ($\mu = a_n S^n + a_{n-1} S^{n-1} + ... + a_2 S^2 + a_1 S + a_0$), determine coefficients ($a_{n(1)}, a_{n-1(1)}, ..., a_{2(1)}, a_{1(1)}, a_{0(1)}$) of the polynomial representing the first $\mu$-S characteristic from the measured value of the first $\mu$-S characteristic by the flat-type tire testing device 1000 by regression calculation, determine coefficients ($a_{n(2)}, a_{n-1(2)}, ..., a_{2(2)}, a_{1(2)}, a_{0(2)}$) of the polynomial representing the second $\mu$-S characteristic from the measured value of the second $\mu$-S characteristic by the drum-type tire testing device 2000 by regression calculation, and set the ratio of these coefficients ($a_{n(1)}/a_{n(2)}, a_{n-1(1)}/a_{n-1(2)}, ..., a_{2(1)}/a_{2(2)}, a_{1(1)}/a_{1(2)}, a_{0(1)}/a_{0(2)}$) as the conversion coefficients at the measurement speed Vw. By multiplying each coefficient of the polynomial representing the second $\mu$-S characteristic by the corresponding conversion coefficient, an estimated value of each coefficient of the polynomial representing the first $\mu$-S characteristic is obtained. That is, from the measured value of the second $\mu$-S characteristic at the measurement speed Vw measured using the drum-type tire testing device 2000, an estimated value of the corrected $\mu$-S characteristic corresponding to the first $\mu$-S characteristic at the measurement speed Vw which can be obtained by using the flat-type tire testing device 1000 is obtained.

When the comparison between the measured value of the first $\mu$-S characteristic and the measured value of the second $\mu$-S characteristic at the measurement speed Vw (i.e., the acquisition of the conversion coefficient) is completed, the controller 70 determines in step S6 whether or not the comparison of the $\mu$-S characteristic is completed for all the measurement speeds Vw within a characteristic comparison range (i.e., all the measurement speeds Vw for which the comparison of the $\mu$-S characteristic is to be performed).

The characteristic comparison range is a range of the measurement speed Vw within which both the measurement of the first $\mu$-S characteristic by the flat-type tire testing device 1000 and the measurement of the second $\mu$-S characteristic by the drum-type tire testing device 2000 are performed. The characteristic comparison range can be, for example, a range of the measurement speed Vw within which the first $\mu$-S characteristic is measured by the flat-type tire testing device 1000 (i.e., a range from the minimum speed (e.g., 5km/h) to the maximum speed (e.g., 60km/h) of the measurement speed Vw within which the first $\mu$-S characteristic is measured). For example, in a range of the traveling speed (characteristic comparison range) at which the first $\mu$-S characteristic can be measured by the flat-type tire testing device 1000, the $\mu$-S characteristic can be measured by both the flat-type tire testing device 1000 and the drum-type tire testing device 2000, and the measurement results can be compared, and in a high-speed range exceeding the range (outside the characteristic comparison range), the measurement result of the second $\mu$-S characteristic measured by the drum-type tire testing device 2000 can be converted into the μ-S characteristic corresponding to the first μ-S characteristic by the flat-type tire testing device 1000 (i.e., corrected μ-S characteristic).

Since the flat-type tire testing device 1000 can perform measurement in a state closer to a traveling state on an actual road surface, the first μ-S characteristic measured by the flat-type tire testing device 1000 can be adopted as the measurement result of the μ-S characteristic of the test tire T in a predetermined speed range (characteristic comparison range) within which the first μ-S characteristic is measured by the flat-type tire testing device 1000, and the corrected μ-S characteristic converted from the second μ-S characteristic measured by the drum-type tire testing device 2000 can be adopted as the measurement result of the μ-S characteristic of the test tire T in the higher speed range (outside the characteristic comparison range).

When it is determined in step S6 that the comparison of the μ-S characteristics in the characteristic comparison range (characteristic comparison process) has not yet been completed (step S6: NO), the controller 70 adds 1 to the counter CTMW (step S7), returns to step S2, and performs the characteristic comparison process (S2-S5) at the measurement speed Vw corresponding to the next CTMW value.

On the other hand, when it is determined in step S6 that the comparison of the μ-S characteristic in the characteristic comparison range has been completed (step S6: YES), the controller 70 advances the processing to step S8, and estimates the relationship between the μ-S characteristic by the flat-type tire testing device 1000 and the μ-S characteristic by the drum-type tire testing device 2000 at speeds outside the characteristic comparison range from the relationship between the first μ-S characteristic and the second μ-S characteristic measured for each measurement speed Vw in the characteristic comparison range.

In this case, for the conversion coefficient between the first μ-S characteristic and the second μ-S characteristic obtained for each measurement speed Vw in step S5, the method of estimating the relationship at speeds outside the characteristic comparison range can be determined using a plurality of coefficients obtained for respective measurement speeds Vw within the characteristic comparison range. For example, an average value of the ratios between the first braking force coefficients $\mu_1$ measured by the flat-type tire testing device 1000 and the second braking force coefficients $\mu_2$ measured by the drum-type tire testing device 2000 (specific braking force coefficients $\mu_1/\mu_2$) at respective slip ratios for each of measurement speeds Vw of 5km/h, 10km/h, 15km/h, and so on within the characteristic comparison range can be used as the conversion coefficient.

In this case, it is possible to calculate the average value of the conversion coefficients at respective measurement speeds Vw of 5km/h, 10km/h, 15km/h, and so on within the characteristic comparison range, and use it as the conversion coefficient (ratio coefficient) between the first μ-S characteristic and the second μ-S characteristic, regardless of the measurement speed Vw.

Alternatively, for example, the conversion coefficient may be regarded as a linear function of the measurement speed Vw, and a relational formula between the measurement speed Vw and the conversion coefficient may be determined by linear regression analysis (e.g., linear approximation by the least squares method), so that the conversion coefficient can be calculated for an arbitrary measurement speed Vw.

Conversion coefficient CF(V) = proportionally constant c1 × measurement speed V + constant c2          (3)

For example, the relationship between the conversion coefficient and the measurement speed V (Vw or later-described Vs) can be approximated by a relational formula such as formula (3), and the proportionality constant c1 and the constant c2 can be determined, for example, by the least squares method. In this case, the first μ-S characteristic by the flat-type tire testing device 1000 and the second μ-S characteristic by the drum-type tire testing device 2000 are converted by the conversion coefficient CF(V) determined in accordance with the measurement speed V (Vw, Ws). Therefore, in this case, in a characteristic estimation process S12 described later, the conversion coefficient corresponding to the measurement speed Ws is obtained by this relational formula for each measurement speed Ws, and is used for the calculation of the corrected μ-S characteristic.

In step S5 described above, the ratio between the first braking force coefficient $\mu_1$ measured by the flat-type tire testing device 1000 and the second braking force coefficient $\mu_2$ measured by the drum-type tire testing device 2000 (specific braking force coefficient $\mu_1/\mu_2$) at the slip ratios S of 0%, 5%, 10%, 15%, ..., 95%, 100% are averaged, and the average value is used as the conversion coefficient at the measurement speed Vw, but the present invention is not limited to this configuration. For example, the relationship between the first μ-S characteristic and the second μ-S characteristic (i.e., the conversion coefficient) at a speed outside the characteristic comparison range may be determined for each value of the slip ratio S. In this case, specifically, for example, for each of the measurement speeds Vw of 5 km/h, 10km/h, 15km/h, and so on, the ratio between a measured value of the first braking force coefficient $\mu_1$ and a measure value of the second braking force coefficient $\mu_2$ measured by the drum-type tire testing device 2000 (specific braking force coefficient $\mu_1/\mu_2$) at the slip ratio S of 10% may be calculated, and the conversion coefficient between the first μ-S characteristic and the second μ-S characteristic at the slip ratio S of 10% may be determined from the specific

braking force coefficient $\mu_1/\mu_2$ at each measurement speed Vw.

In this case, for example, the ratio of the first braking force coefficient $\mu_1$ measured by the flat-type tire testing device 1000 and the second braking force coefficient $\mu_2$ measured by the drum-type tire testing device 2000 (specific braking force coefficient $\mu_1/\mu_2$) at the measurement speeds Vw of 5km/h, 10km/h, 15km/h, and so on at the slip ratio S of 10% may be averaged (i.e., the specific braking force coefficient $\mu_1/\mu_2$ is regarded as a constant independent of the measurement speed Vw), and this average value may be used as a conversion coefficient (ratio coefficient) between the first $\mu$-S characteristic and the second $\mu$-S characteristic at the slip ratio S of 10% regardless of the measurement speed Vw.

Alternatively, for example, the specific braking force coefficient $\mu_1/\mu_2$ at the measurement speeds Vw of 5km/h, 10km/h, 15km/h, and so on at the slip ratio S of 10% may be regarded as a linear relationship having a linear function relationship with the measurement speed Vw, and a relational formula between the ratio of the measured values of the braking force coefficients $\mu$ and the measurement speed Vw that approximates these values (with the smallest error) may be calculated from the ratios of the measured values of the braking force coefficients $\mu$ at respective measurement speeds Vw and regard as a relationship (linear function relationship) between the first $\mu$-S characteristic and the second $\mu$-S characteristic at the slip ratio S of 10%. In this case, in the characteristic estimation process S12 described later, the conversion coefficient of the braking force coefficient $\mu$ corresponding to the slip ratio S and the measurement speed Vs is obtained for each slip ratio S and the measurement speed Ws by this relational formula.

Then, in step S9 (FIG. 47), the controller 70 sets the counter CTMS to 1. Hereinafter, set speeds Vs within the characteristic estimation range corresponding to the value of the counter CTMS are sequentially set, and the first $\mu$-S characteristics by the flat-type tire testing device 1000 at respective set speeds Vs are sequentially estimated (in other words, the corrected $\mu$-S characteristic corresponding to the first $\mu$-S characteristic is calculated) from the measurement result of the second $\mu$-S characteristics by the drum-type tire testing device 2000 at respective set speeds Vs.

Then, in step S10, the controller 70 sets the measurement speed Vs according to the counter CTMS as the measurement speed Vs. The measurement speed Vs is obtained, for example, by a predetermined calculation formula such as formula (4).

$$Vs = 5 \times CTMS + Vss \ (km/h) \qquad \dots (4)$$

As the constant Vss, for example, a maximum speed among the measurement speeds Vw within the characteristic comparison range set in step S2 can be used. That is, by setting the constant Vss to the upper limit of the characteristic comparison range, the estimation of the characteristic can be started from a speed exceeding the characteristic comparison range. For example, in the formula (4), the estimation of the characteristic can be started from the maximum speed of the measurement speed Vw set as the characteristic comparison range in step S2 plus 5km/h. When the formula (4) is used, the corrected $\mu$-S characteristics at respective set speeds Vs are sequentially obtained while increasing the measurement speed Vs by 5 km/h.

As in step S2, a table in which the values of the counter CTMS and the values of the measurement speed Vs are associated with each other and stored in a memory or the like may be prepared in advance, and the value of the measurement speed Vs corresponding to the value of the counter CTMS may be read from the table to obtain and set the measurement speed Vw.

In the next step S11, the controller 70 performs measurement using the drum-type tire testing device 2000, and obtains the second $\mu$-S characteristic at the measurement speed Vs. In this case, as in the above-described steps S3 and S4, when the controller 70 is connected to the drum-type tire testing device 2000, an instruction may be sequentially given to the drum-type tire testing device 2000 to operate the drum-type tire testing device 2000 and measure the second $\mu$-S characteristic each time. Alternatively, it is possible to configure the controller 70 to read out the second $\mu$-S characteristic, which has already been measured by the drum-type tire testing device 2000 and stored in, for example, the server 92, as necessary. In this case, the location where the second $\mu$-S characteristics are stored may be an internal storing means of the drum-type tire testing device 2000 (e.g., the storage device 2072) or an external storing means connected to the drum-type tire testing device 2000, or may be a separate storing means not connected to the drum-type tire testing device 2000.

Then, the controller 70 uses the relationship between the first $\mu$-S characteristic and the second $\mu$-S characteristic (i.e., the conversion coefficient) estimated in step S8 to convert the second $\mu$-S characteristic at the measurement speed Vs measured in step S11 to thereby estimate the corrected $\mu$-S characteristic corresponding to the first $\mu$-S characteristic at the measurement speed Vs (step S12). In this case, the conversion is performed using the slip ratio S and the measurement speed Vs measured in step S11 as appropriate in accordance with the relationship between the first $\mu$-S characteristic and the second $\mu$-S characteristic obtained in step S8. For example, when the conversion coefficient CF at the measurement speed V is determined as the above-mentioned formula (3), the conversion coefficient CF (Vs) at the measurement speed Vs is obtained by the following formula (5).

Conversion coefficient CF(Vs) = proportionally constant c1 × measurement speed Vs + constant c2          (5)

Using this conversion coefficient CF, the second $\mu$-S characteristic by the drum-type tire testing device 2000 can be converted into a corrected $\mu$-S characteristic corresponding to the first $\mu$-S characteristic by the flat-type tire testing device 1000.

When the acquisition of the corrected $\mu$-S characteristic at the measurement speed Vs in step S12 is completed, the controller 70 determines in step S13 whether the acquisition of the corrected $\mu$-S characteristic has been completed for all the measurement speeds Vs in the characteristic estimation range (i.e., all the measurement speeds Vs for which the corrected $\mu$-S characteristic is to be obtained).

The characteristic estimation range is a range of the measurement speed Vs within which the acquisition of the corrected $\mu$-S characteristic (S10-S12) is to be performed. The characteristic estimation range is, for example, a range of speed higher than the characteristic comparison range and, as an upper limit of the characteristic estimation range, it is possible to set, for example, the maximum speed measurable by the drum-type tire testing device 2000. Alternatively, it is also possible to set, as the characteristic estimation range, a speed range required to obtain the corrected $\mu$-S characteristic. Furthermore, it is also possible to set, as the characteristic estimation range, a speed range considered to ensure a predetermined accuracy for the conversion method (estimation method) of the $\mu$-S characteristic obtained in step S8 and used in step S12.

When it is determined in step S13 that the estimation within the characteristic estimation range has not been completed (step S13: NO), the controller 70 adds 1 to the counter CTMS (step S14), and returns to step S10 to perform the characteristic estimation process S12 at the measurement speed Vs corresponding to the next value of the counter CTMS.

On the other hand, when it is determined in step S13 that the estimation within the characteristic estimation range has been completed (step S13: YES), the controller 70 connects (i.e., synthesizes) the first $\mu$-S characteristic measured by the flat-type tire testing device 1000 at each measurement speed Vw within the characteristic comparison range and the corrected $\mu$-S characteristic calculated from the second $\mu$-S characteristic measured by the drum-type tire testing device 2000 at each measurement speed Vw within the characteristic estimation range, thereby generating a synthesized $\mu$-S characteristic in the entire range (step S15).

In general, since the flat-type tire testing device 1000 having a flat road surface can perform measurement in a state closer to a traveling state on an actual road surface, the first $\mu$-S characteristic measured by using the flat-type tire testing device 1000 is used as it is at each measurement speed Vw within the characteristic comparison range, and the second $\mu$-S characteristic measured by using the drum-type tire testing device 2000 is converted to obtain the corrected $\mu$-S characteristic corresponding to the first $\mu$-S characteristic by the flat-type tire testing device 1000 at each measurement speed Vs within the characteristic estimation range, and these $\mu$-S characteristics (that is, the first $\mu$-S characteristic within the characteristic comparison range and the corrected $\mu$-S characteristic within the characteristic estimation range) are connected to generate a synthesized $\mu$-S characteristic (also referred to as "extended $\mu$-S characteristic") corresponding to a measurement result when the entire range is measured on a flat road surface.

In the above description, the method for obtaining the conversion relation (i.e., conversion coefficient) between the second $\mu$-S characteristic by the drum-type tire testing device 2000 and the first $\mu$-S characteristic by the flat-type tire testing device 1000 by comparing the actual measured values has been described. However, the present invention is not limited to this configuration. For example, the conversion method may be set in advance. In this case, for example, the first $\mu$-S characteristic measured by the flat-type tire testing device 1000 may be used in the relatively low speed range (low speed range), the second $\mu$-S characteristic measured by the drum-type tire testing device 2000 may be converted by a predetermined conversion method in the relatively high speed range (high speed range) to obtain the corrected $\mu$-S characteristic, and the first $\mu$-S characteristic in the low speed range and the corrected $\mu$-S characteristic in the high speed range may be connected. In this case, for example, a conversion method based on the curvature correction of the road surface can be adopted based on the difference in structure between the flat-type tire testing device 1000 and the drum-type tire testing device 2000 (specifically, the presence or absence of the curvature of the road surface). Furthermore, when comparing the first $\mu$-S characteristic and the second $\mu$-S characteristic in the above-described characteristic comparison range and calculating the conversion formula, it is also possible to perform estimation based on a more detailed conversion formula, for example, by using a formula based on the curvature correction.

In the description of the present embodiment, an example of the measurement of the $\mu$-S characteristic when the braking force is applied to the test tire T by the torque generating part 30 (flat-type tire testing device 1000) or the torque generating part 2050 (drum-type tire testing device 2000) to perform braking has been mainly described, but the present invention is not limited to this, and the $\mu$-S characteristic at the time of acceleration (traction side) can also be measured. This can be implemented by causing the above-described torque generating part 30 and torque generating part 2050 to generate torque in the same direction as the rotation of the test tire and in the direction of further increasing the speed, and the torque generating part 30 and torque generating part 2050 can be regarded as operating as slip ratio controllers capable of controlling the slip ratio. That is, this can be implemented by incorporating the slip ratio control device into the power circulation circuit.

The measurement of the μ-S characteristic of the test tire T described above and the wear test of the test tire can be carried out with one device. In this case, although the appropriate gear ratio may be different between the measurement of the μ-S characteristic of the tire and the wear test of the tire due to the difference in test speed, for example, by configuring the gear box 2042 or the speed reducer 2053 to switch between a gear for high-speed traveling suitable for the measurement of the μ-S characteristic and a gear for low-speed traveling suitable for the wear test of the tire (e.g., by configuring the gear box 2042 or the speed reducer 2053 as a transmission) and switching the gear according to the application, the measurement of the μ-S characteristic of the test tire T and the wear test of the same test tire T can be carried out with one device. In this way, for example, it is possible to measure the initial μ-S characteristic of the unused test tire T, then switch gears without making any other change to carry out the wear test, and further switch gears without making any other change to carry out the measurement of the μ-S characteristic of the used test tire T that has been worn after traveling for a predetermined period of time. The wear test and the μ-S characteristic measurement can be carried out in series without replacing the tire, and it is possible to carry out a flexible test such as measuring the μ-S characteristic of the tire that has been made to wear for a predetermined period of time and measuring the μ-S characteristic after further making the tire to wear for a predetermined period of time.

In the flat-type tire testing device 1000 or the drum-type tire testing device 2000 according to the present embodiment, by adopting a power circulation system in which a servo motor is used in a drive system, incorporating a slip ratio control device in the power circulation circuit, and using a gear having a suitable gear ratio as appropriate, it is possible to finely control the torque (braking force and acceleration force) to be applied by the torque generating part 30 and the torque generating part 2050, and it is possible to perform various tire tests by controlling the slip ratio with high accuracy. For example, it is possible to appropriately use gears having various gear ratios such as gear ratios of 100, 50, 15, 10, 7.5, 5, 3, 2, 1, one severalth, 1/10, 1/20, 1/30, 1/40, 1/50, 1/60, 1/70, 1/80, 1/90, 1/100, and so on according to the type of tire to be tested, the content of the test, the configuration of the device and the like, and it is possible to improve the measurement accuracy by using gears having such gear ratios. In particular, when measuring the slip ratio S with high accuracy, it is desirable to set to a high reduction ratio.

Since control error of rotation speed of a general motor is close to 1%, it is difficult to suppress error of the measurement speed V (i.e., measurement error of the slip ratio S) to 1% or less in configurations in which the rotating drum 2022 (or the carriage 20) and the test wheel W are driven by separate motors. Since the drum-type tire testing device 2000 (the flat-type tire testing device 1000) of the present embodiment employs the power circulation system to drive the rotating drum 2022 (carriage 20) and the test wheel W by the common motor 141 (motor 2032), the rotational speed of the rotating drum 2022 (the traveling speed of the carriage 20) and the rotational speed of the test wheel W are automatically driven at substantially the same speed, the rotational speed (traveling speed) can be controlled with high accuracy. In particular, the fluctuation of the speed on the time axis is suppressed to a low level.

In addition to the adoption of the power circulation system described above, by setting the reduction ratios of the speed reducer 2053 of the torque generating part 2050 and the speed reducer 33 of the torque generating part 30 to about 50 (approximately 45 to 55) or more, the slip ratio S can be measured with a high accuracy of 0.01% or less. When the slip ratio S is measured with an accuracy of 0.01% or less, the reduction ratio is preferably set within a range of 45 to 120 (more preferably, within a range of 55 to 100). With this configuration, it is possible to perform a test with high accuracy in a region of high torque (braking force/acceleration force).

Instead of using the first μ-S characteristic measured by the flat-type tire testing device 1000 described above, it is also possible to compare the μ-S characteristic measured on the actual road surface with the μ-S characteristic measured by the drum-type tire testing device 2000, determine the conversion relationship, and estimate the μ-S characteristic in a speed range that is difficult to measure on the actual road surface by the method of this embodiment. When measuring the μ-S characteristic on the actual road surface, it is possible to use, for example, a tire on-road testing device (traction bus) disclosed in WO2020/241323.

The above is the description of the exemplary embodiments of the present invention. The embodiments of the present invention are not limited to those described above, and various modifications are possible within the scope of the technical idea of the present invention. For example, the embodiments of the present invention also include the contents obtained by appropriately combining the embodiments explicitly shown in the specification or obvious embodiments.

In the tire testing system 1 of the above-described embodiments, the operations of the flat-type tire testing device 1000 and the drum-type tire testing device 2000 are integrated under the controller 70. However, for example, the flat-type tire testing device 1000 and the drum-type tire testing device 2000 can be used individually as independent testing devices without providing the controller 70.

In the above-described embodiments, a toothed belt and a toothed pulley are used for each of the belt mechanisms 15, 24, 25, 142. However, a flat belt or a V-belt may be used in place of the toothed belt for one or more of the belt mechanisms. Also, other types of winding transmission mechanisms, such as a chain transmission mechanism or a wire transmission mechanism, may be used in place of the belt mechanism. Also, other types of power transmission mechanisms, such as a ball screw mechanism, a gear transmission mechanism, or a hydraulic mechanism, may be used in place of the belt mechanism.

The location where the driven pulley 242 (FIG. 19) is attached to the rotating frame 31 is not limited to the shaft part 314, and may be other locations such as the first cylindrical part 311, the second cylindrical part 312, or the third cylindrical part 313. When attaching the driven pulley 242 to a location other than the shaft part 314 of the rotating frame 31, the distal end portion of the shaft part 314 may not be protruded from the bearing part 351. In this case, the bearing part 353 that supports the distal end portion of the shaft part 314 is not required. When the distal end portion of the shaft part 314 is not protruded from the bearing part 351, the shaft 34 may be directly supported by the bearing part 353. In this case, the drive pulley 251 may be disposed between the bearing part 351 and the bearing part 353.

In the above-described embodiments, the torque generating parts 30 and 2050 are provided with the speed reducers 33 and 2053, but the torque generating parts 30 and 2050 may not be provided with the speed reducers.

In the above-described embodiments, the drum-type tire testing device 2000 includes the gear box 2042, but the drum-type tire testing device may not include a gear box.

**Claims**

1. A tire testing method including:

   a first measurement step of measuring a first $\mu$-S characteristic of a test tire using a first tire testing device that rotatably holds a test wheel on which the test tire is mounted and causes the test tire to travel along a flat first road surface in a state where the test tire is made to contact the road surface;
   a second measurement step of measuring a second $\mu$-S characteristic of the test tire using a second tire testing device that causes the test tire to rotate in a state where the test tire is made to contact a second road surface provided on an outer periphery of a rotating drum;
   a comparing step of comparing the first $\mu$-S characteristic and the second $\mu$-S characteristic and obtaining a relationship between the two $\mu$-S characteristics;
   a characteristic converting step of converting the second $\mu$-S characteristic into a corrected $\mu$-S characteristic corresponding to the first $\mu$-S characteristic based on the relationship between the two $\mu$-S characteristics obtained in the comparing step; and
   a characteristic synthesizing step of synthesizing the first $\mu$-S characteristic measured in the first measurement step and the corrected $\mu$-S characteristic obtained in the characteristic converting step to obtain a synthesized $\mu$-S characteristic of the test tire.

2. The tire testing method according to claim 1, wherein:

   the comparing step is performed for a first range of a measurement speed within which the first $\mu$-S characteristic is measured,
   the characteristic converting step is performed, based on a comparison result in the comparing step, for a second range of the measurement speed within which the first $\mu$-S characteristic is not measured, and
   in the characteristic synthesizing step, the synthesized $\mu$-S characteristic obtained by synthesizing the first $\mu$-S characteristic measured for the first range and the corrected $\mu$-S characteristic obtained for the second range.

3. The tire testing method according to claim 1 or 2, wherein:

   each of the first tire testing device and the second tire testing device includes a torque generating part that generates torque to be applied to the test tire, and
   in each of the first measurement step and the second measurement step, measurement is performed at a plurality of measurement speeds, and when measuring the first and second $\mu$-S characteristics at each measurement speed, a slip ratio S is changed by applying torque to the test tire with the torque generating part.

4. The tire testing method according to any one of claims 1 to 3, wherein, in the characteristic converting step, the second $\mu$-S characteristic is converted into the corrected $\mu$-S characteristic by multiplying the second $\mu$-S characteristic by a conversion coefficient obtained in the comparing step.

5. The tire testing method according to any one of claims 1 to 3, wherein, in the characteristic converting step, the

second μ-S characteristic is converted into the corrected μ-S characteristic by multiplying the second μ-S characteristic by a conversion coefficient corresponding to the measurement speed which is obtained in the comparing step.

6. The tire testing method according to any one of claims 1 to 3, wherein, in the characteristic converting step, the second μ-S characteristic is converted into the μ-S characteristic of the test tire obtained from the first tire testing device by multiplying the second μ-S characteristic by a conversion coefficient corresponding to the measurement speed and the slip ratio which is obtained in the comparing step.

7. The tire testing method according to any one of claims 1 to 6, wherein, in the first measurement step and the second measurement step, the first or second μ-S characteristic is measured while applying a driving force to the test tire.

8. A tire testing method including a wear test performing step of performing a wear test on the test tire, wherein, after performing the wear test for a predetermined time period, the tire testing method according to any one of claims 1 to 7 is performed to obtain the μ-S characteristic of the test tire.

9. A tire testing device comprising:

    a first tire testing device including a carriage that rotatably holds a test wheel to which a test tire is mounted and is capable of traveling along a flat first road surface in a state where the test tire is made to contact the first road surface;
    a second tire testing device including a rotating drum having a second road surface provided on an outer periphery thereof, a tire holding part that rotatably holds the test tire in a state where the test tire is made to contact the road surface, and a drive part that rotates the rotating drum and the tire holding part; and
    a controller that compares a first μ-S characteristic of the test tire measured by the first tire testing device with a second μ-S characteristic of the test tire measured by the second tire testing device to obtain a relationship between the two μ-S characteristics, converts the second μ-S characteristic into a corrected μ-S characteristic corresponding to the first μ-S characteristic based on the relationship between the two μ-S characteristics, and synthesizes the first μ-S characteristic and the corrected μ-S characteristic to obtain a synthesized μ-S characteristic.

10. The tire testing device according to claim 9, wherein:

    each of the first tire testing device and the second tire testing device includes a torque generating part that generates torque to be applied to the test tire, and
    each of the first μ-S characteristic and the second μ-S characteristic is measured at a plurality of measurement speeds, and when measuring the first and second μ-S characteristics at each measurement speed, the slip ratio S is changed by applying torque to the test tire with the torque generating part.

11. The tire testing device according to claim 9 or 10, further comprising wear testing means configured to perform a wear test on the test tire, wherein, after the wear test is performed by the wear testing means, the μ-S characteristic of the test tire after the wear test is obtained.

12. The tire testing device according to claim 11, wherein:

    the wear testing means is realized by changing gears by a gear box provided in the second tire testing device, and after performing the wear test for a predetermined time period by changing gears by the gear box provided in the second tire testing device, the μ-S characteristic of the test tire is obtained by changing gears by the gear box.

13. A tire testing device comprising:

    a first input part to which a measurement result of a μ-S characteristic by a first tire testing device is to be input, the first tire testing device comprising a road surface part having a road surface, and a carriage that rotatably holds a test wheel to which a test tire is mounted and travelable along the road surface in a state where the test tire is made to contact the road surface;
    a second input part to which a measurement result of a μ-S characteristic by a second tire testing device is to be input, the second tire testing device comprising a rotating drum provided with a road surface on an outer periphery thereof, a tire holding part that rotatably holds a test tire in contact with the road surface, and a drive part that rotates the rotating drum and the tire holding part; and

a controller configured to compare the μ-S characteristic of the test tire measured by the first tire testing device input through the first input part with the μ-S characteristic of the test tire measured by the second tire testing device input through the second input part to obtain a relationship between the two μ-S characteristics, convert the μ-S characteristic of the test tire measured by the second tire testing device input through the second input part into the μ-S characteristic of the test tire by the first tire testing device based on the obtained relationship between the two μ-S characteristics, and combine the μ-S characteristic of the test tire measured by the first tire testing device input through the first input part and the μ-S characteristic of the test tire by the first tire testing device obtained by the conversion to obtain the μ-S characteristic of the test tire.

14. A tire testing method including:

a first reading step of reading a μ-S characteristic of a test tire measured by a first tire testing device that rotatably holds the test wheel to which the test tire is mounted and causes the test tire to travel along a road surface in a state where the test tire is made to contact the road surface;

a second reading step of reading the μ-S characteristic of the test tire measured by a second tire testing device that rotates the test tire in a state where the test tire is made to contact a road surface provided to an outer periphery of a rotating drum;

a comparing step of comparing the μ-S characteristic of the test tire measured by the first tire testing device read in the first reading step with the μ-S characteristic of the test tire measured by the second tire testing device read in the second reading step and obtaining a relationship between the two μ-S characteristics;

a characteristic converting step of converting the μ-S characteristic of the test tire measured by the second tire testing device read in the second reading step to the μ-S characteristic of the test tire by the first tire testing device based on the relationship between the two μ-S characteristics obtained in the comparing step; and

a characteristic synthesizing step of synthesizing the μ-S characteristic of the test tire measured by the first tire testing device read in the first reading step and the μ-S characteristic of the test tire by the first tire testing device obtained by the conversion in the characteristic converting step to obtain a synthesized μ-S characteristic of the test tire.

15. A program for causing a computer to execute:

a first reading step of reading a μ-S characteristic of a test tire measured by a first tire testing device that rotatably holds the test wheel to which the test tire is mounted and causes the test tire to travel along a road surface in a state where the test tire is made to contact the road surface;

a second reading step of reading the μ-S characteristic of the test tire measured by a second tire testing device that rotates the test tire in a state where the test tire is made to contact a road surface provided to an outer periphery of a rotating drum;

a comparing step of comparing the μ-S characteristic of the test tire measured by the first tire testing device read in the first reading step with the μ-S characteristic of the test tire measured by the second tire testing device read in the second reading step and obtaining a relationship between the two μ-S characteristics;

a characteristic converting step of converting the μ-S characteristic of the test tire measured by the second tire testing device read in the second reading step to the μ-S characteristic of the test tire by the first tire testing device based on the relationship between the two μ-S characteristics obtained in the comparing step; and

a characteristic synthesizing step of synthesizing the μ-S characteristic of the test tire measured by the first tire testing device read in the first reading step and the μ-S characteristic of the test tire by the first tire testing device obtained by the conversion in the characteristic converting step to obtain a synthesized μ-S characteristic of the test tire.

EP 4 414 681 A1

FIG. 1

FIG. 2

FIG. 3

EP 4 414 681 A1

FIG. 4

FIG. 5

EP 4 414 681 A1

FIG. 6

FIG. 7

FIG. 8

FIG. 9

DRIVE SYSTEM DS

ACTUATION SECTION AS

TRANSMISSION SECTION TS

FIRST TRANSMISSION SECTION TS1

DRIVE PARTS 14LA, 14LB → BELT MECHANISM 15L → SECOND DRIVEN PART 23

157

DRIVE PARTS 14RA, 14RB → BELT MECHANISM 15R

SECOND TRANSMISSION SECTION TS2

FIRST DRIVEN PART 22

BELT MECHANISM 24

TORQUE GENARATING PART 30

THIRD TRANSMISSION SECTION TS3 | BELT MECHANISM 25

W

20

FIG. 10

FIG. 11

FIG. 12

FIG. 13

FIG. 14

FIG. 15

FIG. 16

A-A

22

156(15R)

223
225
222
221

223a
224
222a

222b
223b
226
221a

241(24)
227
151R
(15R)

# FIG. 17

23
155B

231c
231b

155A
231

151L
155C

# FIG. 18

FIG. 19

EP 4 414 681 A1

FIG. 20

FIG. 21

EP 4 414 681 A1

C—C

FIG. 22

D-D

FIG. 23

E–E

443b

441

452
451s(451)   45
453

442

441a

# FIG. 24

FIG. 25

FIG. 26

FIG. 27

FIG. 28

EP 4 414 681 A1

EP 4 414 681 A1

FIG. 29

FIG. 30

EP 4 414 681 A1

FIG. 31

EP 4 414 681 A1

FIG. 32

FIG. 33

EP 4 414 681 A1

FIG. 34

1a

1072

1070

1000a

1000

1070

70

90

1c

92

72

2090

2000

2000a

2072

2070

FIG. 35

1000a

1090 — INTERFACE PART — 92

1080

54
54a

656c    651

656ca    651a

1070 — CONTROLLER    MEASURING PART

1072

166d

163

64b

64c

655a  471a  451a  431a  64c  32a  141a  141a  141a  141a

276

RE  RE  RE  RE    RE  RE  RE  RE  RE

276a  276b    276c 276d
RE

655m  471  451  431  64b  32  141  141  141  141
(14LA)  (14LB)  (14RA)  (14RB)

141    141    141    141

272

# FIG. 36

FIG. 37

FIG. 38

EP 4 414 681 A1

FIG. 39

EP 4 414 681 A1

EP 4 414 681 A1

FIG. 40

FIG. 41

FIG. 42

F−F

FIG. 43

FIG. 44

EP 4 414 681 A1

FIG. 45

START

1 → CTMW  — S1

SET $V_W$ TO VALUE CORRESPONDING TO CTMW — S2

MEASURE FIRST μ-S CHARACTERISTIC
USING FLAT-TYPE TIRE TESTING DEVICE — S3

MEASURE SECOND μ-S CHARACTERISTIC
USING DRUM-TYPE TIRE TESTING DEVICE — S4

COMPARE FIRST μ-S CHARACTERISTIC WITH
SECOND μ-S CHARACTERISTIC TO
DETERMINE RELATIONSHIP BETWEEN THE TWO — S5

S6
COMPARISON WITHIN
CHARACTERISTIC COMPARISON RANGE
COMPLETED?

NO → S7

CTMW + 1 → CTMW

YES

ESTIMATE RELATIONSHIP BETWEEN
FIRST μ-S CHARACTERISTIC AND
SECOND μ-S CHARACTERISTIC AT
MEASUREMENT SPEED $V_W$ OUTSIDE
CHARACTERISTIC COMPARISON RANGE
(DETERMINE CONVERSION COEFFICIENT) — S8

1

# FIG. 46

① 

$1 \rightarrow$ CTMS ～S9

SET $V_S$ TO VALUE CORRESPONDING TO CTMS ～S10

MEASURE SECOND μ-S CHARACTERISTIC
AT $V_S$ USING DRUM-TYPE TIRE TESTING DEVICE ～S11

CONVERT TO CORRECTED CHARACTERISTIC AT $V_S$ ～S12

S13

ACQUISITION WITHIN
CHARACTERISTIC ESTIMATION RANGE
COMPLETED?

NO → S14

CTMS + 1 → CTMS

YES

CONNECT MEASUREMENT RESULT OF
FIRST μ-S CHARACTERISTIC WITHIN
CHARACTERISTIC COMPARISON RANGE AND
ESTIMATION RESULT OF FIRST μ-S CHARACTERISTIC
WITHIN CHARACTERISTIC ESTIMATION RANGE
TO GENERATE SYNTHESIZED μ-S CHARACTERISTIC ～S15

END

# FIG. 47

<div align="center">

**INTERNATIONAL SEARCH REPORT**

</div>

| International application No. |
| --- |
| **PCT/JP2022/037743** |

**A. CLASSIFICATION OF SUBJECT MATTER**

***G01M 17/02***(2006.01)i; ***B60C 19/00***(2006.01)i
FI: G01M17/02; B60C19/00 H

According to International Patent Classification (IPC) or to both national classification and IPC

**B. FIELDS SEARCHED**

Minimum documentation searched (classification system followed by classification symbols)

G01M17/02; B60C19/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2018-119814 A (SUMITOMO RUBBER IND LTD) 02 August 2018 (2018-08-02) entire text, all drawings | 1-15 |
| A | JP 2012-2755 A (SUMITOMO RUBBER IND LTD) 05 January 2012 (2012-01-05) entire text, all drawings | 1-15 |
| A | JP 2014-181958 A (TOYO TIRE & RUBBER CO LTD) 29 September 2014 (2014-09-29) entire text, all drawings | 1-15 |
| A | JP 2007-132885 A (RAILWAY TECHNICAL RES INST) 31 May 2007 (2007-05-31) entire text, all drawings | 1-15 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **17 November 2022** | **20 December 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/037743**

| Patent document cited in search report | | | Publication date (day/month/year) | Patent family member(s) | Publication date (day/month/year) |
|---|---|---|---|---|---|
| JP | 2018-119814 | A | 02 August 2018 | (Family: none) | |
| JP | 2012-2755 | A | 05 January 2012 | (Family: none) | |
| JP | 2014-181958 | A | 29 September 2014 | (Family: none) | |
| JP | 2007-132885 | A | 31 May 2007 | (Family: none) | |

Form PCT/ISA/210 (patent family annex) (January 2015)

**REFERENCES CITED IN THE DESCRIPTION**

**Patent documents cited in the description**

- WO 2019026733 A
- WO 2019203359 A
- WO 2020241323 A